# EUROPEAN PATENT APPLICATION

(11) **EP 4 440 021 A1**
(43) Date of publication of application: **02.10.2024**
(21) Application number: 22914134.6
(22) Date of filing: 08.12.2022
(51) Int. Cl.: H04L 1/06, H04W 74/06, H04W 72/04

(54) **INFORMATION FEEDBACK METHOD AND RELATED DEVICE**

(30) Priority: 31.12.2021 CN 202111677172
(71) Applicant: Huawei Technologies Co., Ltd., Shenzhen, Guangdong 518129 (CN)
(72) Inventor: DU, Rui, Shenzhen, Guangdong 518129 (CN); WEN, Qing, Chengdu, Sichuan 611756 (CN); LIU, Chenchen, Shenzhen, Guangdong 518129 (CN); HAN, Xiao, Shenzhen, Guangdong 518129 (CN); LONG, Yan, Chengdu, Sichuan 611756 (CN); HE, Rong, Chengdu, Sichuan 611756 (CN)
(74) Representative: Goddar, Heinz J.
(86) International application number: PCT/CN2022/137577
(87) International publication number: WO 2023/124879

(57) **Abstract**

This application provides an information feedback method and a related apparatus. In the method, a first apparatus sends, to a second apparatus, a first frame that carries a first field used to perform channel estimation, and the first apparatus receives a first feedback frame from the second apparatus. The first feedback frame includes channel state information CSI, the CSI is CSI from the first apparatus to the second apparatus, the CSI is obtained by the second apparatus by performing channel estimation based on the received first field and a second field, and the second field is not the first field. It can be learned that, the second apparatus feeds back, to the first apparatus, the CSI obtained by performing channel estimation based on the received first field and the second field, instead of CSI obtained by performing channel estimation based on the received first field and a known first field. In this case, even if an eavesdropper eavesdrops information in a feedback stage, the CSI from the first apparatus to the second apparatus cannot be obtained, to ensure information security in the feedback stage.

## Description

This application claims priority to Chinese Patent Application No. 202111677172.9, filed with the China National Intellectual Property Administration on December 31, 2021 and entitled "INFORMATION FEEDBACK METHOD AND RELATED APPARATUS", which is incorporated herein by reference in its entirety.

### TECHNICAL FIELD

This application relates to the field of communication technologies, and in particular, to an information feedback method and a related apparatus.

### BACKGROUND

A wireless local area network sensing technology is inferring and sensing a surrounding environment by analyzing a wireless signal, for example, channel state information (channel state information, CSI), "modulated" by various obstacles. A sensing session in a wireless sensing technology includes several stages: a discovery stage, a negotiation stage, a measurement stage, a feedback stage, and a termination stage. The CSI information is mainly transmitted in the measurement stage and the feedback stage of the sensing session. To be specific, the CSI is obtained in the measurement stage, and the CSI is fed back in the feedback stage. If an unauthorized person obtains the CSI in the sensing session, the unauthorized person may analyze the surrounding environment based on the CSI information, and determine whether there is a person in a room, or the like. Therefore, to avoid monitoring by the unauthorized person, the measurement stage and the feedback stage of the sensing session need to be protected, to avoid privacy disclosure.

Currently, for the feedback stage of the sensing session, a feedback person feeds back a CSI feedback frame, and the CSI feedback frame is an unprotected action frame, and is easy to be detected by the unauthorized person to determine a sensing result. Therefore, protecting the feedback stage of the sensing session is still an urgent problem that needs to be studied currently.

### SUMMARY

Embodiments of this application provide an information feedback method and a related apparatus, to ensure security of feedback information in a feedback stage.

According to a first aspect, an embodiment of this application provides an information feedback method. In the method, a first apparatus sends, to a second apparatus, a first frame that carries a first field used to perform channel estimation, and the first apparatus receives a first feedback frame from the second apparatus. The first feedback frame includes channel state information CSI, the CSI is CSI from the first apparatus to the second apparatus, the CSI is obtained by the second apparatus by performing channel estimation based on the received first field and a second field, and the second field is not the first field.

It can be learned that, the second apparatus feeds back, to the first apparatus, the CSI obtained by performing channel estimation based on the received first field and the second field, instead of CSI obtained by performing channel estimation based on the received first field and a known first field. In this case, even if an eavesdropper eavesdrops information in a feedback stage, the CSI from the first apparatus to the second apparatus cannot be obtained, to ensure information security in the feedback stage.

In an optional implementation, when the first apparatus and the second apparatus perform measurement and sensing on a low frequency band, the first field is a secure long training LTF field.

In another optional implementation, when the first apparatus and the second apparatus perform measurement and sensing on a high frequency band, the first field is a secure training TRN field.

In an optional implementation, before the first apparatus sends, to the second apparatus, the first frame that carries the first field used to perform channel estimation, the first apparatus may further send a request frame to the second apparatus. The request frame is used to request to perform channel estimation based on a field different from the secure LTF field or the secure TRN field. Therefore, the first apparatus may further receive a response frame from the second apparatus. The response frame is used to respond to the request frame.

It can be learned that, before performing measurement and sensing, the first apparatus and the second apparatus may further determine, through negotiation by using the request frame and the response frame, that the second apparatus performs channel estimation based on the field different from the secure LTF or the secure TRN field, so that the second apparatus feeds back CSI obtained by performing channel estimation based on the field different from the secure LTF or the secure TRN field, to ensure information security in the feedback stage.

In an optional implementation, the request frame is further used to request not to exchange a security parameter of the first field, and the response frame is further used to respond to the request frame. In this case, the second field is a preset LTF field or a preset TRN field.

It can be learned that, the first apparatus and the second apparatus may determine, through negotiation, not to exchange the security parameter of the first field, so that the CSI fed back by the second apparatus is CSI obtained by performing channel estimation based on the received first field and the preset LTF field or the preset TRN field, to ensure information security in the feedback stage. In addition, in a manner in which the first apparatus and the second apparatus do not exchange the security parameter of the first field, resources may be further reduced, and complexity is reduced.

In another optional implementation, when the second apparatus is a station STA that has a capability of generating the first field or an access point AP, the request frame further includes a security parameter of the second field, the security parameter of the second field is used to generate the second field, and the response frame is further used to respond to the request frame.

It can be learned that, when the second apparatus is a STA that has a capability of generating the secure LTF or the secure TRN field or an AP, the first apparatus may send the security parameter of the second field to the second apparatus by using the request frame, and the second apparatus may respond to the request frame by using the response frame. Therefore, the second apparatus feeds back CSI obtained by performing channel estimation based on the received first field and the second field generated based on the security parameter of the second field, and information security in the feedback stage may also be ensured.

In still another optional implementation, the request frame is further used to request the second apparatus that does not have a capability of generating the first field to perform channel estimation based on a field different from the secure LTF field or the secure TRN field; and the response frame is further used to respond to the request frame.

It can be learned that, the first apparatus and the second apparatus may further determine, through negotiation by using the request frame and the response frame, that the second apparatus that does not have a capability of generating the first field is allowed to perform channel estimation based on the field different from the secure LTF field or the secure TRN field. Therefore, the second apparatus that does not have a capability of generating the first field may also feed back, to the first apparatus, CSI obtained by performing channel estimation based on the received first field and a preset LTF field or a preset TRN field. In other words, the second apparatus that does not have a capability of generating the first field may also participate in a measurement process and a sensing process of the first apparatus, to improve a system compatibility capability, and provide more resources for measurement and sensing.

In an optional implementation, the security parameter of the second field is one of security parameters of the first field that are sent historically by the first apparatus, so that the second apparatus feeds back, to the first apparatus, CSI obtained by performing channel estimation based on the received first field and the second field generated based on a historical security parameter of the first field, instead of CSI obtained by performing channel estimation based on the received first field and a field generated based on a current security parameter of the first field, to ensure security of feedback information in the feedback stage.

Optionally, the security parameter of the second field is a parameter that is not once-sent by the first apparatus to the second apparatus, and is different from the security parameter of the first field. In this case, the CSI fed back by the second apparatus is not CSI obtained by performing channel estimation based on the received first field and the first field generated based on the security parameter of the first field, to ensure security in the feedback stage.

In an optional implementation, when the first apparatus sends the security parameter of the second field to the second apparatus, the first apparatus may further receive a second frame that carries a second field and that is from the second apparatus, and perform channel estimation based on the received second field and the second field generated based on the security parameter of the second field, to obtain second CSI. In other words, the first apparatus may further obtain CSI from the second apparatus to the first apparatus. Therefore, the first apparatus may further perform sensing based on the CSI from the second apparatus to the first apparatus.

In an optional implementation, the first apparatus may further parse the CSI based on the second field and the first field, to obtain the first CSI. In other words, the first apparatus may further parse the CSI fed back by the second apparatus, to obtain the CSI from the first apparatus to the second apparatus. Therefore, the first apparatus performs sensing based on the CSI from the first apparatus to the second apparatus.

According to a second aspect, this application further provides an information feedback method. In the method, a first apparatus sends, to a second apparatus, a first frame that carries a first field used to perform channel estimation. The first apparatus receives a first feedback frame from the second apparatus, and receives a second feedback frame from the second apparatus. The first feedback frame includes channel state information CSI, CSI is CSI from the first apparatus to the second apparatus, the CSI is obtained by the second apparatus by performing channel estimation based on the received first field and a second field, and the second field is not the first field. The second feedback frame includes encrypted third CSI, and third CSI is CSI from a third apparatus to the second apparatus.

It can be learned that, in this embodiment of this application, the second apparatus feeds back, to the first apparatus, the CSI from the first apparatus to the second apparatus and the CSI from the third apparatus to the second apparatus. Therefore, the first apparatus performs more precise sensing based on a plurality of pieces of CSI. In addition, the first feedback frame fed back by the second apparatus is the CSI obtained by the second apparatus by performing channel estimation based on the received first field and the second field, so that security of the feedback stage information can be ensured. When the second apparatus feeds back the CSI from the third apparatus to the second apparatus, the second apparatus feeds back the encrypted CSI, so that an eavesdropper cannot eavesdrop the CSI from the third apparatus to the second apparatus, to ensure information security in the feedback stage.

In an optional implementation, the encrypted third CSI is obtained by the second apparatus by encrypting the third CSI based on the second field generated based on a security parameter of the second field. The security parameter of the second field is sent by the first apparatus to the second apparatus. Therefore, the first apparatus may parse the second feedback frame based on the second field generated based on the security parameter of the second field, to obtain the CSI from the third apparatus to the second apparatus.

In an optional implementation, before the first apparatus sends, to the second apparatus, the first frame that carries the first field used to perform channel estimation, the first apparatus may further send a request frame to the second apparatus. The request frame is used to request the second apparatus to measure the third channel state information CSI from the third apparatus to the second apparatus, and encrypt the third CSI and feed back the encrypted third CSI to the first apparatus to the first apparatus. Therefore, the first apparatus may further receive a response frame from the second apparatus. The response frame is used to respond to the request frame.

It can be learned that, before the first apparatus and the second apparatus perform measurement and sensing, the second apparatus may further negotiate about the third channel state information CSI from the third apparatus to the second apparatus by using the request frame and the response frame, and encrypt the third CSI and feed back the encrypted third CSI to the first apparatus to the first apparatus, so that the first apparatus obtains the CSI from the third apparatus to the third apparatus.

In an optional implementation, the first apparatus may further receive a second frame that carries a second field. The first apparatus performs channel estimation based on the second field, to obtain second CSI. The first apparatus receives a third feedback frame from the second apparatus. The third feedback frame includes CSI obtained by the third apparatus by performing channel estimation on a channel between the second apparatus and the third apparatus based on the received second field and a preset long training LTF field or a preset training TRN field. The first apparatus parses the CSI in the third feedback frame based on the second field and the preset LTF field or the preset TRN field, to obtain fourth CSI.

It can be learned that, the first apparatus may further perform channel estimation based on the received second field, to obtain CSI from the second apparatus to the first apparatus. In addition, the first apparatus may further receive the CSI that is obtained by the third apparatus by performing channel estimation based on the received second field and the preset LTF field or the preset TRN field and that is fed back by the second apparatus. Therefore, the first apparatus further obtains the CSI from the second apparatus to the first apparatus and the CSI from the second apparatus to the third apparatus, so that the first apparatus performs more precise sensing.

In another optional implementation, the first apparatus may further receive a second frame that carries a second field. The first apparatus performs channel estimation based on the received second field and the second field, to obtain second CSI. The first apparatus receives a third feedback frame from the second apparatus. The third feedback frame includes encrypted fourth CSI, the encrypted fourth CSI is obtained by the second apparatus by encrypting fourth CSI based on the security parameter of the second field, the fourth CSI is obtained by the second apparatus by parsing a fourth feedback frame fed back by the third apparatus, and the fourth feedback frame includes CSI information obtained by the third apparatus by performing channel estimation based on the received second field and a field generated based on a parameter different from the security parameter of the second field. The first apparatus parses the third feedback frame based on the security parameter of the second field, to obtain the fourth CSI.

It can be learned that, the first apparatus may further obtain the CSI from the first apparatus to the second apparatus based on the received second field. The first apparatus may further receive encrypted CSI from the second apparatus to the third apparatus. Therefore, the first apparatus implements more precise sensing based on CSI of a plurality of channels.

According to a third aspect, this application further provides an information feedback method. The information feedback method in this aspect corresponds to the information feedback method in the first aspect, and the information feedback method in this aspect is described from a second apparatus side. In the method, a second apparatus receives a first frame that carries a first field used to perform channel estimation. The second apparatus sends a first feedback frame to a first apparatus. The first feedback frame includes channel state information CSI, the CSI is CSI from the first apparatus to the second apparatus, the CSI is obtained by the second apparatus by performing channel estimation based on the received first field and a second field, and the second field is not the first field.

It can be learned that, after the second apparatus receives the first field used to perform channel estimation, CSI fed back by the second apparatus to the first apparatus is the CSI obtained by performing channel estimation based on the received first field and the second field different from the first field, instead of CSI obtained by performing channel estimation based on the received first field and a known first field. Even if the CSI is eavesdropped by an eavesdropper, the eavesdropper cannot obtain the CSI from the first apparatus to the second apparatus. Further, in such a feedback manner, information security in a feedback stage can be ensured.

In an optional implementation, when the first apparatus and the second apparatus perform measurement and sensing on a low frequency band, the first field is a secure long training LTF field.

In another optional implementation, when the first apparatus and the second apparatus perform measurement and sensing on a high frequency band, the first field is a secure training TRN field.

In an optional implementation, before the second apparatus receives the first frame that carries the first field used to perform channel estimation, the second apparatus may further receive a request frame from the first apparatus. The request frame is used to request to perform channel estimation based on a field different from the secure LTF field or the secure TRN field. Therefore, the second apparatus may further send a response frame to the first apparatus. The response frame is used to respond to the request frame.

It can be learned that, before performing measurement and sensing, the first apparatus and the second apparatus may further determine, through negotiation by using the request frame and the response frame, that the second apparatus performs channel estimation based on the field different from the secure LTF or the secure TRN field, so that the second apparatus feeds back CSI obtained by performing channel estimation based on the received first field and the field different from the secure LTF or the secure TRN field, to ensure information security in the feedback stage.

In an optional implementation, the request frame is further used to request not to exchange a security parameter of the first field, and the response frame is further used to respond to the request frame.

It can be learned that, the first apparatus and the second apparatus may determine, through negotiation, not to exchange the security parameter of the first field, so that the CSI fed back by the second apparatus is not the CSI obtained by performing channel estimation based on the received first field and the known first field, to ensure information security in the feedback stage. In addition, in a manner in which the first apparatus and the second apparatus do not exchange the security parameter of the first field, resources may be further reduced, and complexity is reduced.

In another optional implementation, when the second apparatus is a station STA that has a capability of generating the first field or an access point AP, the request frame further includes a security parameter of the second field, the security parameter of the second field is used to generate the second field, and the response frame is also used to respond to the request frame.

It can be learned that, when the second apparatus is a STA that has a capability of generating the secure LTF or the secure TRN field or an AP, the first apparatus may send the security parameter of the second field to the second apparatus by using the request frame, and the second apparatus determines, by using the response frame, to perform estimation based on the second field generated based on the security parameter of the second field. Therefore, the second apparatus feeds back CSI obtained by performing channel estimation based on the received first field and the second field generated based on the security parameter of the second field, and information security in the feedback stage may also be ensured.

In still another optional implementation, the request frame is further used to request the second apparatus that does not have a capability of generating the first field to perform channel estimation based on a field different from the secure LTF field or the secure TRN field; and the response frame is further used to respond to the request frame.

It can be learned that, the first apparatus and the second apparatus may further determine, through negotiation by using the request frame and the response frame, that the second apparatus that does not have a capability of generating the first field is allowed to perform channel estimation based on the field different from the secure LTF field or the secure TRN field. Therefore, the second apparatus that does not have a capability of generating the first field may also feed back, to the first apparatus, CSI obtained by performing channel estimation based on the received first field and a preset LTF field or a preset TRN field. In other words, the second apparatus that does not have a capability of generating the first field may also participate in a measurement process and a sensing process of the first apparatus, to improve a system compatibility capability, and provide more resources for measurement and sensing.

In an optional implementation, the security parameter of the second field is one of security parameters of the first field that are sent historically by the first apparatus, so that the second apparatus feeds back, to the first apparatus, CSI obtained by performing estimation based on the received first field and the second field generated based on a historical security parameter of the second field, instead of CSI obtained by performing channel estimation based on the received first field and a field generated based on a current security parameter of the first field, to ensure security in the feedback stage.

Optionally, the security parameter of the second field is a parameter that is not sent by the first apparatus to the second apparatus, and is different from the security parameter of the first field. In this case, the CSI fed back by the second apparatus is not CSI obtained by performing channel estimation based on the received first field and a first field generated based on a current security parameter of the first field, to ensure security in the feedback stage.

In an optional implementation, when the first apparatus sends the security parameter of the second field to the second apparatus, the second apparatus may further send, to the first apparatus, a second frame that carries a second field, so that the first apparatus performs channel estimation based on the received second field, to obtain CSI from the second apparatus to the first apparatus, so that the first apparatus implements more precise sensing.

According to a fourth aspect, this application further provides an information feedback method. The information feedback method in this aspect corresponds to the information feedback method in the second aspect, and the information feedback method in this aspect is described from a second apparatus side. In the method, a second apparatus receives a first frame that carries a first field used to perform channel estimation. The second apparatus sends a first feedback frame to a first apparatus, and sends a second feedback frame to the first apparatus. The first feedback frame includes channel state information CSI, the CSI is CSI from the first apparatus to the second apparatus, the CSI is obtained by the second apparatus by performing channel estimation based on the received first field and a second field, and the second field is not the first field. The second feedback frame includes encrypted third CSI, and third CSI is CSI from a third apparatus to the second apparatus.

It can be learned that, after receiving the first field that is from the first apparatus and that is used to perform channel estimation, the second apparatus feeds back, to the first apparatus, CSI obtained by performing channel estimation based on the received first field and the second field, and feeds back the CSI obtained after the CSI from the third apparatus to the second apparatus is encrypted. Therefore, the first apparatus may obtain the CSI from the first apparatus to the second apparatus and the CSI from the third apparatus to the second apparatus, so that the first apparatus implements precise sensing. In addition, the CSI that is from the first apparatus to the second apparatus and that is fed back by the first apparatus is the CSI obtained by performing channel estimation based on the received first field and the second field, to ensure security of feedback information; and the CSI that is from the third apparatus to the second apparatus and that is fed back by the first apparatus is the encrypted CSI, to also ensure the security of the feedback information.

In an optional implementation, the first apparatus sends a security parameter of the second field to the second apparatus, so that the encrypted third CSI is obtained by the second apparatus by encrypting the third CSI based on the second field generated based on the security parameter of the second field, to help the first apparatus parse the encrypted third CSI based on a sequence generated based on the security parameter of the second field, and obtain the CSI from the third apparatus to the first apparatus, namely, the third CSI.

In an optional implementation, before the second apparatus receives the first frame that carries the first field used to perform channel estimation, the second apparatus may further receive a request frame from the first apparatus. The request frame is used to request the second apparatus to measure the third channel state information CSI from the third apparatus to the second apparatus, and encrypt the third CSI and feed back the encrypted third CSI to the first apparatus to the first apparatus. Therefore, the second apparatus sends a response frame to the first apparatus. The response frame is used to respond to the request frame.

It can be learned that, before the first apparatus and the second apparatus perform measurement and sensing, the second apparatus may further negotiate about the third channel state information CSI from the third apparatus to the second apparatus by using the request frame and the response frame, and encrypt the third CSI and feed back the encrypted third CSI to the first apparatus to the first apparatus, so that the first apparatus obtains the CSI from the third apparatus to the first apparatus.

In an optional implementation, the second apparatus may further send, to the first apparatus and the third apparatus, a second frame that carries a second field. The second apparatus receives a third feedback frame from the third apparatus. The second apparatus sends the third feedback frame to the first apparatus. The third feedback frame includes CSI obtained by the third apparatus by performing channel estimation on a channel between the second apparatus and the third apparatus based on the received second field and a preset long training LTF field or a preset training TRN field.

It can be learned that, the second apparatus may send, to the first apparatus, the second frame that carries the second field, so that the first apparatus performs channel estimation based on the received second field, to obtain CSI from the second apparatus to the first apparatus. The second apparatus may further send, to the third apparatus, the second frame that carries the second field. The third apparatus feeds back, to the second apparatus, the CSI obtained by performing channel estimation based on the received second field and the preset long training LTF field or the preset training TRN field, so that the second apparatus feeds back the CSI to the first apparatus, and the first apparatus parses the CSI based on the second field and the preset long training LTF field or the preset training TRN field, to obtain the CSI from the second apparatus to the third apparatus.

In another optional implementation, the second apparatus may further send, to the first apparatus and the third apparatus, a second frame that carries a second field. The second apparatus receives a fourth feedback frame from the third apparatus. The fourth feedback frame includes CSI information obtained by the third apparatus by performing channel estimation based on the received second field and a field generated based on a parameter different from a security parameter of the second field. The second apparatus parses the fourth feedback frame based on the sent second field and the field generated based on the parameter different from the security parameter of the second field, to obtain fourth CSI. The second apparatus encrypts the fourth CSI based on the security parameter of the second field, to obtain a third feedback frame. The second apparatus sends the third feedback frame to the first apparatus.

It can be learned that, the second apparatus may further send, to the first apparatus, the second frame that carries the second field, so that the first apparatus performs channel estimation based on the second field, to obtain CSI from the second apparatus to the first apparatus. The second apparatus sends, to the third apparatus, the second frame that carries the second field, so that the second apparatus may obtain CSI from the second apparatus to the third apparatus, and feed back the CSI from the second apparatus to the third apparatus to the first apparatus after encrypting the CSI, and the first apparatus obtains the CSI from the second apparatus to the third apparatus. Therefore, the first apparatus performs more precise sensing based on a plurality of pieces of CSI.

According to a fifth aspect, this application further provides a communication apparatus. The communication apparatus has some or all functions of the first apparatus in the first aspect, or has some or all functions of the first apparatus in the second aspect, or has some or all functions of the second apparatus in the third aspect, or has some or all functions of the second apparatus in the fourth aspect. For example, a function of the communication apparatus may be a function in some or all embodiments of the first apparatus in the first aspect of this application, or may be a function of independently implementing any embodiment of this application. The function may be implemented by hardware, or may be implemented by hardware executing corresponding software. The hardware or software includes one or more units or modules corresponding to the function.

In a possible design, a structure of the communication apparatus may include a processing unit and a communication unit, and the processing unit is configured to support the communication apparatus to execute a corresponding function in the foregoing methods. The communication unit is configured to support communication between the communication apparatus and another communication apparatus. The communication apparatus may further include a storage unit, and the storage unit is configured to: be coupled to the processing unit and a transceiver unit, and store program instructions and data that are necessary for the communication apparatus.

In an implementation, the communication apparatus includes a processing unit and a communication unit, and the processing unit is configured to control the communication unit to send or receive data/signaling.

The communication unit is configured to send, to a second apparatus, a first frame that carries a first field used to perform channel estimation.

The communication unit is further configured to receive a first feedback frame from the second apparatus.

The first feedback frame includes channel state information CSI, the CSI is CSI from the first apparatus to the second apparatus, the CSI is obtained by the second apparatus by performing channel estimation based on the received first field and a second field, and the second field is not the first field.

In addition, for another optional implementation of the communication apparatus in this aspect, refer to related content of the first aspect. Details are not described herein again.

In another implementation, the communication apparatus includes a processing unit and a communication unit, and the processing unit is configured to control the communication unit to send or receive data/signaling.

The communication unit is configured to send, to a second apparatus, a first frame that carries a first field used to perform channel estimation.

The communication unit is further configured to: receive a first feedback frame from the second apparatus, and receive a second feedback frame from the second apparatus. The first feedback frame includes channel state information CSI, the CSI is CSI from the first apparatus to the second apparatus, the CSI is obtained by the second apparatus by performing channel estimation based on the received first field and a second field, and the second field is not the first field. The second feedback frame includes encrypted third CSI, and third CSI is CSI from a third apparatus to the second apparatus.

In addition, for another optional implementation of the communication apparatus in this aspect, refer to related content of the second aspect. Details are not described herein again.

In still another implementation, the communication apparatus includes a processing unit and a communication unit, and the processing unit is configured to control the communication unit to send or receive data/signaling.

The communication unit is configured to receive a first frame that carries a first field used to perform channel estimation.

The communication unit is further configured to send a first feedback frame to a first apparatus.

The first feedback frame includes channel state information CSI, the CSI is CSI from the first apparatus to the second apparatus, the CSI is obtained by the second apparatus by performing channel estimation based on the received first field and a second field, and the second field is not the first field.

In addition, for another optional implementation of the communication apparatus in this aspect, refer to related content of the third aspect. Details are not described herein again.

In still another implementation, the communication apparatus includes a processing unit and a communication unit, and the processing unit is configured to control the communication unit to send or receive data/signaling.

The communication unit is configured to receive a first frame that carries a first field used to perform channel estimation.

The communication unit is further configured to: send a first feedback frame to a first apparatus, and send a second feedback frame to the first apparatus.

The first feedback frame includes channel state information CSI, the CSI is CSI from the first apparatus to the second apparatus, the CSI is obtained by the second apparatus by performing channel estimation based on the received first field and a second field, and the second field is not the first field. The second feedback frame includes encrypted third CSI, and third CSI is CSI from a third apparatus to the second apparatus.

In addition, for another optional implementation of the communication apparatus in this aspect, refer to related content of the fourth aspect. Details are not described herein again.

In an example, the transceiver unit may be a transceiver or a communication interface, the storage unit may be a memory, and the processing unit may be a processor.

In an implementation, the communication apparatus includes a processor and a transceiver, and the processor is configured to control the transceiver to send or receive data/signaling.

The transceiver is configured to send, to a second apparatus, a first frame that carries a first field used to perform channel estimation.

The transceiver is further configured to receive a first feedback frame from the second apparatus.

The first feedback frame includes channel state information CSI, the CSI is CSI from the first apparatus to the second apparatus, the CSI is obtained by the second apparatus by performing channel estimation based on the received first field and a second field, and the second field is not the first field.

In addition, for another optional implementation of an uplink communication apparatus in this aspect, refer to related content of the first aspect. Details are not described herein again.

In another implementation, the communication apparatus includes a processor and a transceiver, and the processor is configured to control the transceiver to send or receive data/signaling.

The transceiver is configured to send, to a second apparatus, a first frame that carries a first field used to perform channel estimation.

The transceiver is further configured to: receive a first feedback frame from the second apparatus, and receive a second feedback frame from the second apparatus.

The first feedback frame includes channel state information CSI, the CSI is CSI from the first apparatus to the second apparatus, the CSI is obtained by the second apparatus by performing channel estimation based on the received first field and a second field, and the second field is not the first field. The second feedback frame includes encrypted third CSI, and third CSI is CSI from a third apparatus to the second apparatus.

In addition, for another optional implementation of the communication apparatus in this aspect, refer to related content of the second aspect. Details are not described herein again.

In still another implementation, the communication apparatus includes a processor and a transceiver, and the processor is configured to control the transceiver to send or receive data/signaling.

The transceiver is configured to receive a first frame that carries a first field used to perform channel estimation.

The transceiver is further configured to send a first feedback frame to a first apparatus.

The first feedback frame includes channel state information CSI, the CSI is CSI from the first apparatus to the second apparatus, the CSI is obtained by the second apparatus by performing channel estimation based on the received first field and a second field, and the second field is not the first field.

In addition, for another optional implementation of the communication apparatus in this aspect, refer to related content of the third aspect. Details are not described herein again.

In still another implementation, the communication apparatus includes a processor and a transceiver, and the processor is configured to control the transceiver to send or receive data/signaling.

The transceiver is configured to receive a first frame that carries a first field used to perform channel estimation.

The transceiver is further configured to: send a first feedback frame to a first apparatus, and send a second feedback frame to the first apparatus.

The first feedback frame includes channel state information CSI, the CSI is CSI from the first apparatus to the second apparatus, the CSI is obtained by the second apparatus by performing channel estimation based on the received first field and a second field, and the second field is not the first field. The second feedback frame includes encrypted third CSI, and third CSI is CSI from a third apparatus to the second apparatus.

In addition, for another optional implementation of the communication apparatus in this aspect, refer to related content of the fourth aspect. Details are not described herein again.

In another implementation, the communication apparatus is a chip or a chip system. A processing unit may also be embodied as a processing circuit or a logic circuit. A transceiver unit may be an input/output interface, an interface circuit, an output circuit, an input circuit, a pin, a related circuit, or the like on the chip or chip system.

In an implementation process, the processor may be configured to perform, by way of example but not limitation, baseband related processing, and the transceiver may be configured to perform, by way of example but not limitation, radio frequency receiving/sending. The foregoing components may be separately disposed on chips independent of each other, or may be at least partially or completely disposed on a same chip. For example, the processor may be further divided into an analog baseband processor and a digital baseband processor. The analog baseband processor and the transceiver may be integrated on a same chip, and the digital baseband processor may be disposed on an independent chip. With continuous development of an integrated circuit technology, more components may be integrated on a same chip. For example, the digital baseband processor and a plurality of application processors (by way of example but not limitation, a graphics processing unit, a multimedia processor, and the like) may be integrated on a same chip. Such a chip may be referred to as a system on a chip (system on a chip, SoC). Whether all components are independently disposed on different chips or are integrated onto one or more chips depends on a product design requirement. An implementation form of the component is not limited in this embodiment of this application.

According to a sixth aspect, this application further provides a processor, configured to perform the foregoing methods. In a process of performing these methods, a process of sending the foregoing information and a process of receiving the foregoing information in the foregoing methods may be understood as a process of outputting the foregoing information by the processor and a process of receiving the foregoing input information by the processor. When outputting the foregoing information, the processor outputs the foregoing information to a transceiver, so that the transceiver transmits the foregoing information. After the foregoing information is output by the processor, other processing may further need to be performed on the foregoing information before the foregoing information arrives at the transceiver. Similarly, when the processor receives the foregoing input information, the transceiver receives the foregoing information, and inputs the foregoing information into the processor. Further, after the transceiver receives the foregoing information, the foregoing information may be input into the processor only after other processing is performed on the foregoing information.

Based on the foregoing principle, for example, sending the first frame that carries the first field used to perform channel estimation in the foregoing methods may be understood as that the processor outputs the first frame that carries the first field used to perform channel estimation.

Unless otherwise specified, or if operations such as transmitting, sending, and receiving related to the processor do not contradict an actual function or internal logic of the operations in related descriptions, all the operations may be more generally understood as operations such as outputting, receiving, and inputting of the processor, instead of operations such as transmitting, sending, and receiving directly performed by a radio frequency circuit and an antenna.

In an implementation process, the processor may be a processor specially configured to perform these methods, or a processor, for example, a general-purpose processor, that executes computer instructions in a memory to perform these methods. The memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this embodiment of this application.

According to a seventh aspect, this application further provides a communication system. The system includes at least one first apparatus and at least one second apparatus in the foregoing aspects. In another possible design, the system may further include another device that interacts with the first apparatus and the second apparatus in the solutions provided in this application.

According to an eighth aspect, this application provides a computer-readable storage medium, configured to store instructions, and when the instructions are executed by a communication apparatus, the method according to any one of the first aspect, the second aspect, the third aspect, and the fourth aspect is implemented.

According to a ninth aspect, this application further provides a computer program product including instructions. When the computer program product is run on a communication apparatus, the communication apparatus performs the method according to any one of the first aspect, the second aspect, the third aspect, and the fourth aspect.

According to a tenth aspect, this application provides a chip system. The chip system includes a processor and an interface, the interface is configured to obtain a program or instructions, and the processor is configured to invoke the program or the instructions to implement or support the first apparatus to implement a function in the first aspect, or is configured to invoke the program or the instructions to implement or support the first apparatus to implement a function in the second aspect, or is configured to invoke the program or the instructions to implement or support the second apparatus to implement a function in the third aspect, or is configured to invoke the program or the instructions to implement or support the second apparatus to implement a function in the fourth aspect. For example, at least one of data and information involved in the foregoing methods is determined or processed. In a possible design, the chip system further includes a memory. The memory is configured to store program instructions and data that are necessary for a terminal. The chip system may include a chip, or may include a chip and another discrete component.

### BRIEF DESCRIPTION OF DRAWINGS

FIG. 1 is a diagram of a structure of a communication system according to an embodiment of this application;
FIG. 2 is a diagram of a wireless sensing scenario according to an embodiment of this application;
FIG. 3 is a diagram of a frame structure of an NDP frame that carries a secure LTF field according to an embodiment of this application;
FIG. 4(a) is a schematic flowchart of a TB ranging mode according to an embodiment of this application;
FIG. 4(b) is a schematic flowchart of another TB ranging mode according to an embodiment of this application;
FIG. 5(a) is a schematic flowchart of an NTB ranging mode according to an embodiment of this application;
FIG. 5(b) is a schematic flowchart of another NTB ranging mode according to an embodiment of this application;
FIG. 6 is a diagram of interaction of an information feedback method according to an embodiment of this application;
FIG. 7(a) is a diagram of a structure of a request frame according to an embodiment of this application;
FIG. 7(b) is a diagram of a structure of a response frame according to an embodiment of this application;
FIG. 8(a) is a diagram of a structure of another request frame according to an embodiment of this application;
FIG. 8(b) is a diagram of a structure of another response frame according to an embodiment of this application;
FIG. 9(a) is a schematic flowchart of interaction between an AP and a STA according to an embodiment of this application;
FIG. 9(b) is another schematic flowchart of interaction between an AP and a STA according to an embodiment of this application;
FIG. 9(c) is still another schematic flowchart of interaction between an AP and a STA according to an embodiment of this application;
FIG. 9(d) is still another schematic flowchart of interaction between an AP and a STA according to an embodiment of this application;
FIG. 9(e) is still another schematic flowchart of interaction between an AP and a STA according to an embodiment of this application;
FIG. 9(f) is still another schematic flowchart of interaction between an AP and a STA according to an embodiment of this application;
FIG. 9(g) is still another schematic flowchart of interaction between an AP and a STA according to an embodiment of this application;
FIG. 9(h) is still another schematic flowchart of interaction between an AP and a STA according to an embodiment of this application;
FIG. 10 is a diagram of interaction of another information feedback method according to an embodiment of this application;
FIG. 11(a) is still another schematic flowchart of interaction between an AP and a STA according to an embodiment of this application;
FIG. 11(b) is still another schematic flowchart of interaction between an AP and a STA according to an embodiment of this application;
FIG. 11(c) is still another schematic flowchart of interaction between an AP and a STA according to an embodiment of this application;
FIG. 11(d) is still another schematic flowchart of interaction between an AP and a STA according to an embodiment of this application;
FIG. 11(e) is still another schematic flowchart of interaction between an AP and a STA according to an embodiment of this application;
FIG. 12(a) is still another schematic flowchart of interaction between an AP and a STA according to an embodiment of this application;
FIG. 12(b) is still another schematic flowchart of interaction between an AP and a STA according to an embodiment of this application;
FIG. 13(a) is a diagram of a structure of a CSI feedback frame according to an embodiment of this application;
FIG. 13(b) is a diagram of a structure of another CSI feedback frame according to an embodiment of this application;
FIG. 13(c) is a diagram of a structure of a secure LTF feedback frame according to an embodiment of this application;
FIG. 14(a) is a diagram of a structure of a trigger frame according to an embodiment of this application;
FIG. 14(b) is a diagram of a structure of an NDPA frame according to an embodiment of this application;
FIG. 15 is a diagram of a structure of a feedback trigger frame according to an embodiment of this application;
FIG. 16 is still another schematic flowchart of interaction between an AP and a STA according to an embodiment of this application;
FIG. 17(a) is a diagram of a structure of still another CSI feedback frame according to an embodiment of this application;
FIG. 17(b) is a diagram of a structure of still another feedback frame according to an embodiment of this application;
FIG. 17(c) is a diagram of a structure of still another feedback frame according to an embodiment of this application;
FIG. 17(d) is a diagram of a structure of still another feedback frame according to an embodiment of this application;
FIG. 18(a) is still another schematic flowchart of interaction between an AP and a STA according to an embodiment of this application;
FIG. 18(b) is still another schematic flowchart of interaction between an AP and a STA according to an embodiment of this application;
FIG. 18(c) is still another schematic flowchart of interaction between an AP and a STA according to an embodiment of this application;
FIG. 18(d) is still another schematic flowchart of interaction between an AP and a STA according to an embodiment of this application;
FIG. 18(e) is still another schematic flowchart of interaction between an AP and a STA according to an embodiment of this application;
FIG. 19 is a diagram of a structure of a communication apparatus according to an embodiment of this application; and
FIG. 20 is a diagram of a structure of another communication apparatus according to an embodiment of this application.

### DESCRIPTION OF EMBODIMENTS

The following clearly and completely describes technical solutions in embodiments of this application with reference to the accompanying drawings in embodiments of this application.

First, a communication system to which embodiments of this application are applicable is described, to better understand an information feedback method disclosed in embodiments of this application.

### I. Communication system

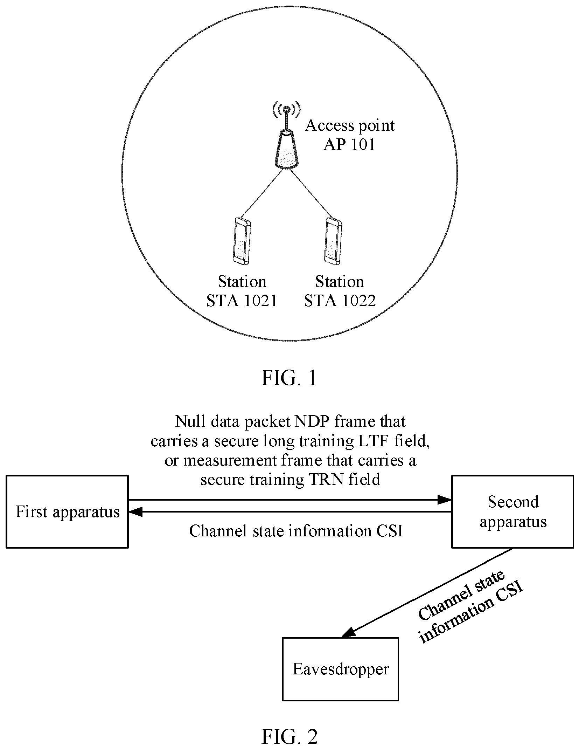

FIG. 1 is a diagram of a structure of a communication system according to an embodiment of this application. The communication system may include but is not limited to one access point (access point, AP) and two stations (station, STA). A quantity and forms of devices shown in FIG. 1 are used as examples, and do not limit this embodiment of this application. In an actual application, two or more APs and three or more STAs may be included. The communication system shown in FIG. 1 is described by using an example in which there are an AP 101, a STA 1021, and a STA 1022 and the AP 101 can provide a wireless service for the STA 1021 and the STA 1022. In FIG. 1, that the AP 101 is a base station is used as an example, and that the STA 1021 and the STA 1022 are mobile phones is used as an example.

FIG. 2 is a diagram of a wireless sensing scenario according to an embodiment of this application. As shown in FIG. 2, a communication scenario includes a first apparatus, a second apparatus, and an eavesdropper other than the first apparatus and the second apparatus. The first apparatus sends, to the second apparatus, a null data packet (null data packet, NDP) frame that carries a secure long training field (secure long training field, secure LTF) used to perform channel estimation, or sends a measurement frame that carries a secure training sequence (secure training field, secure TRN) used to perform channel estimation. After receiving the NDP frame/measurement frame, the second apparatus performs channel estimation, and needs to feed back, to the first apparatus, channel state information (channel state information, CSI) obtained through channel estimation. In a process in which the second apparatus feeds back the CSI to the first apparatus, the CSI may be eavesdropped by the eavesdropper. Therefore, information in a feedback stage needs to be protected.

In this embodiment of this application, the communication system may be a wireless local area network (wireless local area network, WLAN), a cellular network, or another wireless communication system that supports parallel transmission on a plurality of links. This embodiment of this application is mainly described by using an example in which a network of IEEE 802.11 is deployed. Aspects of this application may be extended to other networks that use various standards or protocols, for example, Bluetooth (Bluetooth), a high performance radio LAN (high performance radio LAN, HIPERLAN) (which is a wireless standard similar to an IEEE 802.11 standard, and mainly used in Europe), a wide area network (WAN), a personal area network (personal area network, PAN), or another network that is known currently or developed in future. Therefore, regardless of a used coverage area and wireless access protocol, various aspects provided in this application are applicable to any proper wireless network.

In this embodiment of this application, the STA has a wireless transceiver function, and may support an 802.11 series protocol, and communicate with the AP or another STA. For example, the STA may be any user communication device that allows a user to communicate with the AP and further communicate with a WLAN, for example, includes but is not limited to user equipment that may be networked, for example, a tablet, a desktop computer, a laptop computer, an ultra-mobile personal computer (ultra-mobile personal computer, UMPC), a handheld computer, a netbook, a personal digital assistant (personal digital assistant, PDA), or a mobile phone, an internet of things node in the internet of things, or a vehicle-mounted communication apparatus in the internet of vehicles. Optionally, the STA may alternatively be a chip and a processing system in the foregoing terminals.

In this embodiment of this application, the AP is an apparatus that provides a service for the STA, and may support the 802.11 series protocol. For example, the AP may be a communication entity such as a communication server, a router, a switch, or a bridge; or the AP may include a macro base station, a micro base station, a relay station, or the like in various forms. Certainly, the AP may alternatively be a chip and a processing system in the devices in various forms, to implement a method and a function in embodiments of this application.

To facilitate understanding of embodiments disclosed in this application, the following two points are described.

(1) A scenario in embodiments disclosed in this application is described by using a scenario of a Wi-Fi network in a wireless communication network as an example. It should be noted that the solution in embodiments disclosed in this application may be further applied to another wireless communication network, and a corresponding name may also be replaced with a name of a corresponding function in the another wireless communication network.

(2) In embodiments disclosed in this application, various aspects, embodiments, or features of this application are represented around a system including a plurality of devices, components, modules, and the like. It should be appreciated and understood that each system may include another device, component, module, and the like, and/or may not include all devices, components, modules, and the like discussed with reference to the accompanying drawings. In addition, a combination of these solutions may be further used.

### II. Related concepts in embodiments of this application

### 1. Wireless local area network sensing (wireless local area network sensing) technology

The wireless local area network sensing technology is inferring and sensing a surrounding environment by analyzing a wireless signal (for example, CSI)" modulated" by various obstacles. A sensing session in a wireless sensing technology includes several stages: a discovery stage, a negotiation stage, a measurement stage, a feedback stage, and a termination stage. The CSI information is mainly transmitted in the measurement stage and the feedback stage of the sensing session. To be specific, the CSI is obtained in the measurement stage, and the CSI is fed back in the feedback stage.

### 2. Secure long training (secure LTF) field and secure training (secure TRN) field

### 2.1. Secure LTF field

In an 802.11 ax protocol, a high efficiency secure long training field (high efficiency secure long training field, HE-LTF field) in a null data packet NDP frame provides a receive end with a means for estimating a multiple-in multiple-out (multiple-in multiple-out, MIMO) channel between a constellation mapper output set and the receive end. The 802.11ax protocol specifies a sequence for the HE-LTF in a case of different bandwidths. However, the NDP frame is a frame with only a physical header. Therefore, an NDP frame that is not modified or encrypted is easily eavesdropped by an eavesdropper (eavesdropper), to obtain CSI. Therefore, to ensure that valid information is not obtained by the eavesdropper from a measurement procedure in the wireless local area network sensing technology, a secure long training field (secure LTF) is designed in an 802.11az protocol to protect a measurement process. In an 802. 11bf protocol, the secure LTF field may also be used to encrypt the NDP frame. However, a manner of encrypting the NDP frame in the 802.1 1bf protocol is not limited in embodiments of this application.

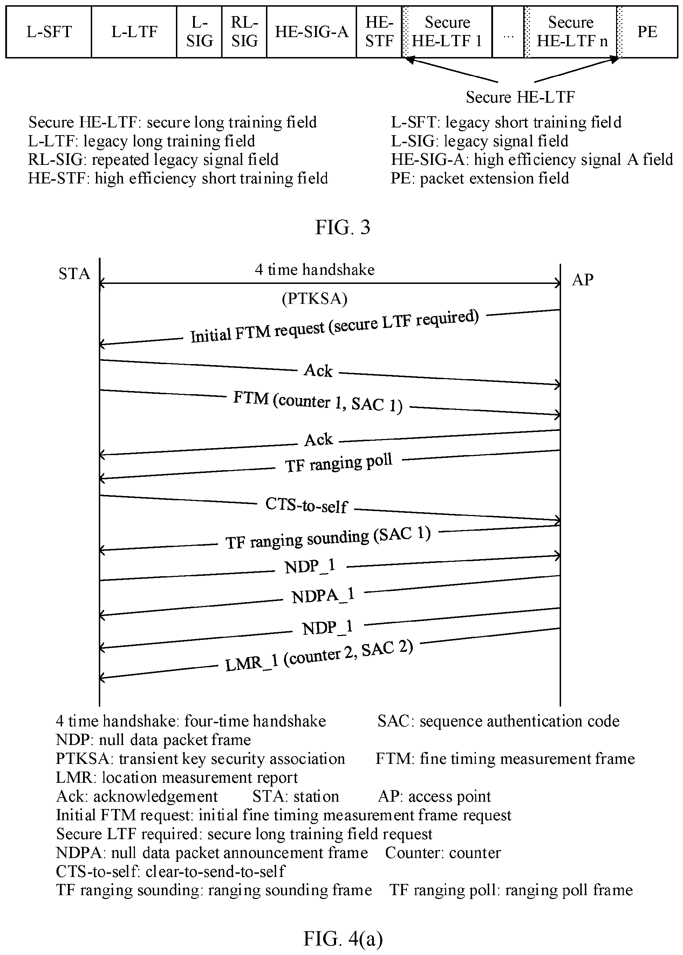

A frame structure of an NDP frame that carries the secure LTF field is shown in FIG. 3. The NDP frame that carries the secure LTF field includes fields such as a legacy short training field, a legacy long training field, ..., and a secure long training field (secure LTF). The secure LTF field is used to generate a group of random LET sequences. Only a STA that learns of an original random LTF sequence can correctly parse the NDP frame that carries the secure LTF field, to obtain the CSI, and another STA can obtain only wrong CSI. A secure LTF generation process is as follows:

### 2.11. Initial stage

In an access authentication stage of an association process, the receive end and a transmit end perform key agreement by using a four-way handshake, to obtain pairwise transient key security association (pairwise transient key security association, PTKSA) information. The PTKSA information includes a pairwise transient key (PTK).

### 2.12. Negotiation stage

In the 802.11az protocol, a trigger based (trigger based, TB) ranging mode and a non trigger based (non trigger based, Non TB) ranging mode have a same negotiation procedure. The transmit end sets a secure LTF support subfield to 1 in an initial fine timing measurement frame (initial Fine timing measurement frame, IFTMR) to request to enable a secure ranging mode, and the receive end also sets a secure LTF support subfield to 1 in an IFTM frame to respond. The transmit end and the receive end generate a same secure long training field key seed (secure-LTF-key-seed) based on a KDK intercepted from the PTK based on a hash (Hash) algorithm. The receive end uses the IFTM frame to carry parameters such as a secure LTF counter and a secure LTF sequence authentication code (sequence authentication code, SAC) for indication.

### 2.13. Encryption stage

The transmit end and the receive end generate an ista-ltf-key and a rsta-ltf-key based on the secure-LTF-key-seed and the secure LTF counter based on an algorithm, and then generate respective random sequences based on the secure LTF counter and the ista/rsta-ltf-key, to obtain the secure LTF field.

### 2.2. Secure TRN field

When a transmit end and a receive end performs measurement and sensing on a high frequency band, the transmit end sends, to the receive end, a secure TRN field used to perform channel estimation, so that the receive end may perform channel estimation based on the secure TRN field, to obtain CSI from the transmit end to the receive end.

### 3. Trigger based (trigger based, TB) ranging mode and non trigger based (non trigger based, NTB) ranging mode

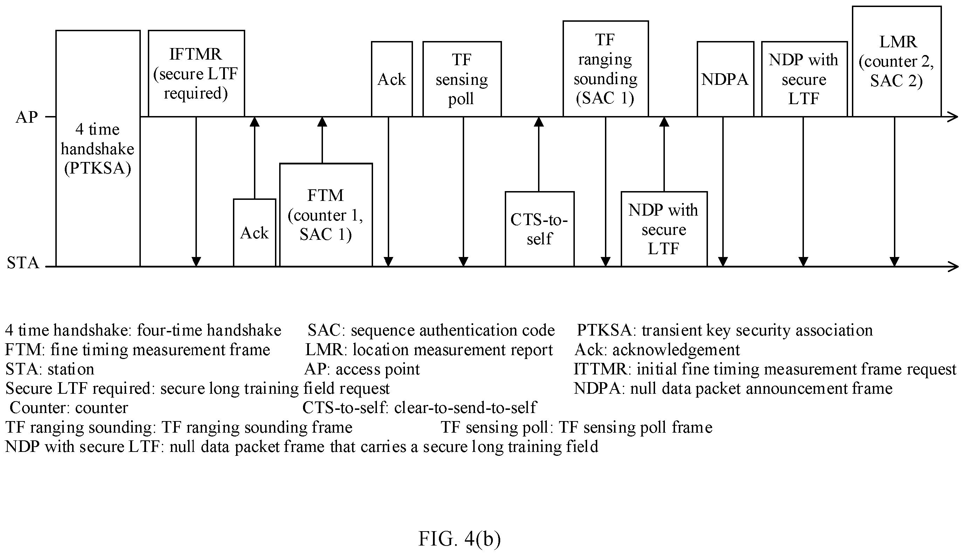

TB ranging mode: Current schematic flowcharts of the TB ranging mode are shown in FIG. 4(a) and FIG. 4(b). After an AP and a STA obtain PTKSA by using a four-way handshake, an AP that has a capability of generating a secure LTF field and that has a secure ranging requirement requests to enable a secure ranging mode by setting a secure LTF required field to 1 in an IFTMR frame. The STA sets a secure LTF support field (secure LTF support field) to 1 in a fine timing measurement frame (fine timing measurement frame, FTMR) to respond, and provides parameters of a counter (counter 1) and a SAC 1 required for a current round of measurement in a negotiation frame. The AP sends a ranging poll frame (TF sensing poll) to the STA, to send polling to the STA. The STA returns a clear-to-send-to-self (CTS-to-self) to the AP, to determine whether the STA can participate in a session. When the AP determines that the STA participates in the session, the AP may send a ranging sounding frame (TF ranging sounding) to the STA, to trigger the STA to send an NDP frame that carries a secure LTF field. Therefore, the STA sends the NDP frame to the AP. The STA and the AP generate a same secure LTF field based on a same counter. The AP sends a null data packet announcement frame (null data packet announcement, NDPA) to the STA, to announce, to the STA, that the NDP frame that carries the secure LTF field is to be sent, and the AP sends, to the STA, the NDP frame that carries the secure LTF field. In addition, the AP indicates, in a location measurement report (location measurement report, LMR) frame, parameters of a counter 2 and a SAC 2 that need to be used in a next round of measurement process.

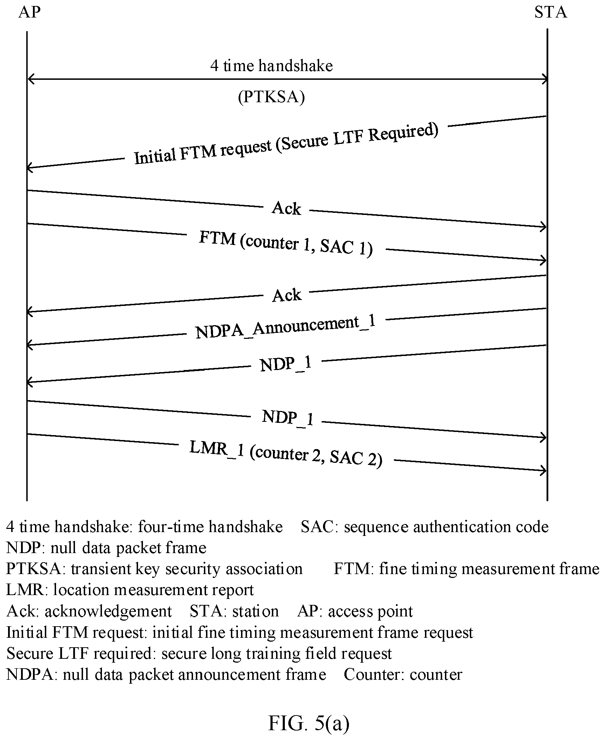

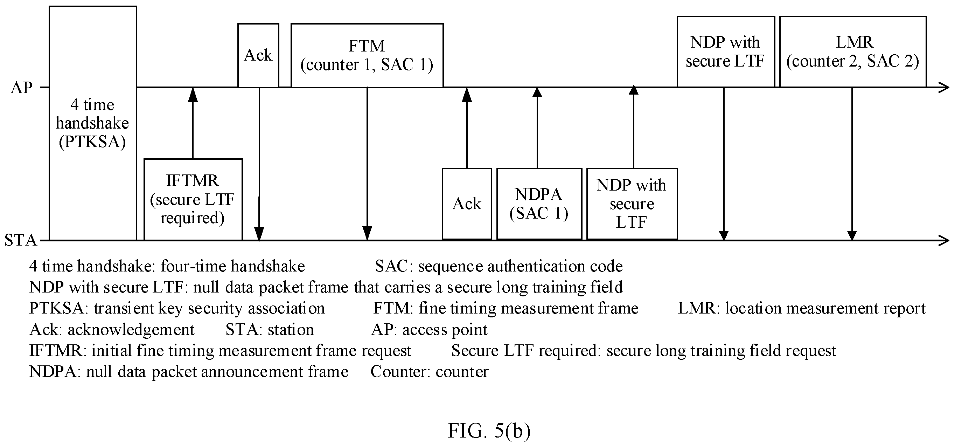

NTB ranging mode: Current schematic flowcharts of the NTB ranging mode are shown in FIG. 5(a) and FIG. 5(b).

After a STA and an AP obtain PTKSA in a same four-way handshake procedure, in a negotiation stage of an FTM session, the STA and the AP determine to enable a secure ranging (secure Ranging) mode, and the AP provides values of a counter 1 and a SAC 1 required for a current round of measurement. The STA sends an NDP frame, to perform contention-based access. The STA indicates, in NDPA, to currently generate a SAC corresponding to a counter value of the secure LTF, and the AP and the STA generate a same secure LTF. The AP indicates, in the LMR frame, a counter 2 and a SAC 2 that are to be used in a next round of measurement process.

### 4. Explicit feedback and implicit feedback

Implicit feedback: When a receive end is an end that needs to obtain measurement information, a transmit end sends, to the receive end, a PPDU that is used for measurement and that carries a secure LTF field or a secure TRN field used to perform channel estimation, and the receive end performs channel estimation based on the secure LTF field/secure TRN field, to obtain CSI from the receive end to the transmit end. Therefore, the receive end does not need to feed back the CSI, and this manner is implicit feedback.

Explicit feedback: When a transmit end is an end that needs to obtain measurement information, the transmit end sends, to a receive end, a PPDU that is used for measurement and that carries a secure LTF field or a secure TRN field used to perform channel estimation. After the receive end performs channel estimation and obtains CSI from the transmit end to the receive end, the receive end needs to feed back the CSI to the transmit end, so that the transmit end obtains the CSI. Such a feedback manner is explicit feedback.

### III. Technical problem to be resolved in this application

In the communication scenario shown in FIG. 2, after performing channel estimation, a second apparatus feeds back obtained CSI to a first apparatus, so that the first apparatus obtains the CSI. Currently, the CSI fed back by the second apparatus is an unprotected frame. In a feedback process of the second apparatus, an eavesdropper can eavesdrop the CSI, to determine a sensing result, and cause privacy disclosure. Therefore, security protection needs to be performed on a feedback stage of a sensing session.

Embodiments of this application may be applied to an explicit feedback scenario of a wireless sensing technology.

In embodiments of this application, when the first apparatus is a STA, the second apparatus is an AP. When the first apparatus is an AP, the second apparatus is a STA.

### IV. Information feedback method 100

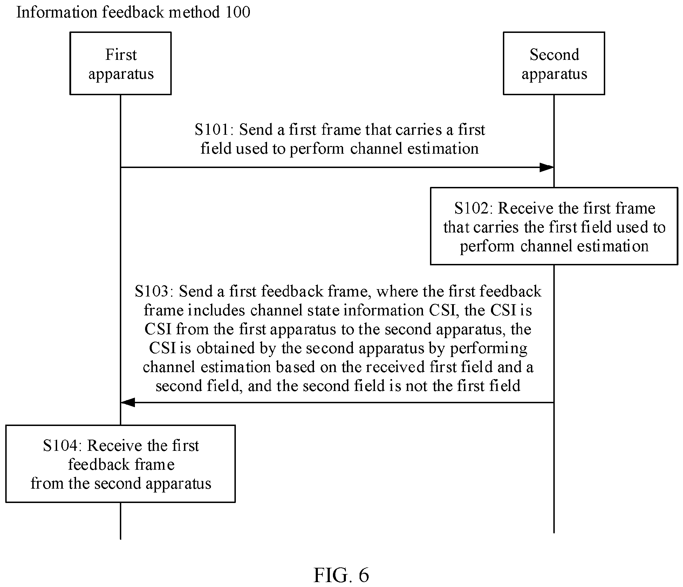

An embodiment of this application provides an information feedback method 100. FIG. 6 is a diagram of interaction of the information feedback method 100. The information feedback method 100 is described from a perspective of interaction between a first apparatus and a second apparatus. The information feedback method 100 includes but is not limited to the following steps:
S101: The first apparatus sends, to the second apparatus, a first frame that carries a first field used to perform channel estimation.
S102: The second apparatus receives the first frame that carries the first field used to perform channel estimation.

In an optional implementation, when the first apparatus and the second apparatus perform measurement and sensing on a low frequency band, the first field is a secure long training LTF field. Therefore, the first apparatus sends, to the second apparatus, an NDP frame that carries the secure LTF field.

In another optional implementation, when the first apparatus and the second apparatus perform measurement and sensing on a high frequency band, the first field is a secure training TRN field. Therefore, the first apparatus sends, to the second apparatus, a first frame that carries the secure TRN field.

In an optional implementation, before the first apparatus sends, to the second apparatus, the first frame that carries the first field used to perform channel estimation, the first apparatus may further send a request frame to the second apparatus. The request frame is used to request to perform channel estimation based on a field different from the secure LTF field or the secure TRN field. Therefore, the second apparatus receives the request frame, and sends a response frame to the first apparatus. The response frame is used to respond to the request frame.

For example, the response frame is used to make a response indicating whether to agree to perform channel estimation based on the field different from the secure LTF field or the secure TRN field. When the response frame sent by the second apparatus to the first apparatus is used to make a response indicating to agree to perform channel estimation based on the field different from the secure LTF field or the secure TRN field, the first apparatus may send, to the second apparatus, the first frame that carries the first field used to perform channel estimation.

For example, the response frame is used by the second apparatus to: when the second apparatus receives the first field from the first apparatus, perform channel estimation based on the received first field and a second field different from the first field, and send, to the first apparatus, CSI obtained through channel estimation.

When the first field is a secure LTF field, the second field may be one of an HE-LTF field and an enhanced high throughput (enhanced high throughput, EHT)-LTF field. Optionally, when the first field is a secure LTF field, the second field may be a secure LTF field different from the secure LTF field. For example, the first field is a secure LTF field #1, the second field is a secure LTF field #2, and the secure LTF field #2 is generated by the second apparatus based on a security parameter sent by the first apparatus to the second apparatus.

When the first field is a secure TRN field, the second field may be a directional multi-gigabit (directional multi-gigabit, DMG) TRN field, or may be an enhanced directional multi-gigabit (enhanced directional multi-gigabit, EDMG) TRN field. Optionally, when the first field is a secure TRN field, the second field is a secure TRN field different from the secure TRN field. For example, the first field is a secure TRN field #3, the second field is a secure TRN field #4, and the secure TRN field #4 is generated by the second apparatus based on a security parameter sent by the first apparatus to the second apparatus.

Optionally, the first field may alternatively be a randomly generated field, a sequence length of the randomly generated field satisfies a characteristic of an HE-LTF, or satisfies a characteristic of an EHT-LTF, or satisfies a characteristic of a DMG-TRN, or satisfies a characteristic of an EDMG-TRN, and the second field may be one of an HE-LTF, an EHT-LTF, a DMG-TRN, and an EDMG-TRN, or may be any field different from the first field.

Optionally, in consideration of encrypted measurement feedback implemented based on a legacy device (legacy device), the first field may alternatively be a randomly generated field, a sequence length of the randomly generated field satisfies a characteristic of an L-LTF, and the second field may be an L-LTF, or may be a field different from the first field.

In other words, before the first apparatus and the second apparatus perform measurement and sensing, the first apparatus requests, by using the request frame, the second apparatus to perform channel estimation based on the field different from the secure LTF field or the secure TRN field, and the second apparatus makes, by using the response frame, a response indicating whether to agree to perform channel estimation based on the field different from the secure LTF field or the secure TRN field. When the second apparatus makes, by using the response frame, a response indicating to agree to perform channel estimation based on the field different from the secure LTF field or the secure TRN field, the second apparatus may subsequently perform channel estimation based on the field different from the secure LTF field or the secure TRN field, so that the second apparatus may feed back, to the first apparatus, CSI obtained by performing channel estimation based on the received first field and the field different from the secure LTF field or the secure TRN field, to ensure security of CSI from the first apparatus to the second apparatus.

In another optional implementation, the request frame is further used to request to send/receive an NDP frame that carries the secure LTF field, or is used to request to send/receive a measurement frame that carries the secure TRN field. Correspondingly, the response frame is further used to make a response indicating whether to agree to send/receive the NDP frame that carries the secure LTF field, or is further used to make a response indicating whether to agree to send/receive the measurement frame that carries the secure TRN field.

That is, the first apparatus and the second apparatus may further negotiate, by using the request frame and the response frame, about whether secure measurement may be performed. If the first apparatus and the second apparatus determine, through negotiation by using the request frame and the response frame, that secure measurement may be performed, the first apparatus may send, to the second apparatus, the NDP frame that carries the secure LTF field, and the second apparatus may perform channel estimation based on the received secure LTF field and a field different from the secure LTF field; or the first apparatus may send, to the second apparatus, the measurement frame that carries the secure TRN field, and the second apparatus may perform channel estimation based on the received secure TRN field and a field different from the secure TRN field.

In another optional implementation, the request frame is further used to request not to exchange a security parameter of the first field, the response frame is used to respond to the request frame, and the security parameter of the first field is a parameter used to generate the first field. For example, the response frame is used to make a response indicating to agree not to exchange the security parameter of the first field. For example, the response frame is used by the second apparatus to: after receiving the first frame that carries the first field, perform channel estimation based on the received first field and a preset LTF field or a preset TRN field, and feed back, to the first apparatus, CSI obtained through channel estimation. That is, the first apparatus and the second apparatus may further determine, through negotiation by using the request frame and the response frame, not to exchange the security parameter of the first field. After the first apparatus sends the first frame that carries the first field, the second apparatus performs channel estimation based on the received first field and the preset LTF field or the preset TRN field by default, and feeds back CSI obtained through channel estimation. When the second apparatus performs channel estimation based on the received first field and the preset LTF field or the preset TRN field, to obtain the CSI, security of the CSI from the first apparatus to the second apparatus may also be ensured. The preset LTF field is a non-secure LTF field in a current protocol, and the preset TRN field is a non-secure TRN field in the current protocol. The non-secure LTF field may be an HE-LTF field, or may be an EHT-LTF field. The non-secure TRN field may be a DMG-TRN field, or may be an EDMG-TRN field.

The security parameter includes parameters such as a counter (counter) and a SAC. The security parameter of the first field is a parameter such as a counter used to generate the first field.

When the NDP frame is encrypted in another encryption manner in an 802.bf protocol, the security parameter includes a parameter corresponding to the encryption manner, and may include a parameter that is not the counter or the SAC.

In this manner, regardless of whether the second apparatus is an AP, a STA that has a capability of generating the first field, or a STA that does not have a capability of generating the first field, the first apparatus may request, by using the request frame, not to exchange the security parameter of the first field, so that after receiving the first frame that carries the first field, the second apparatus performs channel estimation based on the received first field and the preset LTF field or the preset TRN field. In a manner in which the first apparatus and the second apparatus do not exchange the security parameter of the first field, resources may be further reduced, and complexity is reduced.

In still another optional implementation, if the second apparatus is a STA that does not have a capability of generating the first field, the first apparatus considers by default that the parameter of the first field does not need to be exchanged with the second apparatus. Therefore, the first apparatus requests, by using the request frame, not to exchange the security parameter of the first field, or the first apparatus does not use a function that is of the request frame and that is used to request whether to exchange the security parameter of the first field.

In still another optional implementation, when the first apparatus is an AP and the second apparatus is a STA that has a capability of generating the first field, or when the first apparatus is a STA that has a capability of generating the first field and the second apparatus is an AP, the request frame further includes a security parameter of the second field, and the response frame is further used to respond to the request frame. For example, the response frame is used to make a response indicating to agree to perform channel estimation based on the second field.

For example, the response frame is used by the second apparatus to: after receiving the first frame that carries the first field, perform channel estimation based on the received first field and the second field generated based on the security parameter of the second field, and feed back, to the first apparatus, CSI obtained through channel estimation. The security parameter of the second field is used to generate the second field. The second field is a secure LTF field different from the first field, or a secure TRN field different from the first field.

In other words, the response frame is used for a second apparatus that cannot generate or identify the first field, and is also used by a second apparatus that does not have a capability of generating the first field to: agree to receive the first field that cannot be accurately identified and parsed by the second apparatus, and obtain wrong CSI based on an indication of the first apparatus, in other words, perform channel estimation based on the received first field and a preset LTF field or a preset TRN field, to obtain CSI. That the second apparatus that does not have a capability of generating the first field performs channel estimation based on a field different from the first field is jointly controlled by another protocol and a behavior of the request frame.

In an optional implementation, the security parameter of the second field is one of security parameters of the first field that are sent by the first apparatus historically. For example, before the first apparatus sends the first frame that carries the first field, the first apparatus sends the security parameter of the first field to the second apparatus for five times. In this case, the security parameter of the second field may be any one of security parameters sent for the five times. For example, the security parameter of the second field is a security parameter that is of the first field and that is sent by the first apparatus to the second apparatus at the third time. In other words, the security parameter of the second field is not a security parameter of the first field when the first apparatus and the second apparatus perform current measurement and sensing, so that CSI obtained by the second apparatus by performing channel estimation based on the received first field and the second field generated based on the security parameter of the second field is not CSI from the first apparatus to the second apparatus.

Optionally, the security parameter of the second field may alternatively be a security parameter that is of the first field and that is not sent by the first apparatus historically, and is not the security parameter of the first field when the first apparatus and the second apparatus perform current measurement and sensing. Therefore, the CSI obtained by the second apparatus by performing channel estimation based on the received first field and the second field generated based on the security parameter of the second field is also wrong CSI. An implementation of the security parameter of the second field is not limited in this embodiment of this application.

It can be learned that, when the second apparatus has a capability of generating the first field, the first apparatus may further send the security parameter of the second field to the second apparatus, and the second apparatus responds, by using the response frame, whether to agree to perform channel estimation based on the second field. When the second apparatus makes, by using the response frame, a response indicating to agree to perform channel estimation based on the second field, after receiving the first frame that carries the first field, the second apparatus generates the second field based on the security parameter of the second field, performs channel estimation based on the received first field and the second field, and feeds back, to the first apparatus, CSI obtained by performing channel estimation based on the received first field and the second field. The CSI obtained by the second apparatus by performing channel estimation based on the received first field and the second field is not the CSI from the first apparatus to the second apparatus. Therefore, in a manner in which the second apparatus feeds back the CSI, information security in a feedback stage may be ensured.

In still another optional implementation, the request frame is further used to request the second apparatus that does not have a capability of generating the first field to perform channel estimation based on a field different from the secure LTF field or the secure TRN field; and the response frame is further used to respond to the request frame. For example, the response frame is used to make a response indicating whether the second apparatus that does not have a capability of generating the first field agrees to perform channel estimation based on the field different from the secure LTF field or the secure TRN field. When the response frame is used to make a response indicating that the second apparatus that does not have a capability of generating the first field agrees perform channel estimation based on the field different from the secure LTF field or the secure TRN field, the second apparatus that does not have a capability of generating the first field may participate in measurement and sensing of the first apparatus. For example, the response frame is used by the second apparatus that does not have a capability of generating the first field to: perform channel estimation based on the received first field and the preset LTF field or the preset TRN field when receiving the first frame that carries the first field, and feed back, to the first apparatus, CSI obtained through channel estimation.

It can be learned that, the first apparatus and the second apparatus may negotiate, in a negotiation stage by using the request frame and the response frame, about whether the second apparatus that does not have a capability of generating the first field may be allowed to participate in measurement and sensing of the first apparatus. In this manner, the second apparatus with a weaker capability may also participate in measurement and sensing of the first apparatus, and a capability requirement for the second apparatus may be reduced, to improve a system compatibility capability, and provide more resources for measurement and sensing.

In another optional implementation, when the first apparatus and the second apparatus perform measurement and sensing on a low frequency band, the first apparatus may further send an NDPA frame to the second apparatus before sending, to the second apparatus, the first frame that carries the first field used to perform channel estimation. The NDPA frame is used to announce, to the second apparatus, that an NDP frame that carries a secure LTF field is to be sent. The NDPA frame includes a SAC that may be used by the second apparatus. Optionally, the NDPA frame may further include parameters such as a bandwidth and a periodicity that are used for a current round of measurement.

In still another optional implementation, when the first apparatus and the second apparatus perform measurement and sensing on a low frequency band, the first apparatus may further receive an NDPA frame from the second apparatus before sending, to the second apparatus, the first frame that carries the first field used to perform channel estimation. The NDPA frame is used to announce, to the first apparatus, that the second apparatus is to send an NDP frame that carries a secure LTF field. The NDPA frame includes a SAC that may be used by the first apparatus.

The request frame and the response frame may be an FTM_Request frame and an FTM frame in an 802.1 1az protocol, that is, may be of frame structures of the FTM _Request frame and the FTM frame in the 802.11az protocol, and may be applied to frame structures of the request frame and the response frame that may be used in an 802.bf protocol in the future. Optionally, the request frame and the response frame may alternatively be a sensing request frame and a sensing response frame that are newly designed. Optionally, the request frame may alternatively be a measurement setup request frame (measurement setup request), and the response frame may be a measurement setup response frame (measurement setup response). Optionally, the request frame is a sensing setup request frame (sensing setup request), and the response frame is a sensing setup response frame (sensing setup response).

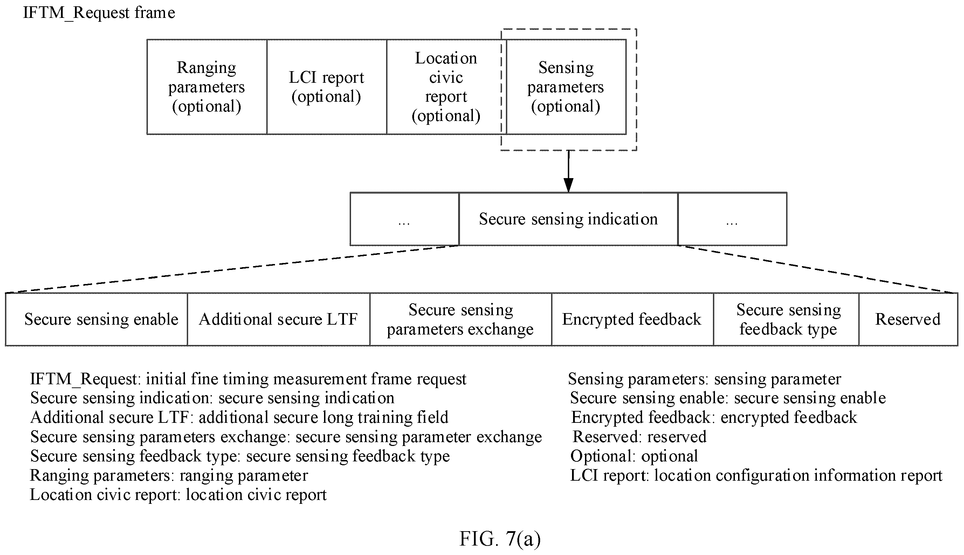

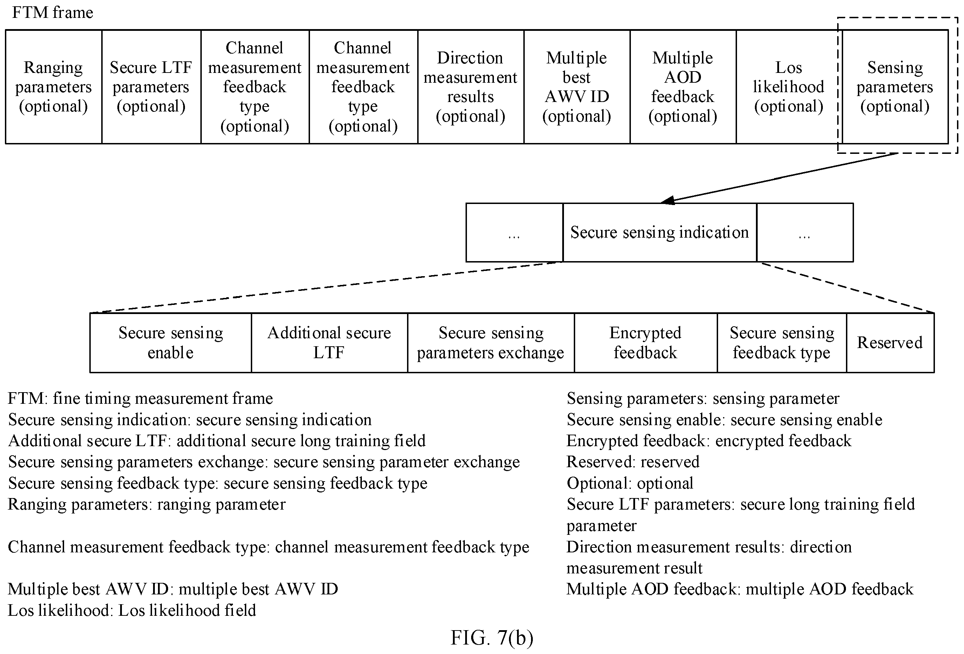

When the request frame and the response frame are an FTM request frame and an FTM frame, frame structures of the request frame and the response frame are as follows: As shown in FIG. 7(a), the request frame is obtained by adding a new sensing parameters field after the FTM _Request frame, and the sensing parameters field includes a secure sensing indication field. As shown in FIG. 7(b), the response frame is obtained by adding an optional sensing parameters field after the FTM frame, and the sensing parameters field includes a secure sensing indication field.

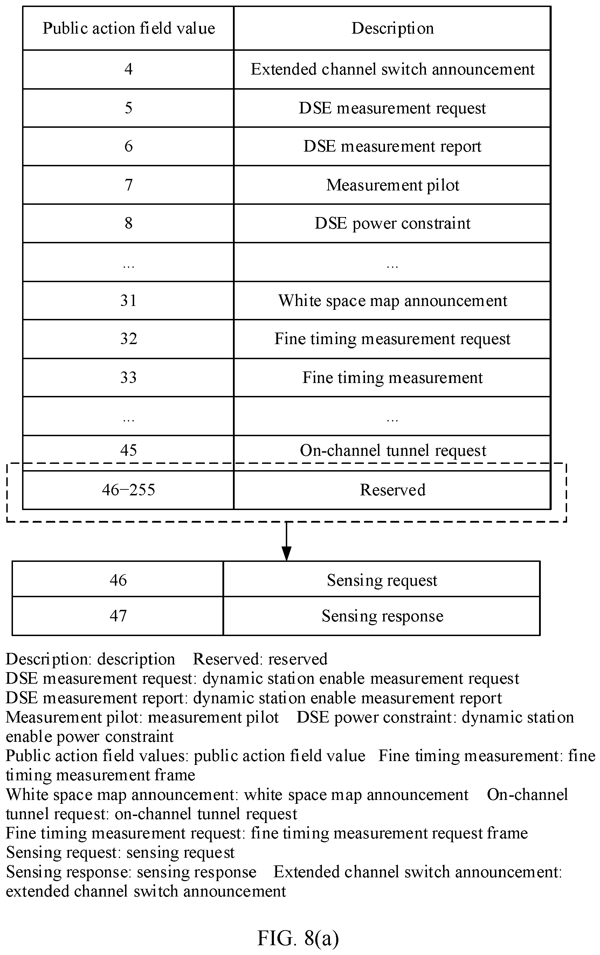

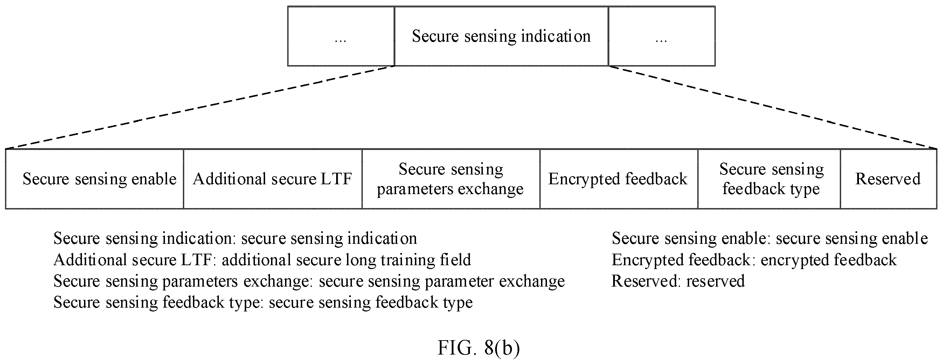

When the request frame and the response frame are the sensing request frame and the sensing response frame that are designed in this embodiment of this application, frame structures of the request frame and the response frame are shown in FIG. 8(a) and FIG. 8(b). The sensing request frame and the sensing response frame are newly added frames in a reserved field of an action frame, and the sensing request frame and the sensing response frame each include a secure sensing indication field. For example, the sensing request frame and the sensing response frame are newly added frames in reserved fields 46 and 47 of the action frame.

In an optional implementation, the frame structures of the request frame and the response frame are shown in FIG. 7(a), FIG. 7(b), FIG. 8(a), and FIG. 8(b). The request frame and the response frame each include a secure sensing indication field, and the secure sensing indication field includes various subfields. The following describes functions of the various subfields with reference to the foregoing functions of the request frame and the response frame.

### 1. Secure sensing enable field

The request frame and the response frame each include a secure sensing enable field. A secure sensing enable field in the request frame is used to request to perform channel estimation based on the field different from the secure LTF field or the secure TRN field, in other words, request the second apparatus to perform secure feedback. A secure sensing enable field in the response frame is used to respond to the request frame. For example, the response frame is used to make a response indicating whether to agree to perform channel estimation based on the field different from the secure LTF field or the secure TRN field, in other words, make a response indicating whether to agree to perform secure feedback. For example, the response frame is used by the second apparatus to: when receiving the first frame that carries the first field, perform channel estimation based on the received first field and the second field, and feed back, to the first apparatus, the CSI obtained through channel estimation. Optionally, the secure sensing enable field may also be replaced with a secure sensing and feedback field, and a function implemented by the secure sensing and feedback field is the same as a function implemented by the secure sensing enable field.

For example, when the secure sensing enable field in the request frame is set to 1, the secure sensing enable field is used to request the second apparatus to perform channel estimation based on the field different from the secure LTF field or the secure TRN field. When the secure sensing enable field in the response frame is set to 1, the secure sensing enable field is used to make a response indicating to agree to perform channel estimation based on the field different from the secure LTF field or the secure TRN field; or when the secure sensing enable field in the response frame is set to 0, the secure sensing enable field is used to make a response indicating to disagree to perform channel estimation based on the field different from the secure LTF field or the secure TRN field.

Optionally, the secure sensing enable field in the request frame may be further used to request to send/receive, in "measurement setup", the NDP frame that carries the secure LTF field, or may be used to request to send/receive, in a sensing session, the measurement frame that carries the secure TRN field. Correspondingly, the secure sensing enable field in the response frame may be further used to make a response indicating whether to agree to receive/send the NDP frame that carries the secure LTF field, or may be used to make a response indicating whether to agree to receive/send the measurement frame that carries the secure TRN field. That is, the secure sensing enable field in the request frame and the secure sensing enable field in the response frame may be further used to negotiate about whether the first apparatus and the second apparatus perform secure measurement.

For example, when the secure sensing enable field in the request frame is set to 1, the secure sensing enable field is used to request to send/receive, in the sensing session, the NDP frame that carries the secure LTF field, or is used to request to send/receive, in the sensing session, the measurement frame that carries the secure TRN field. When the secure sensing enable field in the response frame is set to 1, the secure sensing enable field is used to make a response indicating to agree to receive/send, in the sensing session, the NDP frame that carries the secure LTF field, or is used to make a response indicating to agree to receive/send the measurement frame that carries the secure TRN field; or when the secure sensing enable field in the response frame is set to 0, the secure sensing enable field is used to make a response indicating to disagree to receive/send, in the sensing session, the NDP frame that carries the secure LTF field, or is used to make a response indicating to disagree to receive/send the measurement frame that carries the secure TRN field.

That is, the first apparatus and the second apparatus may negotiate, by using the secure sensing enable field, about whether the second apparatus performs secure feedback, in other words, negotiate about whether the second apparatus feeds back, to the first apparatus, the CSI obtained by performing channel estimation based on the field different from the secure LTF field or the secure TRN field. Alternatively, the first apparatus and the second apparatus may determine, through negotiation by using the secure sensing enable field, that the first apparatus and the second apparatus perform secure measurement and secure feedback, in other words, negotiate about whether the first apparatus sends, to the second apparatus, the first frame that carries the secure LTF field or the secure TRN field, whether the second apparatus receives the first frame that carries the secure LTF field or the secure TRN field and that is from the first apparatus, and whether the second apparatus feeds back, to the first apparatus, the CSI obtained by performing channel estimation based on the received first field and the second field different from the first field.

### 2. Secure sensing parameters exchange field

Optionally, the request frame and the response frame each may further include a secure sensing parameters exchange field.

In an optional implementation, a secure sensing parameters exchange field in the request frame is used to request whether to exchange the security parameter of the first field, a secure sensing parameters exchange field in the response frame is used to respond to the request frame, and the security parameter of the first field is used to generate the first field.

For example, when the secure sensing parameters exchange field in the request frame is used to request to exchange the security parameter of the first field, the secure sensing parameters exchange field in the response frame is used to make a response indicating whether to agree to exchange the security parameter of the first field; or when the secure sensing parameters exchange field in the request frame is used to request not to exchange the security parameter of the first field, the secure sensing parameters exchange field in the response frame is used to make a response indicating whether to agree not to exchange the security parameter of the first field.

For example, when the secure sensing parameters exchange field in the request frame is used to request to exchange the security parameter of the first field, the secure sensing parameters exchange field in the response frame is used by the second apparatus to: when receiving the first frame that carries the first field, perform channel estimation based on the received first field and the first field generated based on the security parameter from the first apparatus; or when the secure sensing parameters exchange field in the request frame is used to request not to exchange the security parameter of the first field, the secure sensing parameters exchange field in the response frame is used by the second apparatus to: when receiving the first frame that carries the first field, perform channel estimation based on the received first field and the preset LTF field or the preset TRN field, and feed back, to the first apparatus, CSI obtained through channel estimation.

For example, when the secure sensing parameters exchange field in the request frame is set to 0, the secure sensing parameters exchange field is used to request not to exchange the security parameter of the first field; and when the secure sensing parameters exchange field in the response frame is set to 1, the secure sensing parameters exchange field is used to make a response indicating to agree not to exchange the security parameter of the first field; or when the secure sensing parameters exchange field in the response frame is set to 0, the secure sensing parameters exchange field is used to make a response indicating to disagree not to exchange the security parameter of the first field. When the secure sensing parameters exchange field in the request frame is set to 1, the secure sensing parameters exchange field is used to request to exchange the security parameter of the first field; and when the secure sensing parameters exchange field in the response frame is set to 1, the secure sensing parameters exchange field is used to make a response indicating to agree to exchange the security parameter of the first field; or when the secure sensing parameters exchange field in the response frame is set to 0, the secure sensing parameters exchange field is used to make a response indicating to disagree to exchange the security parameter of the first field.

In another optional implementation, a secure sensing parameters exchange field in the request frame includes the security parameter of the second field, and a secure sensing parameters exchange field in the response frame is used to respond to the request frame. For example, the secure sensing parameters exchange field in the response frame is used to make a response indicating whether to agree to perform channel estimation based on the second field. For example, the secure sensing parameters exchange field in the response frame is used by the second apparatus to: when receiving the first frame that carries the first field, perform channel estimation based on the received first field and the second field generated based on the security parameter of the second field, and feed back, to the first apparatus, the CSI obtained through channel estimation.

For example, when the secure sensing parameters exchange field in the response frame is set to 1, the secure sensing parameters exchange field is used to make a response indicating to agree to perform channel estimation based on the second field; or when the secure sensing parameters exchange field in the response frame is set to 0, the secure sensing parameters exchange field is used to make a response indicating to disagree to perform channel estimation based on the second field.

It can be learned that, the secure sensing parameters exchange field in the request frame and the secure sensing parameters exchange field in the response frame may be used to negotiate about whether to exchange the security parameter of the first field, or used to negotiate about whether the second apparatus performs channel estimation based on the second field.

When the second apparatus also needs to perform sensing based on the CSI from the first apparatus to the second apparatus, the secure sensing parameters exchange field in the request frame and the secure sensing parameters exchange field the response frame may be used to determine, through negotiation, to exchange the security parameter of the first field, so that the second apparatus performs channel estimation based on the first field generated based on the security parameter of the first field, to obtain the CSI from the first apparatus to the second apparatus, and further, the second apparatus performs sensing based on the CSI. When the second apparatus does not need to perform sensing based on the CSI from the first apparatus to the second apparatus, the secure sensing parameters exchange field in the request frame and the secure sensing parameters exchange field the response frame may be used to determine, through negotiation, not to exchange the security parameter of the first field, so that the second apparatus feeds back the CSI obtained by performing channel estimation based on the preset LTF field or the preset TRN field, to ensure the information security in the feedback stage, omit a parameter exchange process, and save resources.

### 3. Additional secure LTF field

Optionally, the request frame and the response frame each further include an additional secure LTF field.

An additional secure LTF field in the request frame is used to request the second apparatus that does not have a capability of generating the first field to join a measurement and sensing process of the first apparatus, in other words, used to request the second apparatus that does not have a capability of generating the first field to perform channel estimation based on the field different from the secure LTF field or the secure TRN field. An additional secure LTF field in the response frame is used to respond to the request frame.

For example, the additional secure LTF field in the response frame is used to make a response indicating whether the second apparatus that does not have a capability of generating the first field is allowed to join measurement and sensing of the first apparatus. For example, the additional secure LTF field in the response frame is used to: when the second apparatus that does not have a capability of generating the first field receives the first frame that carries the first field, perform channel estimation based on the received first field and the preset LTF field or the preset TRN field, and feed back, to the first apparatus, the CSI obtained through channel estimation.

For example, when the additional secure LTF field in the request frame is set to 1, the additional secure LTF field is used to request the second apparatus that does not have a capability of generating the first field to join the measurement and sensing process of the first apparatus. When the additional secure LTF field in the response frame is set to 1, the additional secure LTF field is used to make a response indicating that the second apparatus that does not have a capability of generating the first field agrees join the measurement and sensing process of the first apparatus; or when the additional secure LTF field in the response frame is set to 0, the additional secure LTF field is used to make a response indicating that the second apparatus does not have a capability of generating the first field disagrees to join the measurement and sensing process of the first apparatus.

It can be learned that, the first apparatus and the second apparatus may further negotiate, by using the additional secure LTF field, about whether the second apparatus that does not have a capability of generating the first field is allowed to join the measurement and sensing of the first apparatus, to improve a system compatibility capability, and provide more resources for measurement and sensing.

### 4. Encrypted feedback field

Optionally, the request frame and the response frame each further include an encrypted feedback field.

An encrypted feedback field in the request frame is used to request to feed back an encrypted feedback frame, in other words, used to request the second apparatus to feed back the CSI obtained by performing channel estimation based on the second field different from the first field. An encrypted feedback field in the response frame is used to respond to the request frame. For example, the encrypted feedback field in the response frame is used to make a response indicating whether to agree to feed back the encrypted feedback frame, in other words, used to make a response indicating whether the second apparatus agrees to feed back the CSI obtained by performing channel estimation based on the second field different from the first field. For example, the encrypted feedback field in the response frame is used by the second apparatus to: when receiving the first frame that carries the first field, perform channel estimation based on the received first field and the second field, and feed back, to the first apparatus, the CSI obtained through channel estimation.

For example, when the encrypted feedback field in the request frame is set to 1, the encrypted feedback field is used to request to feed back the encrypted feedback frame. When the encrypted feedback field in the response frame is set to 1, the encrypted feedback field is used to make a response indicating to feed back the encrypted feedback frame; or when the encrypted feedback field in the response frame is set to 0, the encrypted feedback field is used to make a response indicating not to feed back the encrypted feedback frame.

It can be learned that, the first apparatus and the second apparatus may further negotiate, by using the encrypted feedback field, about whether the second apparatus feeds back the encrypted feedback frame, in other words, re-determine, by using the encrypted feedback field, whether the second apparatus agrees to feed back the CSI obtained by performing channel estimation based on the second field different from the first field.

S 103: The second apparatus sends a first feedback frame to the first apparatus, where the first feedback frame includes channel state information CSI, the CSI is the CSI from the first apparatus to the second apparatus, the CSI is obtained by the second apparatus by performing channel estimation based on the received first field and the second field, and the second field is not the first field.

It may be understood that the first field received by the second apparatus is a field obtained after the first field sent by the first apparatus passes through a radio channel. In other words, the first field received by the second apparatus is a field obtained after the first field carries channel state information. The second field is described in S 102, and is not described again.

That the second apparatus performs channel estimation based on the first field and the second field, to obtain the CSI means that the second apparatus performs comparative analysis on the received first field and the second field in a channel estimation method, to obtain the channel state information CSI. If the second apparatus learns of the first field, the CSI obtained by the second apparatus by performing channel estimation based on the received first field and the known first field is CSI from the first apparatus to the second apparatus, and the CSI represents real channel state information from the first apparatus to the second apparatus. The known first field may be locally stored by the second apparatus, or may be sent by the first apparatus to the second apparatus. Therefore, if the second apparatus performs channel estimation based on the received first field and the second field different from the first field, the CSI fed back by the second apparatus to the first apparatus is not CSI from the first apparatus to the second apparatus. In this case, because the eavesdropper cannot obtain the first field even if the CSI fed back by the second apparatus is eavesdropped by the eavesdropper, the CSI from the first apparatus to the second apparatus cannot be obtained, to ensure security of the feedback information in the feedback stage.

In an optional implementation, when the second apparatus is an AP, a STA that has a capability of generating the first field, or a STA that does not have a capability of generating the first field, and the first apparatus and the second apparatus determine, through negotiation in a negotiation stage, not to exchange the security parameter of the first field, after receiving the first frame that carries the first field, the second apparatus performs channel estimation based on the received first field and the preset LTF field or the preset TRN field. In other words, the preset LTF field or the preset TRN field is the second field. Therefore, the second apparatus feeds back, to the first apparatus, the CSI obtained by performing channel estimation based on the received first field and the preset LTF field or the preset TRN field. The CSI is not CSI from the first apparatus to the second apparatus. Therefore, in such a feedback manner, the information security in the feedback stage may be ensured.

In another optional implementation, when the second apparatus is an AP or a STA that has a capability of generating the first field, and the first apparatus sends the security parameter of the second field to the second apparatus in the negotiation stage, after receiving the first frame that carries the first field, the second apparatus generates the second field based on the security parameter of the second field, and then performs channel estimation based on the received first field and the second field, to obtain CSI. The second field may be an LTF field or a TRN field, may be a secure LTF field different from the first field, or may be a secure TRN field different from the first field. Further, the second apparatus feeds back, to the first apparatus, the CSI obtained by performing channel estimation based on the received first field and the second field generated based on the security parameter of the second field, namely, CSI obtained by performing channel estimation based on the received first field and a field different from the first field. In this case, the fed back CSI is not CSI from the first apparatus to the second apparatus, to ensure the information security.

S 104: The first apparatus receives the first feedback frame from the second apparatus.

In an optional implementation, if the first apparatus and the second apparatus determine, through negotiation in the negotiation stage, not to exchange the security parameter of the first field, the second apparatus feeds back, to the first apparatus, the CSI obtained by performing channel estimation based on the received first field and the preset LTF field or the preset TRN field. Therefore, the first apparatus may further parse the CSI based on the sent first field and the preset LTF field or the preset TRN field, to obtain the CSI from the first apparatus to the second apparatus.

In another optional implementation, if the first apparatus sends the security parameter of the second field to the second apparatus in the negotiation stage, and the second apparatus agrees to perform channel estimation based on the second field, the second apparatus feeds back, to the first apparatus, CSI obtained by performing channel estimation based on the received first field and the second field generated based on the security parameter of the second field. Therefore, the first apparatus may further parse the CSI based on the sent first field and the second field, to obtain the CSI from the first apparatus to the second apparatus.

It can be learned that, in this embodiment of this application, the first apparatus sends, to the second apparatus, the first frame that carries the first field used to perform channel estimation, and the second apparatus performs channel estimation based on the received first field and the second field different from the first field, and feeds back, to the first apparatus, the CSI obtained through channel estimation. The second apparatus feeds back, to the first apparatus, the CSI obtained by performing channel estimation based on the received first field and the second field different from the first field. Even if the CSI fed back by the second apparatus is eavesdropped by the eavesdropper, the eavesdropper still cannot obtain the CSI from the first apparatus to the second apparatus. Therefore, in a manner in which the second apparatus feeds back the CSI, the information security in the feedback stage may be ensured.

The following describes a plurality of implementations of the information feedback method 100 by using an example in which a first apparatus and a second apparatus perform measurement and sensing on a low frequency band and with reference to a TB ranging mode, an NTB ranging mode, unilateral interaction, multilateral interaction, and different communication scenarios when the first apparatus is an AP and the second apparatus is a STA or when the first apparatus is a STA and the second apparatus is an AP. Unilateral interaction is a scenario in which there is only uplink communication or downlink communication between the first apparatus and the second apparatus, and bilateral interaction is a scenario in which there is both uplink communication and downlink communication between the first apparatus and the second apparatus.

### I. Non TB ranging mode

Scenario 1: The first apparatus is a STA, the second apparatus is an AP, and the STA and the AP perform unilateral interaction.

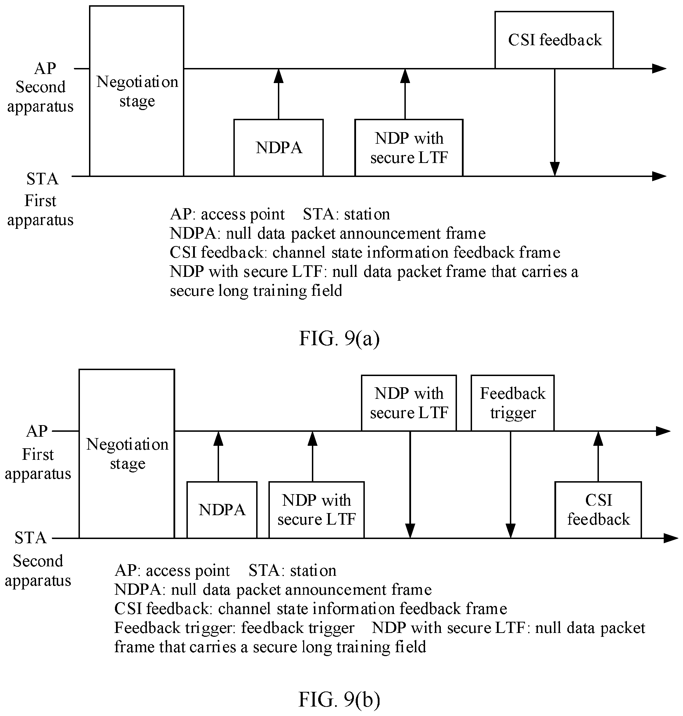

A flowchart of interaction when the first apparatus is a STA, the second apparatus is an AP, and the STA and the AP perform unilateral interaction is shown in FIG. 9(a).

In this scenario, the STA sets a secure sensing enable field in a request frame to 1 in a negotiation stage, to request the AP to perform channel estimation based on a field different from a secure LTF field. The AP sets a secure sensing enable field in a response frame to 1 in the negotiation stage, to make a response indicating to agree to perform channel estimation based on the field different from the secure LTF field. The STA sets a secure sensing parameters exchange field in the request frame to 0 in the negotiation stage, to request not to exchange a security parameter of the secure LTF field, and the AP sets a secure sensing parameters exchange field in the response frame to 1 in the negotiation stage, to agree not to exchange the security parameter of the secure LTF field. In this case, CSI in a CSI feedback frame fed back by the AP to the STAis CSI obtained by performing channel estimation based on the secure LTF field and a preset LTF field. In such a manner in which the STA and the AP determine, through negotiation in the negotiation stage, not to exchange the security parameter of the secure LTF field, a parameter interaction process may be omitted, resources are saved, and complexity is reduced.

As shown in FIG. 9(a), after the STA and the AP complete negotiation in the negotiation stage, the STA initiates contention-based access to the AP, that is, the STA actively sends an NDPA frame to the AP, to announce, to the AP, that an NDP frame (NDP with secure LTF) that carries the secure LTF field is to be sent. Then, the STA sends, to the AP, the NDP frame that carries the secure LTF field. Because the STA and the AP determine, through negotiation in the negotiation stage, not to exchange the security parameter of the secure LTF field, after receiving the NDP frame, the AP directly performs channel estimation based on the received secure LTF field and the preset LTF field, and feeds back, to the STA by using the CSI feedback frame, CSI obtained through channel estimation. Then, the STA parses the received CSI based on the sent secure LTF field and the preset LTF field, to obtain CSI from the STA to the AP.

Scenario 2: The first apparatus is an AP, the second apparatus is a STA, and the AP and the STA perform bilateral interaction.

A flowchart of interaction when the first apparatus is an AP, the second apparatus is a STA, and the AP and the STA perform bilateral interaction is shown in FIG. 9(b).

In this scenario, the AP determines, through negotiation in a negotiation stage, to measure CSI from the STA to the AP, and measure CSI from the AP to the STA. In addition, the AP sets a secure sensing enable field in a request frame to 1, to request the STA to perform channel estimation based on a field different from a secure LTF field. The STA sets a secure sensing enable field in a response frame to 1 in the negotiation stage, to make a response indicating to agree to perform channel estimation based on the field different from the secure LTF field. The AP and the STA perform bilateral interaction. To be specific, the AP sends an NDP frame to the STA, and the STA also sends an NDP frame to the AP. Therefore, the AP may use the secure sensing parameters exchange field in the request frame to carry a security parameter of a second field in the negotiation stage, and the STA sets the secure sensing parameters exchange field in the response frame to 1, to make a response indicating to agree to perform channel estimation based on the second field. The second field is a secure LTF field different from the secure LTF field sent by the AP. Therefore, the STA may also generate the second field based on the security parameter of the second field, and send, to the AP, an NDP frame that carries the second field. In other words, the STA may also send, to the AP, an NDP frame that carries the secure LTF field different from the secure LTF field sent by the AP.

As shown in FIG. 9(b), after the STA and the AP complete negotiation, the STA sends an NDPA frame to the AP, to announce, to the AP, that the NDP frame that carries the secure LTF field is to be sent, and the STA sends, to the AP, the NDP frame that carries the second field. The AP performs channel estimation based on the received second field and the second field generated based on the security parameter that is of the second field and that is sent to the STA, to obtain CSI from the STA to the AP. The AP sends, to the STA, the NDP frame that carries the secure LTF field used to perform channel estimation, and then sends a feedback trigger frame (feedback trigger) to the STA, to trigger the STA to feed back, to the AP, CSI obtained through channel estimation. After receiving the NDP frame that carries the secure LTF field, the STA performs channel estimation based on the received secure LTF field and the second field generated based on the security parameter of the second field, and feeds back, to the AP by using a CSI feedback frame, CSI obtained through channel estimation. Then, the AP parses the received CSI based on the second field generated based on the sent security parameter of the second field and the sent secure LTF field, to obtain CSI from the AP to the ST. Further, the AP performs precise sensing based on the CSI from the AP to the STA and the CSI from the STA to the AP.

Scenario 3: The first apparatus is a STA, the second apparatus is an AP, and the STA and the AP perform bilateral interaction.

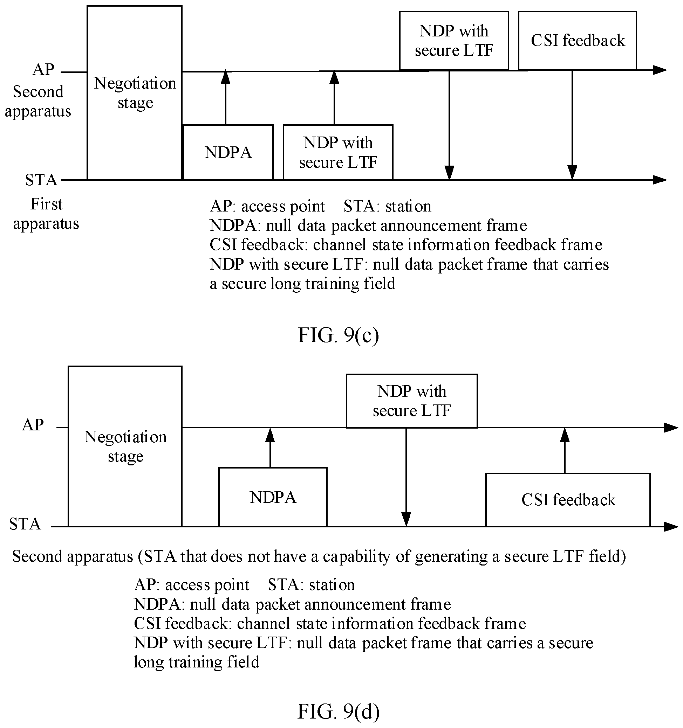

A flowchart of interaction when the first apparatus is a STA, the second apparatus is an AP, and the STA and the AP perform bilateral interaction is shown in FIG. 9(c).

In this scenario, the STA and the AP determine, through negotiation in a negotiation stage, to measure CSI from the STA to the AP, and measure CSI from the AP to the STA. In addition, both the first apparatus and the second apparatus respectively set a secure sensing enable field in a request frame and a secure sensing enable field in a response frame to 1, to determine, through negotiation, that the AP performs channel estimation based on a field different from a secure LTF field. Because the AP and the STA each need to send an NDP frame, the STA uses a secure sensing parameters exchange field to carry a security parameter of a second field, and the AP sets the secure sensing parameters exchange field to 1, to make a response indicating to agree to perform channel estimation based on the second field. Therefore, the AP may generate the second field based on the security parameter of the second field, and send, to the STA, an NDP frame that carries the second field.

As shown in FIG. 9(c), the STA sends an NDPA frame to the AP, to announce, to the AP, that the STA is to send an NDP frame that carries the secure LTF field, and then the STA sends, to the AP, the NDP frame that carries the secure LTF field. After receiving the NDP frame, the AP performs channel estimation based on the received secure LTF field and the second field generated based on the security parameter the second field, and feeds back, to the STA by using a CSI feedback frame, CSI obtained through channel estimation. The STA generates the second field based on the security parameter of the second field, and then parses the CSI based on the second field and the sent secure LTF field, to obtain the CSI from the STA to the AP. The AP sends, to the STA, an NDP frame that carries the second field, and the STA performs channel estimation based on the received second field and the second field generated based on the security parameter of the second field, to obtain the CSI from the AP to the STA. Further, the STA performs precise sensing based on the CSI from the AP to the STA and the CSI from the STA to the AP.

Scenario 4: The first apparatus is an AP, the second apparatus is a STA that does not have a capability of generating a secure LTF field, and the STA and the AP perform unilateral interaction.

A flowchart of interaction when the first apparatus is an AP, the second apparatus is a STA that does not have a capability of generating the secure LTF field, and the STA and the AP perform bilateral interaction is shown in FIG. 9(d).

In this scenario, both the STA and the AP respectively set a secure sensing enable field in a request frame and a secure sensing enable field in a response frame to 1 in a negotiation stage, to determine, through negotiation, that the AP performs channel estimation based on a field different from the secure LTF field or a secure TRN field. Because the STA does not have a capability of generating the secure LTF field, the AP and the STA set an additional secure LTF field in the request frame and an additional secure LTF field in the response frame to 1 in the negotiation stage, to determine, through negotiation, that the STA that does not have a capability of generating the secure LTF field is allowed to perform channel estimation based on the field different from the secure LTF field. That is, the AP allows the STA that does not have a capability of generating the secure LTF field to join measurement and sensing of the AP. In this manner, the STA that has a limited capability is helped join measurement and sensing of the AP. In addition, because the STA does not have a capability of generating the secure LTF field, the STA cannot generate a second field based on a security parameter of the second field. Therefore, the AP and the STA need to determine, through negotiation in the negotiation stage, not to exchange a security parameter of the secure LTF field. To be specific, the AP sets a secure sensing parameters exchange field in the request frame to 0, to request not to exchange the security parameter of the secure LTF field; and the STA needs to set a secure sensing parameters exchange field in the response frame to 1, to make a response indicating to agree not to exchange the security parameter of the secure LTF field.

As shown in FIG. 9(d), the STA sends an NDPA frame to the AP, to notify the AP to send an NDP frame that carries the secure LTF field. Therefore, the AP sends, to the STA, the NDP frame that carries the secure LTF field used to perform channel estimation. The STA performs channel estimation based on the received secure LTF field and a preset LTF field, and feeds back, to the AP, CSI obtained through channel estimation. The AP parses the received CSI based on the sent secure LTF field and the preset LTF field, to obtain the CSI from the AP to the STA. Further, the AP performs sensing based on the CSI.

### II. TB mode

Scenario 2.1: The first apparatus is a STA, the second apparatus is an AP, and the STA and the AP perform unilateral interaction.

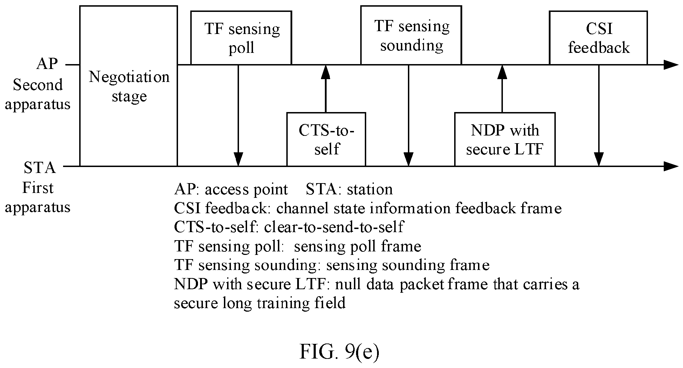

A flowchart of interaction when the first apparatus is a STA, the second apparatus is an AP, and the STA and the AP perform unilateral interaction is shown in FIG. 9(e).

In this scenario, both the STA and the AP respectively set a secure sensing enable field in a request frame and a secure sensing enable field in a response frame to 1 in a negotiation stage, to determine, through negotiation, that the AP performs channel estimation based on a field different from a secure LTF field. The STA and the AP may determine, through negotiation in the negotiation stage, not to exchange a security parameter of the secure LTF field. To be specific, the STA sets a secure sensing parameters exchange field in the request frame to 0, to request not to exchange the security parameter of the secure LTF field. The STA needs to set a secure sensing parameters exchange field in the response frame to 1, to make a response indicating to agree not to exchange the security parameters of the secure LTF field.

As shown in FIG. 9(e), the AP sends a TF sensing poll to the STA, to send a poll to the STA. The STA returns CTS-to-self to the AP, to determine whether the STA can participate in a session. When the AP determines that the STA participates in the session, the AP may send TF sensing sounding to the STA, to trigger the STA to send an NDP frame that carries the secure LTF field. After receiving the NDP frame that carries the secure LTF field, because the AP determines, through negotiation in the negotiation stage, not to exchange the security parameter of the first field, the AP performs channel estimation based on the received secure LTF field and a preset LTF field, and feeds back, to the STA, CSI obtained through channel estimation. The STA parses the CSI based on the sent secure LTF field and the preset LTF field, to obtain CSI from the STA to the AP. Further, the STA performs sensing based on the CSI.

Scenario 2.2: The first apparatus is an AP, the second apparatus is a STA, and the STA and the AP perform bilateral interaction.

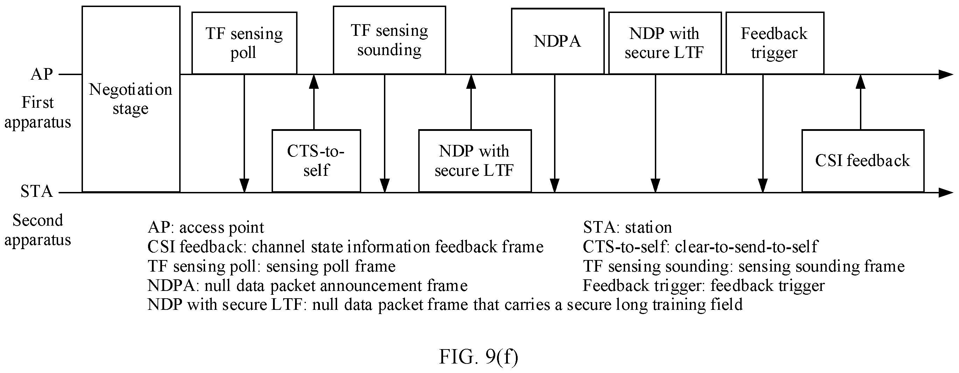

A schematic flowchart of interaction when the first apparatus is an AP, the second apparatus is a STA, and the STA and the AP perform bilateral interaction is FIG. 9(f).

In this scenario, both the STA and the AP respectively set a secure sensing enable field in a request frame and a secure sensing enable field in a response frame to 1 in a negotiation stage, to determine, through negotiation, that the STA performs channel estimation based on a field different from a secure LTF field. Because the AP and the STA each need to send an NDP frame, the AP uses a secure sensing parameters exchange field to carry a security parameter of a second field, and the STA sets the secure sensing parameters exchange field to 1, to make a response indicating to agree to perform channel estimation based on the second field. Therefore, the STA may generate the second field based on the security parameter of the second field, and send, to the AP, an NDP frame that carries the second field.

As shown in FIG. 9(f), the AP sends a TF sensing poll to the STA, to send a poll to the STA. The STA returns CTS-to-self to the AP, to determine whether the STA can participate in a session. When the AP determines that the STA participates in the session, the AP may send TF sensing sounding to the STA, to trigger the STA to send an NDP frame that carries the second field. The AP performs channel estimation based on the received secure LTF field and the second field generated based on the security parameter of the second field, to obtain CSI from the STA to the AP. The AP sends an NDPA frame to the STA, to announce, to the STA, that an NDP frame that carries the secure LTF field is to be sent. Then, the AP sends, to the STA, the NDP frame that carries the secure LTF field used to perform channel estimation, and then sends a feedback trigger frame to the STA, to trigger the STA to feed back CI obtained through channel estimation. After receiving the NDP frame from the AP, the STA generates the second field based on the security parameter that is of the second field and that is received in the negotiation stage, performs channel estimation based on the received secure LTF field and the received second field, and feeds back, to the AP, CSI obtained through channel estimation. The AP generates the second field based on the security parameter of the second field, and then parses the received CSI based on the second field and the sent first field, to obtain CSI from the AP to the STA.

Scenario 2.3: The first apparatus is a STA, the second apparatus is an AP, and the STA and the AP perform bilateral interaction.

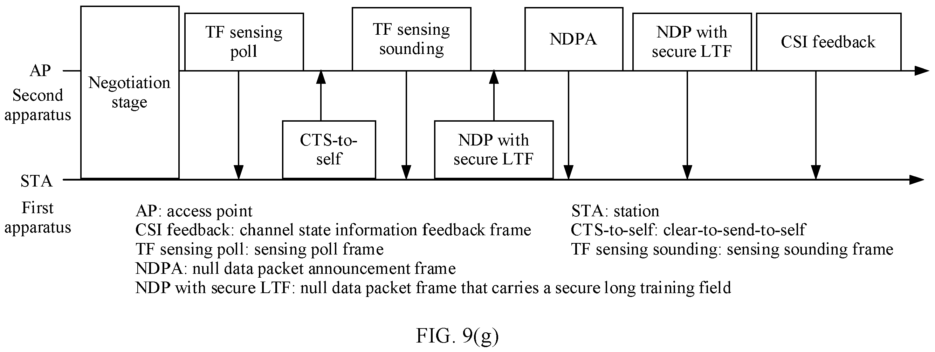

A flowchart of interaction when the first apparatus is a STA, the second apparatus is an AP, and the STA and the AP perform bilateral interaction is shown in FIG. 9(g).

In this scenario, both the STA and the AP respectively set a secure sensing enable field in a request frame and a secure sensing enable field in a response frame to 1 in a negotiation stage, to determine, through negotiation, that the AP performs channel estimation based on a field different from a secure LTF field. Because the AP and the STA each need to send an NDP frame, the STA uses a secure sensing parameters exchange field to carry a security parameter of a second field, and the AP sets the secure sensing parameters exchange field to 1, to make a response indicating to agree to perform channel estimation based on the second field. Therefore, the AP may generate the second field based on the security parameter of the second field, and send, to the STA, an NDP frame that carries the second field.

As shown in FIG. 9(g), a procedure of this scenario is basically the same as a procedure of Scenario 2.2, except that in a feedback stage, the STA is the first apparatus, and therefore, the AP does not need to send a feedback trigger frame to the STA; instead, needs to perform channel estimation based on the received secure LTF field and the second field generated based on the security parameter of the second field, and feed back, to the STA by using a CSI feedback frame, CSI obtained through channel estimation. The STA parses the CSI based on the sent secure LTF field and the second field generated based on the security parameter of the second field, to obtain CSI from the STA to the AP.

Scenario 2.4: The first apparatus is an AP, the second apparatus is a STA that does not have a capability of generating a secure LTF field, and the STA and the AP perform unilateral interaction.

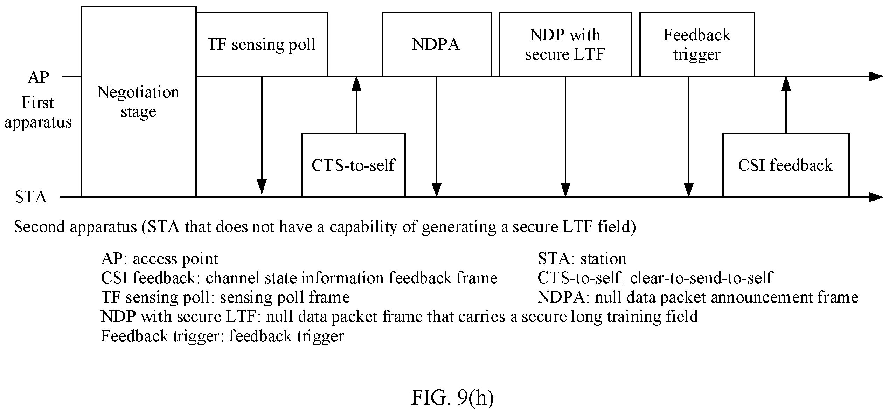

A flowchart of interaction when the first apparatus is an AP, the second apparatus is a STA that does not have a capability of generating the first field, and the STA and the AP perform unilateral interaction is shown in FIG. 9(h).

In this scenario, both the STA and the AP respectively set a secure sensing enable field in a request frame and a secure sensing enable field in a response frame to 1 in a negotiation stage, to determine, through negotiation, that the STA performs channel estimation based on a field different from a secure LTF field. Because the STA does not have a capability of generating the secure LTF field, the AP and the STA set an additional secure LTF field in the request frame and an additional secure LTF field in the response frame to 1 in the negotiation stage, to determine, through negotiation, that the STA that does not have a capability of generating the secure LTF field is allowed to participate in measurement and sensing of the AP. That is, the AP allows the STA that does not have a capability of generating the secure LTF field to join measurement and sensing of the AP. In addition, because the STA does not have a capability of generating the secure LTF field, the STA cannot generate a second field based on a security parameter of the second field. Therefore, the AP and the STA need to determine, through negotiation in the negotiation stage, not to exchange a security parameter of the secure LTF field. To be specific, the AP needs to set a secure sensing parameters exchange field in the request frame to 0, to request not to exchange the security parameter of the secure LTF field; and the STA needs to set a secure sensing parameters exchange field in the response frame to 1, to make a response indicating to agree not to exchange the security parameter of the secure LTF field. In this case, resources can be reduced.

As shown in FIG. 9(h), the AP sends a TF sensing poll to the STA, to send a poll to the STA. The STA returns CTS-to-self to the AP, to determine whether the STA can participate in a session. When the AP determines that the STA participates in the session, the AP sends TF sensing sounding to the STA, to announce, to the STA, that an NDP frame that carries the secure LTF field is to be sent. Then, the AP sends, to the STA, the NDP frame that carries the secure LTF field, and then sends a feedback trigger frame to the STA. After receiving the NDP frame, the STA performs channel estimation based on the received secure LTF field and a preset LTF field, and feeds back, to the AP by using CSI feedback frame, CSI obtained through channel estimation. The AP parses the CSI based on the preset LTF field and the sent secure LTF field, to obtain CSI from the STA to the AP.

It can be learned that, when the AP and the STA perform measurement and sensing on the low frequency band, in different scenarios, the AP may feed back, to the STA, the CSI obtained by performing channel estimation based on the received secure LTF field and the field different from the secure LTF field, or the STA may feed back, to the AP, the CSI obtained by performing channel estimation based on the received secure LTF field and the field different from the secure LTF field, to ensure security of feedback information in the feedback stage.

### V Information feedback method 200

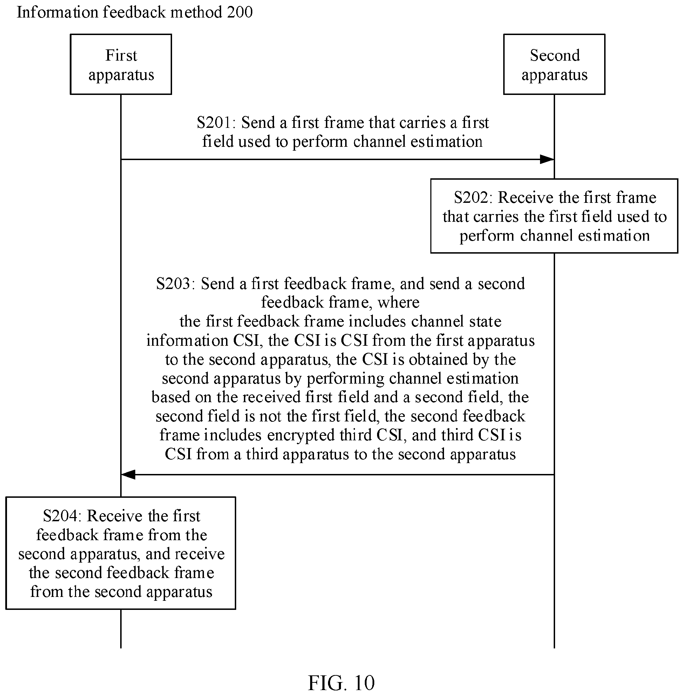

An embodiment of this application further provides an information feedback method 200. FIG. 10 is a diagram of interaction of the information feedback method 200. The information feedback method 200 is described from a perspective of interaction between a first apparatus and a second apparatus. In the information feedback method 200, the first apparatus is a STA, and the second apparatus is an AP. The information feedback method 200 includes but is not limited to the following steps:
S201: The first apparatus sends, to the second apparatus, a first frame that carries a first field used to perform channel estimation.
S202: The second apparatus receives the first frame that carries the first field used to perform channel estimation.

For implementations of S201 and S202, refer to the implementations of S101 and S 102. Details are not described again.

In an optional implementation, before the first apparatus sends, to the second apparatus, the first frame that carries the first field used to perform channel estimation, the first apparatus may further send a request frame to the second apparatus. The request frame is used to request the second apparatus to measure third CSI from a third apparatus to the second apparatus, and encrypt the third CSI and feed back the encrypted third CSI to the first apparatus. Therefore, the second apparatus sends a response frame to the first apparatus. The response frame is used to respond to the request frame. For example, the response frame is used to make a response indicating whether to determine to measure the third CSI from the third apparatus to the second apparatus, and encrypt the third CSI and feed back the encrypted third CSI to the first apparatus. For example, the response frame is used by the second apparatus to: when receiving a second frame that carries a secure LTF field and that is from the third apparatus, perform channel estimation based on the received secure LTF field and a field different from the secure LTF field, to obtain CSI from the second apparatus to the third apparatus, encrypt the CSI based on the security parameter of the second field, and then feed back encrypted CSI to the first apparatus.

In other words, before the first apparatus and the second apparatus perform measurement and sensing, the first apparatus and the second apparatus may determine, through negotiation by using the request frame and the response frame, that the second apparatus assists in measuring the third CSI from the second apparatus to the third apparatus, and forwards the measured third CSI to the first apparatus, so that the first apparatus obtains CSI of a plurality of channels, and then performs more precise sensing.

In this embodiment of this application, the request frame may further include the security parameter of the second field, and the response frame may be further used to respond to the request frame. For example, the response frame is used to make a response indicating whether to perform channel estimation based on the second field. For example, the response frame is used by the second apparatus to: when receiving the first frame that carries the first field and that is from the first apparatus, perform channel estimation based on the received first field and the second field, and feed back CSI obtained through channel estimation to the first apparatus.

In this embodiment of this application, for another implementation of the request frame and the response frame, refer to the descriptions in the information feedback method 100. Details are not described again.

S203: The second apparatus sends a first feedback frame to a first apparatus, and sends a second feedback frame to the first apparatus. The first feedback frame includes channel state information CSI, the CSI is CSI from the first apparatus to the second apparatus, the CSI is obtained by the second apparatus by performing channel estimation based on the received first field and the second field, and the second field is not the first field. The second feedback frame includes encrypted third CSI, and third CSI is CSI from the third apparatus to the second apparatus.

S204: The first apparatus receives the first feedback frame from the second apparatus, and receives the second feedback frame from the second apparatus.

It may be understood that after receiving the first frame from the first apparatus, the second apparatus performs channel estimation based on the received first field and the second field, and feeds back, to the first apparatus in a form of the first feedback frame, CSI obtained through channel estimation. Therefore, after receiving the first feedback frame, the first apparatus parses the CSI in the first feedback frame based on the sent first field and the second field, to obtain the CSI from the first apparatus to the second apparatus.

In addition, the first apparatus and the second apparatus negotiate in a negotiation stage, to determine, through negotiation, that the second apparatus measures the CSI from the third apparatus to the second apparatus, and feeds back the CSI to the first apparatus. Therefore, the second apparatus triggers the third apparatus to send a third frame that carries the secure LTF or a secure TRN field, and feeds back, to the first apparatus by using the encrypted CSI, the obtained third CSI from the third apparatus to the second apparatus, so that the first apparatus obtains the third CSI from the third apparatus to the second apparatus.

When the second apparatus negotiates with the third apparatus, the second apparatus sends a security parameter of the secure LTF field or a security parameter of the secure TRN field to the third apparatus. The second apparatus generates the secure LTF field based on the security parameter of the secure LTF field, or generates the secure TRN field based on the security parameter of the secure TRN field, and then sends, to the third apparatus, the first frame that carries the secure LTF field or the secure TRN field. Further, the second apparatus may perform channel estimation based on a received field and the secure LTF field or the secure TRN field generated based on a security parameter from the second apparatus, to obtain the third CSI from the third apparatus to the second apparatus. The second apparatus encrypts the third CSI based on the second field generated based on the security parameter that is of the second field and that is sent by the first apparatus, and feeds back the encrypted third CSI to the first apparatus by using the second feedback frame. Therefore, the first apparatus parses the encrypted CSI based on the second field generated based on the security parameter of the second field, to obtain the CSI from the third apparatus to the second apparatus.

That the second apparatus encrypts the third CSI based on the second field generated based on the security parameter of the second field sent by the first apparatus may mean that the second apparatus multiplies the security parameter of the second field by the third CSI, to obtain the encrypted third CSI. Alternatively, the second apparatus performs another mathematical operation on the third CSI and the second field generated based on the security parameter of the second field, to obtain the encrypted third CSI. In this embodiment of this application, an encryption manner in which the second apparatus encrypts the third CSI based on the second field generated based on the security parameter of the second field is not limited.

In an optional implementation, the second apparatus may further send, to the first apparatus and the third apparatus, a second frame that carries a second field. After receiving the second frame that carries the second field, the first apparatus performs channel estimation based on the received second field and the second field generated based on the security parameter of the second field, to obtain CSI from the second apparatus to the first apparatus.

When the second apparatus and the third apparatus determine, through negotiation in the negotiation stage, not to exchange the security parameter of the second field, after receiving the second frame that carries the second field, the third apparatus performs channel estimation based on the received second field and a preset LTF field or a preset TRN field, and feeds back, to the second apparatus in a form of a third feedback frame, CSI obtained through channel estimation. The second apparatus forwards the third feedback frame to the first apparatus. After receiving the third feedback frame, the first apparatus parses the CSI in the third feedback frame based on the second field and the preset LTF field or the preset TRN field, to obtain fourth CSI from the second apparatus to the third apparatus.

When the second apparatus sends a parameter different from the security parameter of the second field to the third apparatus in the negotiation stage, after receiving the second frame that carries the second field, the third apparatus performs channel estimation based on the received second field and a field generated based on the parameter different from the security parameter of the second field, and feeds back, to the second apparatus by using a fourth feedback frame, CSI obtained through channel estimation. Therefore, the second apparatus parses the CSI in the fourth feedback frame based on the sent second field and the field generated based on the parameter different from the security parameter of the second field, to obtain the fourth CSI from the second apparatus to the third apparatus. Then, the second apparatus encrypts the fourth CSI based on the security parameter of the second field, and sends encrypted fourth CSI to the first apparatus by using the third feedback frame. Therefore, the first apparatus parses the third feedback frame based on the security parameter of the second field, to obtain the fourth CSI from the second apparatus to the third apparatus.

It can be learned that, in this embodiment of this application, the first apparatus requests the second apparatus to assist in measuring and feeding back the CSI from the third apparatus to the second apparatus, and the second apparatus feeds back, to the first apparatus, the CSI from the first apparatus to the second apparatus. The CSI fed back by the second apparatus is encrypted CSI. Even if an eavesdropper eavesdrops feedback information in a feedback process of the second apparatus, the eavesdropper cannot obtain CS from the third apparatus to the second apparatus or the CSI from the first apparatus to the second apparatus. Therefore, in this feedback manner, information security in a feedback stage can be ensured.

The following describes a plurality of implementations of the information feedback method 200 by using an example in which a first apparatus and a second apparatus perform measurement and sensing on a low frequency band and with reference to a TB ranging mode, unilateral interaction, multilateral interaction, and different communication scenarios when the first apparatus is a STA 1, the second apparatus is an AP, and the third apparatus is a STA2.

### I. TB ranging mode

Scenario 1.1: The AP performs unilateral interaction with the STA 1 and the STA 2.

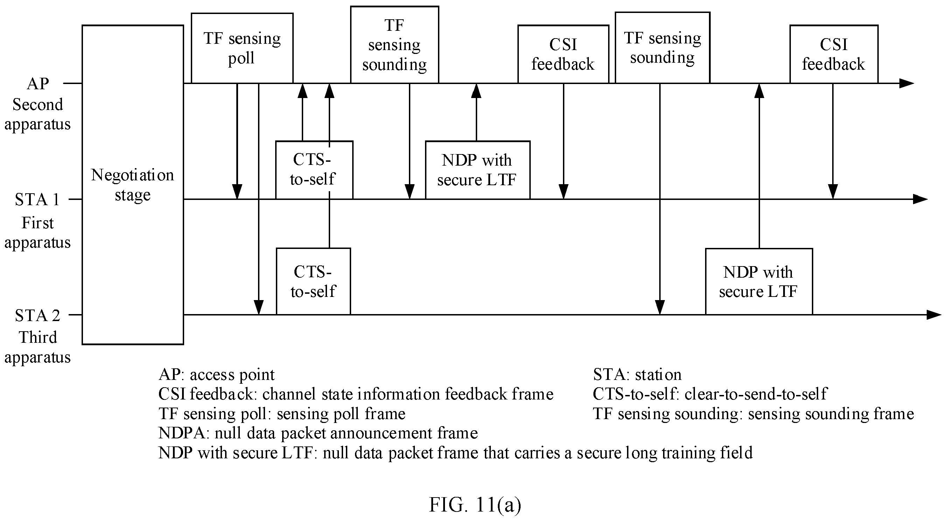

A schematic flowchart of interaction between the AP and each of the STA 1 and the STA 2 is shown in FIG. 11(a).

In this scenario, the STA 1 and the AP determine, through negotiation in a negotiation stage, that the AP may perform channel estimation based on an LTF field different from a secure LTF field. In addition, the STA 1 sends a security parameter of a second field to the AP in the negotiation stage. The second field is different from the secure LTF field. The AP sets a secure sensing parameters exchange field in a response frame to 1, to make a response indicating to agree to perform channel estimation based on the second field. The STA 2 and the AP determine, through negotiation in the negotiation stage, that the STA 2 may perform channel estimation based on a field different from the second field. When the STA 2 negotiates with the AP, the AP sends a security parameter of the secure LTF field to the STA 2, so that the STA 2 generates the secure LTF field based on the security parameter of the secure LTF field, and sends, to the AP, an NDP frame that carries the secure LTF field.

As shown in FIG. 11(a), the AP sends a TF sensing poll to the STA 1 and the STA 2, to send a poll to the STA 1 and the STA 2. The STA 1 and the STA 2 return CTS-to-self to the AP, to determine whether the STA 1 and the STA 2 can participate in a session. When the AP determines that the STA 1 and the STA 2 participate in the session, the AP sends TF sensing sounding to the STA 1 and the STA 2, to trigger the STA 1 and the STA 2 to send the NDP frame. The STA 1 sends, to the AP, the NDP frame that carries the secure LTF field, and the AP performs channel estimation based on the received secure LTF field and the LTF field generated based on the security parameter of the LTF field sent by the STA 1, to obtain CSI from the STA 1 to the AP. Then, the AP feeds back the CSI to the STA 1. The STA 1 parses the CSI fed back by the AP based on the sent secure LTF field and the LTF field generated based on the security parameter of the LTF field, to obtain the CSI from the STA 1 to the AP.

In the negotiation stage with the STA 2, the AP sends the security parameter of the secure LTF field to the STA 2. Therefore, the STA 2 generates the secure LTF field based on the security parameter of the secure LTF field, and the STA 2 sends, to the AP, the NDP frame that carries the secure LTF field. After receiving the NDP frame, the AP performs channel estimation based on the received secure LTF field and the secure LTF field generated based on the security parameter of the secure LTF field, to obtain CSI from the STA 2 to the AP. Then, the AP encrypts the CSI based on the security parameter of the LTF field sent by the STA 1, and feeds back encrypted CSI to the STA 1. Therefore, the STA 1 parses the encrypted CSI based on the security parameter of the LTF field, to obtain the CSI from the STA 2 to the AP.

It can be learned that, the AP feeds back, to the STA 1, the CSI from the STA 1 to the AP and the CSI from the STA 2 to the AP, and the AP encrypts and feeds back the two pieces of CSI, to ensure security in the feedback stage when the AP provides feedback. Further, the AP may perform sensing based on the CSI from the STA 1 to the AP and the CSI from the STA 2 to the AP.

Scenario 1.2: The AP performs bilateral interaction with the STA 1 and the STA 2.

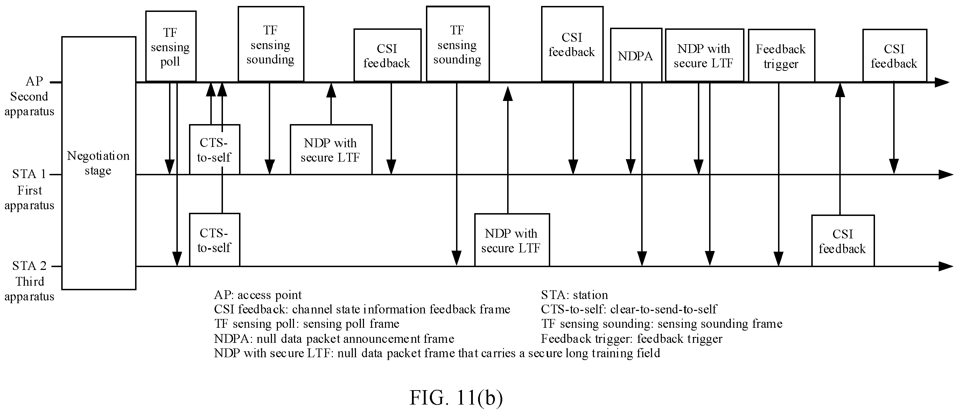

A schematic flowchart of interaction between the AP and each of the STA 1 and the STA 2 is shown in FIG. 11(b).

In this scenario, transmission between the STA 1 and the AP, transmission between the STA2 and the AP, and feedback provided by the AP to the STA 1 are the same as those in an interaction procedure in FIG. 11(a). A difference lies in that, the AP may further send an NDPA frame to the STA 1 and the STA 2, to announce, to the STA 1 and the STA 2, that an NDP frame that carries a second field is to be sent. Then, the AP sends, to the STA 1 and the STA 2, the NDP frame that carries the second field. The second field is generated by the AP based on a security parameter of the second field from the STA 1. After receiving the NDP frame sent by the AP, the STA 1 may perform channel estimation based on the received second field and the second field generated based on the security parameter of the second field, to obtain CSI from the AP to the STA.

Then, the AP sends a feedback trigger frame to the STA 2, to trigger the STA 2 to feed back CSI obtained through channel estimation. If the STA 2 and the AP determine, through negotiation in the negotiation stage, not to exchange the security parameter of the second field, after receiving the NDP frame from the AP, the STA 2 performs channel estimation based on a received secure LTF field and a preset LTF field, and feeds back, to the AP, CSI obtained through channel estimation. The AP forwards the CSI to the STA 1. The STA 1 parses CSI in a CSI feedback frame based on the preset LTF field and the second field generated based on the security parameter of the second field, to obtain CSI from the AP to the STA 2.

If the AP sends a parameter different from the security parameter of the second field to the STA 2 in the negotiation stage, and the STA 2 agrees to perform channel estimation based on a field generated based on the parameter different from the security parameter of the second field, after receiving the NDP frame from the AP, the STA 2 performs channel estimation based on the received second field and the field generated based on the parameter different from the security parameter of the second field, and feeds back, to the AP by using a CSI feedback frame, CSI obtained through channel estimation. The AP parses the CSI based on the second field generated based on the security parameter of the second field and the field generated based on the parameter different from the security parameter of the second field, to obtain CSI from the STA 2 to the AP. Then, the AP encrypts the CSI from the STA 2 to the AP based on the second field generated based on the security parameter of the second field, and feeds back encrypted CSI to the STA 1. Therefore, the STA 1 parses the encrypted CSI based on the second field generated based on the security parameter of the second field, to obtain the CSI from the STA 2 to the AP.

It can be learned that, in this scenario, the AP not only feeds back, to the STA 1, the CSI from the STA 2 to the AP and CSI from the STA 1 to the AP, but also feeds back, to the STA 2, the CSI from the AP to the STA 2 and the CSI from the STA 2 to the AP, so that the STA 1 can perform more precise sensing based on a plurality of pieces of CSI.

Scenario 1.3: The AP performs unilateral interaction with the STA 1, the STA 2, and the STA 3, the STA 2 is a STA that has a capability of generating a first field, and the STA 3 is a STA that does not have a capability of generating the first field.

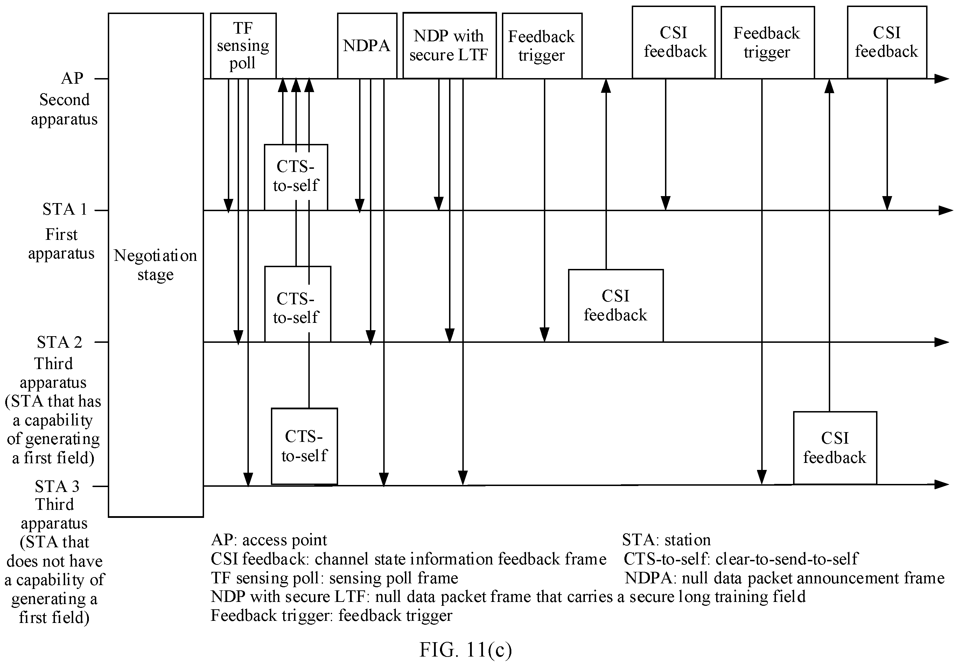

A schematic flowchart of interaction between the AP and each of the STA 1, the STA 2, and the STA 3 is shown in FIG. 11(c).

In this scenario, the STA 1 and the AP determine, through negotiation in a negotiation stage, that an NDP frame that carries a secure LTF field may be received or sent. In addition, the AP sends a security parameter of the secure LTF field to the STA 1 in the negotiation stage, so that the STA 1 may perform channel estimation based on the secure LTF field generated based on the security parameter of the secure LTF field, to obtain CSI from the AP to the STA 1.

The STA 2 and the AP determine, through negotiation in the negotiation stage, that the STA 2 may perform channel estimation based on an LTF field different from the secure LTF field. The AP and the STA 2 may determine, through negotiation by using a secure sensing parameters exchange field in the negotiation stage, not to exchange the security parameter of the secure LTF field. To be specific, the AP sets the secure sensing parameters exchange field to 0. The STA 2 sets a secure sensing parameters exchange field to 1, to make a response indicating to agree not to exchange the security parameters of the secure LTF field. Alternatively, the AP may send a security parameter of a second field to the STA2 by using a secure sensing parameters exchange field in the negotiation stage, and the STA 2 sets a secure sensing parameters exchange field to 1, to make a response indicating to agree to perform channel estimation based on an LTF field generated based on the security parameter of the second field.

The STA 3 and the AP determine, through negotiation in the negotiation stage, that the STA 3 may perform channel estimation based on the LTF field different from the secure LTF field. The AP and the STA 3 set an additional secure LTF field in a request frame and an additional secure LTF field in a response frame to 1 in the negotiation stage, to determine, through negotiation, that the STA that does not have a capability of generating the secure LTF field is allowed to participate in measurement and sensing of the AP. That is, the AP allows the STA that does not have a capability of generating the secure LTF field to join measurement and sensing of the AP. In addition, the STA 3 is a STA that does not have a capability of generating the secure LTF field. Therefore, the AP and the STA 2 may determine, through negotiation by using a secure sensing parameters exchange field in the negotiation stage, not to exchange the security parameter of the secure LTF field. To be specific, the AP sets the secure sensing parameters exchange field to 0. The STA 2 sets a secure sensing parameters exchange field to 1, to make a response indicating to agree not to exchange the security parameters of the secure LTF field.

As shown in FIG. 11(c), the AP sends a TF sensing poll to the STA 1, the STA 2, and the STA 3, to send a poll to the STA 1, the STA 2, and the STA 3. The STA 1, the STA 2, and the STA 3 return CTS-to-self to the AP, to determine whether the STA 1, the STA 2, and the STA 3 can participate in a session. When the AP determines that the STA 1, the STA 2, and the STA 3 participate in the session, the AP sends an NDPA frame to the STA 1, the STA 2, and the STA 3, to announce, to the STA 1, the STA 2, and the STA 3, that an NDP frame that carries the secure LTF field is to be sent. The AP sends, to the STA 1, the STA 2, and the STA 3, the NDP frame that carries the secure LTF field, and then the AP sends a feedback trigger frame to the STA 2 and the STA 3, to trigger the STA 2 and the STA 3 to feed back, to the AP, CSI obtained through channel estimation.

The STA 1 performs channel estimation based on the received secure LTF field and the secure LTF field generated based on the security parameter of the secure LTF field, to obtain the CSI from the AP to the STA 1.

When the STA 2 and the AP determine, through negotiation in the negotiation stage, not to exchange the security parameter of the secure LTF field, after receiving the NDP frame from the AP, the STA 2 performs channel estimation based on the received secure LTF field and a preset LTF field, and feeds back, to the AP in a form of a CSI feedback frame, CSI obtained through channel estimation. Then, the AP sends the CSI feedback frame to the STA 1. Therefore, the STA 1 parses the CSI in the CSI feedback frame based on the preset LTF field and the secure LTF field generated based on the security parameter of the secure LTF field, to obtain CSI from the AP to the STA 2.

When the AP sends the security parameter of the second field to the STA 2 in the negotiation stage, after receiving the NDP frame from the AP, the STA 2 performs channel estimation based on the received second field and the second field generated based on the security parameter of the second field, and feeds back, to the AP by using a CSI feedback frame, the CSI obtained through channel estimation. The AP parses CSI in the CSI feedback frame based on the sent secure LTF field and the second field, to obtain the CSI from the AP to the STA 2. Then, the AP encrypts the CSI from the AP to the STA 2 based on the security parameter of the secure LTF field, and sends encrypted CSI to the STA 1. The STA 1 parses the encrypted CSI based on the secure LTF field, to obtain CSI from the AP to the STA 2.

After the STA 3 and the AP determine, through negotiation in the negotiation stage, not to exchange the security parameter of the secure LTF field, and the STA 3 receives the NDP frame from the AP, the STA 3 performs channel estimation based on the received secure LTF field and the preset LTF field, and feeds back, to the AP in a form of a CSI feedback frame, CSI obtained through channel estimation. Then, the AP sends the CSI feedback frame to the STA 1. Therefore, the STA 1 parses the CSI in the CSI feedback frame based on the preset LTF field and the secure LTF field generated based on the security parameter of the secure LTF field, to obtain CSI from the AP to the STA 3.

In another optional implementation, as shown in FIG. 11(a), the AP and the STA 1 determine, through negotiation, to exchange a security parameter of a secure LTF field #1, and the AP and the STA 2 also determine, through negotiation, to exchange a security parameter of a secure LTF field #2. After receiving an NDP frame from the STA 1, the AP performs channel estimation based on a received secure LTF field and the secure LTF field generated based on the security parameter of the secure LTF field #1, to obtain CSI from the STA 1 to the AP. After receiving an NDP frame from the STA 2, the AP performs channel estimation based on a received secure LTF field and the secure LTF field generated based on the security parameter of the secure LTF field #2, to obtain CSI from the STA 2 to the AP. Then, the AP encrypts the CSI from the STA 1 to the AP and the CSI from the STA 2 to the AP based on the security parameter of the secure LTF field #1 exchanged with the STA 1, and sends encrypted CSI to the STA 1 by using a CSI feedback frame. After receiving the encrypted CSI, the STA 1 parses the encrypted CSI based on the security parameter of the secure LTF field #1 exchanged with the AP, to obtain the CSI from the STA 1 to the AP and the CSI from the STA 2 to the AP.

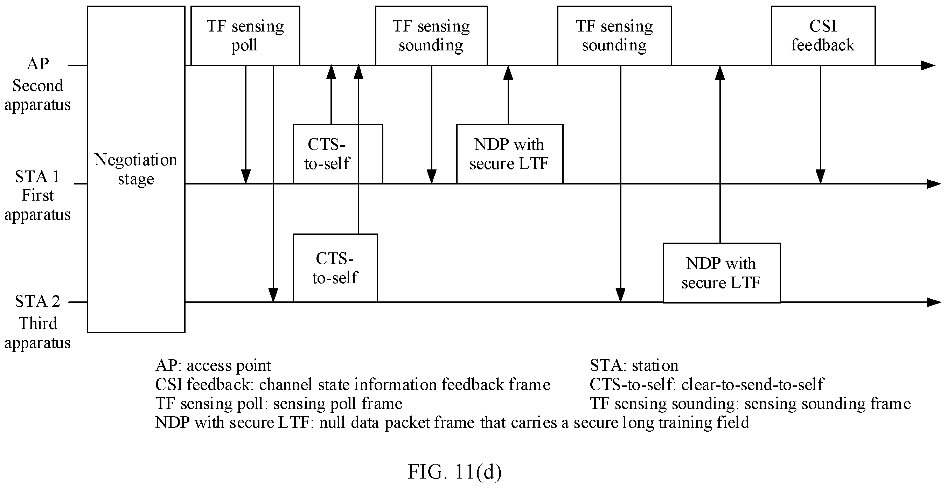

It can be learned that, if the AP and the STA 1 determine, through negotiation, to exchange the security parameter of the secure LTF field #1, and the AP and the STA 2 determine, through negotiation, to exchange the security parameter of the secure LTF field #2, as shown in FIG. 11(d), the AP may combine and feed back, to the STA 1, the CSI from the STA 1 to the AP and the CSI from the STA 2 to the AP, to reduce signaling overheads. When the AP provides feedback, encrypted CSI is fed back. Therefore, information security in the feedback stage may also be ensured.

In still another optional implementation, in a scenario shown in FIG. 11(b), the AP may alternatively feed back, to the STA 1 in a combination-based feedback manner shown in FIG. 11(d), the CSI from the STA 1 to the AP and the CSI from the STA 2 to the AP. For the combination-based feedback manner, refer to the foregoing combination manner. Details are not described again.

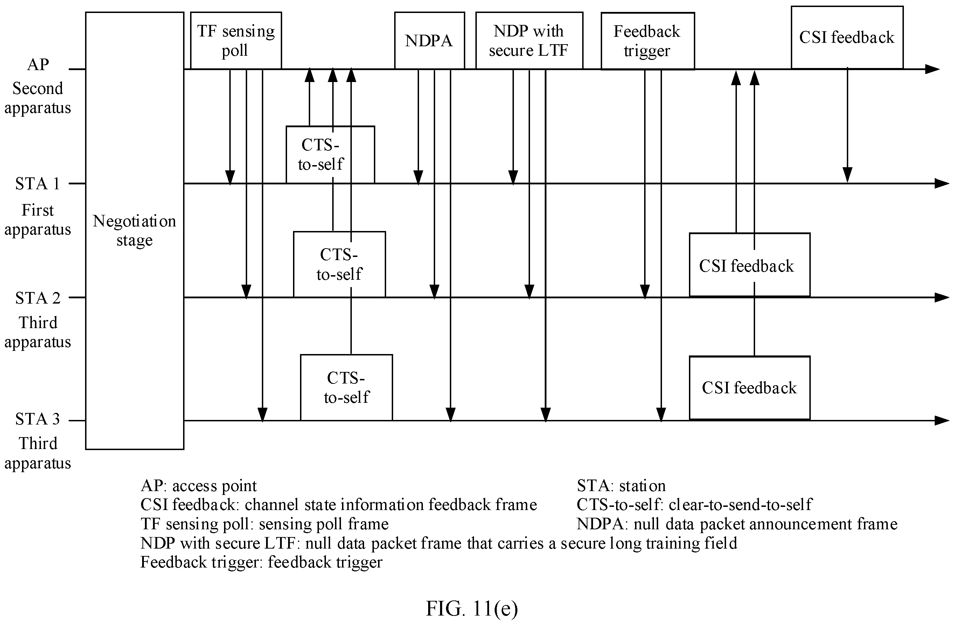

In still another optional implementation, in a scenario shown in FIG. 11(c), after receiving a feedback frame from the STA 1, the AP parses CSI in the feedback frame based on a secure LTF field and a preset LTF field, to obtain CSI from the AP to the STA 1. Alternatively, the AP parses CSI in a feedback frame based on a secure LTF field and an LTF field generated based on a security parameter of the LTF field exchanged with the STA 1, to obtain CSI from the AP to the STA 1. After receiving a feedback frame from the STA 2, the AP parses CSI in the feedback frame based on a received secure LTF field and a preset LTF field, to obtain CSI from the AP to the STA 2. As shown in FIG. 11(e), the AP encrypts the CSI from the AP to the STA and the CSI from the AP to the STA 2 based on the security parameter of the secure LTF field exchanged with the STA 1, to obtain encrypted CSI, and feeds back the encrypted CSI to the STA 1. After receiving the encrypted CSI, the STA 1 parses the CSI based on the security parameter of the secure LTF field exchanged with the AP, to obtain the CSI from the AP to the STA 1 and the CSI from the AP to the STA 2. It can be learned that, the AP may alternatively combine and feed back, to the STA 1, the CSI from the AP to the STA 1 and the CSI from the AP to the STA 2, to reduce signaling overheads.

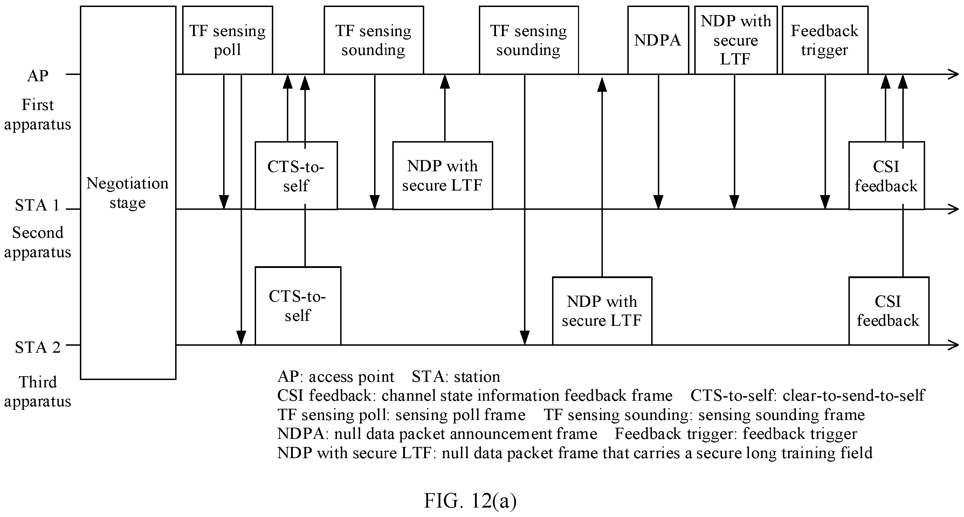

In still another optional implementation, when the first apparatus is an AP, the second apparatus is a STA 1, and the third apparatus is a STA 2, and the AP performs bilateral interaction with the STA 1 and the STA 2, a diagram of interaction between the AP and each of the STA 1 and the STA 2 is shown in FIG. 12(a). The AP and the STA 1 determine, through negotiation in a negotiation process, that the STA 1 may perform channel estimation based on an LTF field different from the secure LTF field. The AP and the STA 2 determine, through negotiation in a negotiation process, that the STA 2 may perform channel estimation based on an LTF field different from the secure LTF field.

As shown in FIG. 12(a), the AP sends a TF sensing poll to the STA 1 and the STA 2, to send a poll to the STA 1 and the STA 2. The STA 1 and the STA 2 return CTS-to-self to the AP, to determine whether the STA 1 and the STA 2 can participate in a session. When the AP determines that the STA 1 and the STA 2 participate in the session, the AP sends TF sensing sounding to the STA 1 and the STA 2, to trigger the STA 1 and the STA 2 to send the NDP frame. The STA 1 and the STA 2 each send, to the AP, an NDP frame that carries the secure LTF field. The AP separately performs channel estimation based on the received secure LTF field and secure LTF fields generated based on security parameters of the secure LTF fields sent by the STA 1 and the STA 2, to obtain the CSI from the STA 1 to the AP and the CSI from the STA 2 to the AP. The AP sends an NDPA frame to each of the STA 1 and the STA 2, to announce, to the STA 1 and the STA 2, that an NDP frame that carries the secure LTF field is to be sent. The AP sends, to each of the STA 1 and the STA 2, the NDP frame that carries the secure LTF field.

After receiving the NDP frame from the AP, the STA 1 performs channel estimation based on the received secure LTF field and the preset LTF or the second field generated based on the security parameter of the second field, and feeds back, to the AP, CSI obtained through channel estimation. After receiving a feedback frame from the STA 1, the AP parses CSI in the feedback frame based on the preset LTF field and the sent secure LTF field, to obtain the CSI from the AP to the STA 1; or parses CSI in the feedback frame based on the sent secure LTF field and the second field generated based on the security parameter of the second field, to obtain the CSI from the AP to the STA 1.

After receiving the NDP frame from the AP, the STA 2 performs channel estimation based on the received secure LTF field and the preset LTF or the second field generated based on the security parameter of the second field, and feeds back, to the AP, CSI obtained through channel estimation. After receiving a feedback frame from the STA 2, the AP parses CSI in the feedback frame based on the preset LTF field and the sent secure LTF field, to obtain the CSI from the AP to the STA 2; or parses CSI in the feedback frame based on the sent secure LTF field and the second field generated based on the security parameter of the second field, to obtain the CSI from the AP to the STA 2.

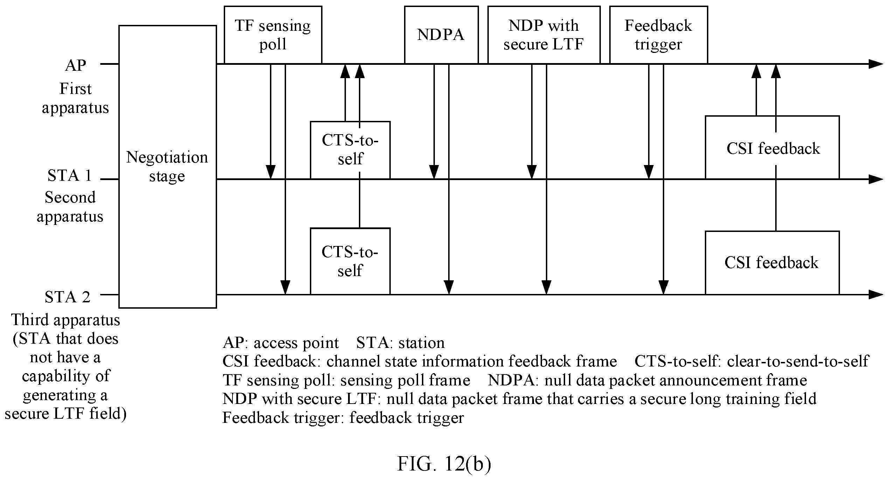

In still another optional implementation, when the first apparatus is an AP, the second apparatus is a STA 1, and the third apparatus is a STA 2 that does not have a capability of generating a secure LTF field, and the AP performs unilateral interaction with the STA 1 and the STA2, a diagram of interaction between the AP and each of the STA 1 and the STA 2 is shown in FIG. 12(b).

The AP and the STA 1 determine, through negotiation, that the STA 1 may perform channel estimation based on an LTF field different from the secure LTF field, and the AP and the STA 1 may determine, through negotiation, not to exchange the security parameter of the secure LTF field, or the AP sends the security parameter of the second field to the STA 1. The STA 2 is a STA that does not have a capability of generating the secure LTF field. Therefore, the AP and the STA 2 determine, through negotiation in the negotiation stage, that a STA that does not have a capability of generating the secure LTF field is allowed to join measurement and sensing of the AP, and the AP and the STA 2 determine, through negotiation, not to exchange the security parameter of the secure LTF field.

As shown in FIG. 12(b), the AP sends a TF sensing poll to the STA 1 and the STA 2, to send a poll to the STA 1 and the STA 2. The STA 1 and the STA 2 return CTS-to-self to the AP, to determine whether the STA 1 and the STA 2 can participate in a session. When the AP determines that the STA 1 and the STA 2 participate in the session, the AP sends an NDPA frame to each of the STA 1 and the STA 2, to announce, to the STA 1 and the STA 2, that an NDP frame that carries the secure LTF field is to be sent. The AP sends, to each of the STA 1 and the STA 2, the NDP frame that carries the secure LTF field. Then, the AP sends a feedback trigger frame to each of the STA 1 and the STA 2, to trigger the STA 1 and the STA 2 to feed back CSI obtained through channel estimation. After receiving the NDP frame from the AP, the STA 1 performs channel estimation based on the received secure LTF field and the preset LTF field or the second field generated based on the security parameter of the second field, and feeds back, to the AP, CSI obtained through channel estimation. The AP parses the CSI based on the sent secure LTF field and the preset LTF field or the second field generated based on the security parameter of the second field, to obtain the CSI from the AP to the STA 1. After receiving the NDP frame from the AP, the STA 2 performs channel estimation based on the received secure LTF field and the preset LTF field, and feeds back, to the AP, CSI obtained through channel estimation. The AP parses CSI in a CSI feedback frame based on the preset LTF field and the sent secure LTF field, to obtain the CSI from the AP to the STA 2.

An embodiment of this application further provides an information feedback method 300. In the information feedback method 300, a first apparatus sends, to a second apparatus, a first frame that carries a first field used to perform channel estimation. The second apparatus receives the first frame that carries the first field used to perform channel estimation. The second apparatus sends a complex sample of a secure LTF field or a secure TRN field to the first apparatus. The first apparatus receives the complex sample of the secure LTF field or the secure TRN field from the second apparatus. The first apparatus parses the complex sample of the secure LTF field based on the secure LTF field, to obtain CSI from the first apparatus to the second apparatus; or the first apparatus parses the complex sample of the secure TRN field based on the secure TRN field, to obtain CSI from the first apparatus to the second apparatus.

In other words, the second apparatus feeds back the complex sample of the secure LTF field or the secure TRN field to the first apparatus. Even if an eavesdropper eavesdrops the complex sample, because the secure LTF field/the secure TRN field is unknown, the CSI from the first apparatus to the second apparatus cannot be learned of. Therefore, in such a feedback manner, information security in the feedback stage may also be ensured.

The information feedback method 300 is applicable to all communication scenarios in which an AP and a STA do not exchange a security parameter of the secure LTF field or the secure TRN field.

In an optional implementation, the first apparatus and the second apparatus may negotiate, in a negotiation stage, about whether the second apparatus feeds back the CSI or the complex sample of the secure LTF field. In other words, the foregoing request frame may be further used to request to feed back a CSI feedback frame, or feed back the complex sample (secure LTF feedback frame/secure TRN feedback frame) of the secure LTF field/secure TRN field. When the request frame is used to request to feed back the CSI, a response frame is used to make a response indicating whether to agree to feed back the CSI; and when the request frame is used to request to feed back the complex sample of the secure LTF field/secure TRN field, the response frame is used to make a response indicating whether to agree to feed back the complex sample of the secure LTF field/secure TRN field.

In an optional implementation, the first apparatus and the second apparatus may negotiate, by using a secure sensing feedback type field in the request frame and a secure sensing feedback type field in the response frame, about whether to feedback the CSI or the complex sample of the feedback secure LTF field. When the secure sensing feedback type field in the request frame is set to 1, the request frame is used to request to feed back the CSI; and when the secure sensing feedback type field in the response frame is set to 0, the response frame is used to make a response indicating to disagree to feed back the CSI; or when the secure sensing feedback type field in the response frame is set to 1, the response frame is used to make a response indicating to agree to feed back the CSI. When the secure sensing feedback type field in the request frame is set to 0, the request frame is used to request to feed back the complex sample of the secure LTF field/secure TRN field; and when the secure sensing feedback type field in the response frame is set to 0, the response frame is used to make a response indicating to disagree to feed back the complex sample of the secure LTF field/secure TRN field; or when the secure sensing feedback type field in the response frame is set to 1, the response frame is used to make a response indicating to agree to feed back the complex sample of the secure LTF field/secure TRN field.

It can be learned that, in this embodiment of this application, the first apparatus sends, to the second apparatus, the first frame that carries the first field used to perform channel estimation, and the second apparatus does not perform channel estimation, but directly feeds back the complex sample of the secure LTF field/the secure TRN field to the first apparatus. After receiving the complex sample of the secure LTF field/the secure TRN field, the second apparatus may parse the complex sample of the secure LTF field based on the secure LTF field, or parse the complex sample of the secure TRN field based on the secure TRN field, to obtain the CSI from the first apparatus to the second apparatus. In such a feedback manner of the second apparatus, information security in the feedback stage may also be ensured.

Optionally, an implementation in which the second apparatus feeds back encrypted CSI is not limited in this embodiment of this application. For example, the second apparatus may further encrypt the complex sample of the secure LTF field or the secure TRN field based on a random number, and then feed back an encrypted complex sample of the secure LTF field or the secure TRN field to the first apparatus.

In this embodiment of this application, when the second apparatus feeds back CSI obtained by performing channel estimation based on a preset LTF field or feeds back CSI obtained by performing channel estimation based on the second field generated based on a security parameter of the second field, the second apparatus feeds back, to the first apparatus by using a CSI feedback frame, the CSI obtained by performing channel estimation. In other words, the first feedback frame in the foregoing information feedback method is the CSI feedback frame. The following describes a frame structure of the CSI feedback frame when the first apparatus and the second apparatus perform measurement and sensing on a low frequency band.

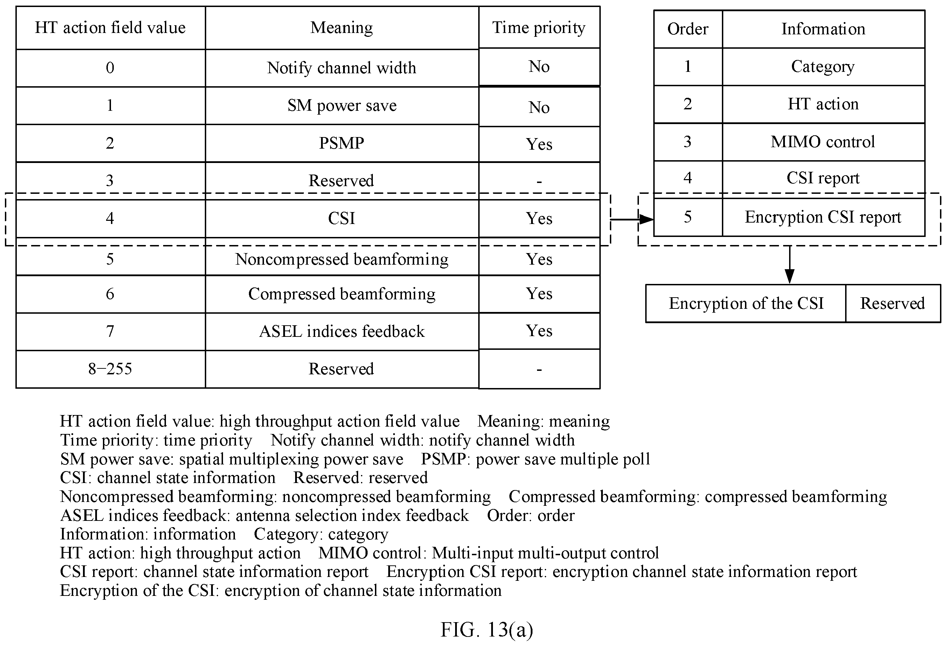

In an optional implementation, as shown in FIG. 13(a), the CSI feedback frame is obtained by newly adding an encryption CSI report field (encryption CSI report field) to a CSI feedback frame in a high throughput (high throughput, HT) action frame, and the encryption CSI report field includes encryption of the CSI subfield (encryption of the CSI subfield) and a reserved subfield (reserved subfield).

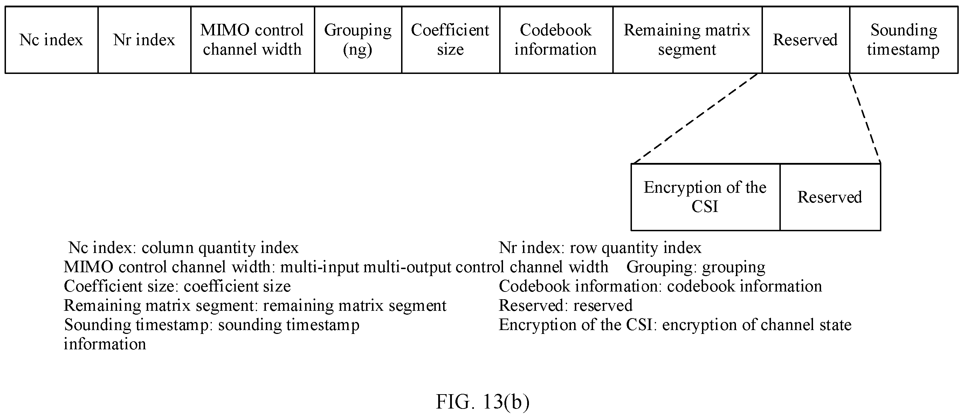

In another optional implementation, the CSI feedback frame is shown in FIG. 13(b). A CSI feedback frame in a current HT action frame is reused for the CSI feedback, and the CSI feedback frame is obtained by adding the encryption of the CSI subfield and the reserved subfield to a control field and a reserved field in the CSI feedback frame.

Currently, only feedback of a CSI matrix of 20/40 MHz is supported in an HT standard, and feedback of the CSI matrix is not supported in a subsequent standard. In an 802.11bf protocol, the feedback method in this embodiment of this application may be extended to feedback of the CSI matrix in a case of a larger bandwidth. It should be noted that FIG. 13(b) shows only an example of a modification based on the HT standard. The feedback method in this embodiment of this application may further be correspondingly applied to feedback of the CSI matrix in a case of a larger bandwidth in a future 802.11bf protocol. In addition, in FIG. 13(b), the feedback frame is described only by using the CSI matrix as an example. This embodiment of this application is also applicable to a feedback frame in feedback calculation performed through noncompressed beamforming and compressed beamforming.

The encryption of the CSI subfield indicates whether CSI sent by the second apparatus is correct CSI. When the encryption of the CSI field is set to 0, it indicates that the CSI fed back by the second apparatus is correct CSI; or when the encryption of the CSI field is set to 1, it indicates that the CSI fed back by the second apparatus is wrong CSI. In this embodiment of this application, the CSI fed back by the second apparatus to the first apparatus is the CSI obtained by performing channel estimation based on the received first field and the preset LTF field or the preset TRN field, or the CSI obtained by performing channel estimation based on the received first field and the second field generated based on the security parameter of the second field. The second field is a field different from the secure LTF field or the secure TRN field. Therefore, the CSI fed back by the second apparatus to the first apparatus is wrong CSI. Therefore, when the second apparatus sends the CSI feedback frame to the first apparatus, the encryption of the CSI field in the CSI feedback frame is set to 1.

In this embodiment of this application, when the second apparatus feeds back the complex sample of the secure LTF field or the secure TRN field to the first apparatus, the second apparatus feeds back the complex sample of the secure LTF field to the first apparatus by using the secure LTF feedback frame. In other words, the first feedback frame in the foregoing information feedback method is the secure LTF feedback frame.

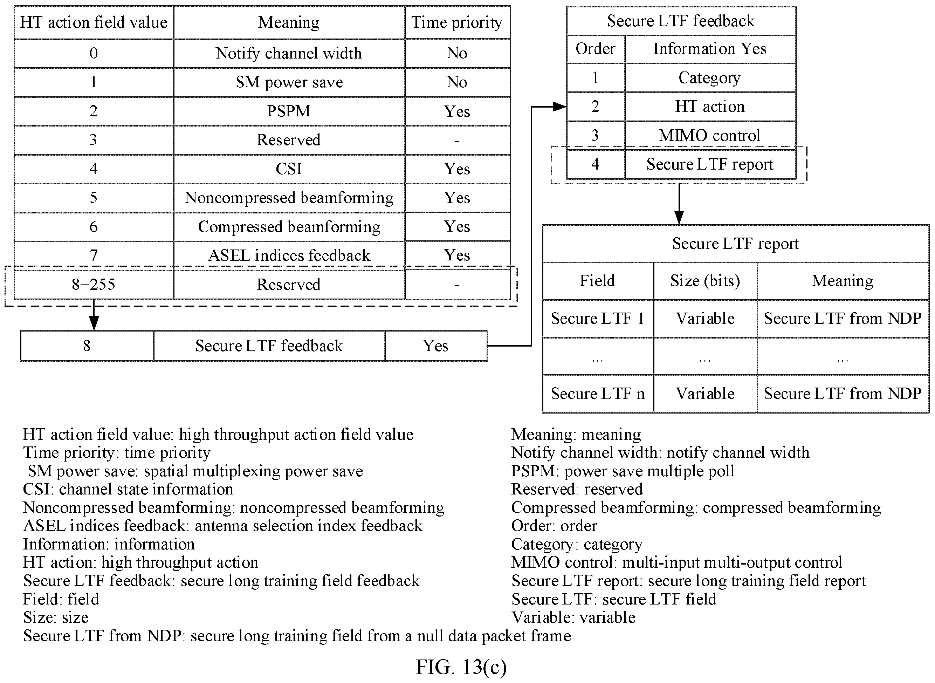

In an optional implementation, the secure LTF feedback frame is shown in FIG. 13(c). The secure LTF feedback frame is obtained by adding the secure LTF feedback field to the reserved field of the HT action frame, and the secure LTF feedback field includes a secure LTF report subfield. The CSI LTF report subfield indicates the second apparatus to feed back the complex sample of the secure LTF field. The secure LTF feedback field includes feedback content (for example, a secure LTF), a size (bits) occupied by the feedback content, and a meaning (meaning) represented by the feedback content.

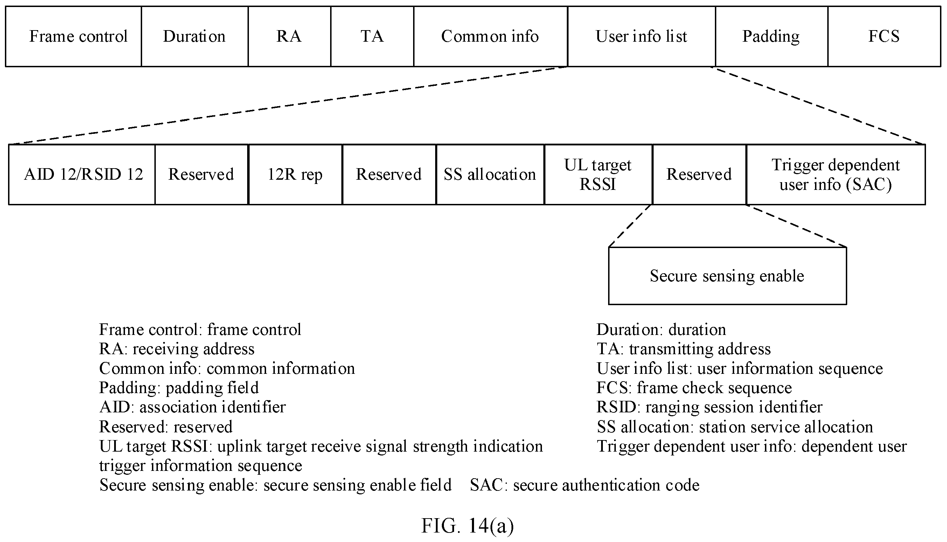

In this embodiment of this application, when the first apparatus and the second apparatus perform measurement and sensing on a low frequency band, a trigger frame sent by the first apparatus or the second apparatus may be shown in FIG. 14(a). For a frame structure of the trigger frame, refer to a frame structure of a trigger frame in 802.11az. A difference lies in that the frame structure of the trigger frame is obtained by adding a secure sensing enable field to a reserved field in the trigger frame in 802.11 az.

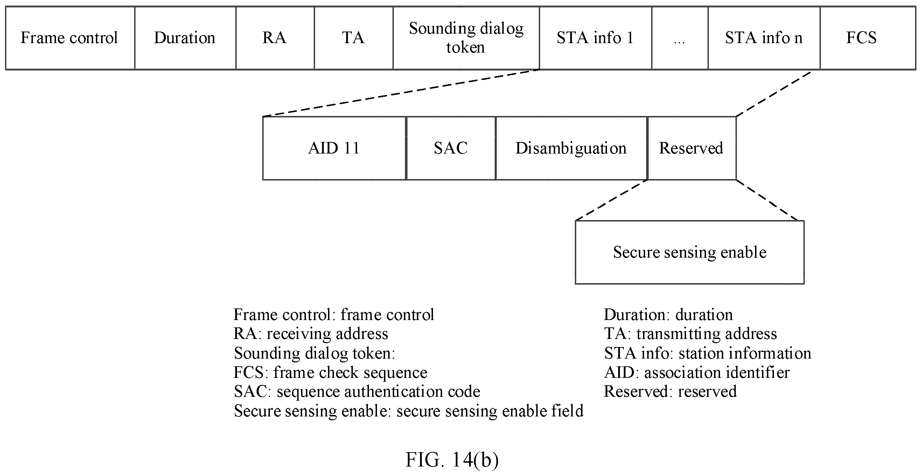

In this embodiment of this application, when the first apparatus and the second apparatus perform measurement and sensing on a low frequency band, an NDPA frame sent by the first apparatus or the second apparatus may be shown in FIG. 14(b). For a frame structure of the NDPA frame, refer to a frame structure of an NDPA frame in 802.11 az. A difference lies in that a secure sensing enable field is added to a reserved field in the NDPA frame in 802.11az.

The secure sensing enable field indicates an encrypted NDP frame to be sent, in other words, indicates, to a peer end, that an NDP frame that carries the secure LTF field is to be sent. In addition, if the first apparatus and the second apparatus exchange a security parameter in the NDPA frame, the exchanged parameter is also a wrong parameter. Therefore, the second apparatus needs to feed back an encrypted feedback frame, and the first apparatus needs to be ready to receive and process based on negotiation content.

In other words, in addition to the foregoing request frame and the foregoing response frame, the secure sensing enable field may be placed in the trigger frame and the NDPA frame. When the secure sensing enable field is placed in the trigger frame and the NDPA frame, it indicates the encrypted NDP frame to be sent and a subsequent encrypted measurement feedback process.

In an optional implementation, when the request frame and the response frame each include one or more of a secure sensing parameters exchange field, an additional secure LTF field, or an encrypted feedback field, and the trigger frame and the NDPA frame each may further include one or more corresponding fields in the secure sensing parameters exchange field, the additional secure LTF field, and the encrypted feedback field.

In another optional implementation, the request frame and the response frame do not include one or more of the secure sensing parameters exchange field, the additional secure LTF field, and the encrypted feedback field, and the trigger frame and the NDPA frame may include one or more of the secure sensing parameters exchange field, the additional secure LTF field, and the encrypted feedback field.

It can be learned that, the frame structure of the trigger frame and the frame structure of the NDPA frame are not limited to the frame structures in FIG. 14(a) and FIG. 14(b).

In this embodiment of this application, the frame structure of the trigger frame and the frame structure of the NDPA frame refer to frame structures in the 802.11az protocol. However, the frame structure of the trigger frame and the frame structure of the NDPA frame are not limited in this embodiment of this application. The frame structure of the trigger frame and the frame structure of the NDPA frame may further adapt to a new frame structure in the 802.11bf protocol. However, the NDPA frame and the trigger frame still include the secure sensing enable field, or the NDPA frame and the trigger frame still include one or more of the secure sensing parameters exchange field, the additional secure LTF field, and the encrypted feedback field.

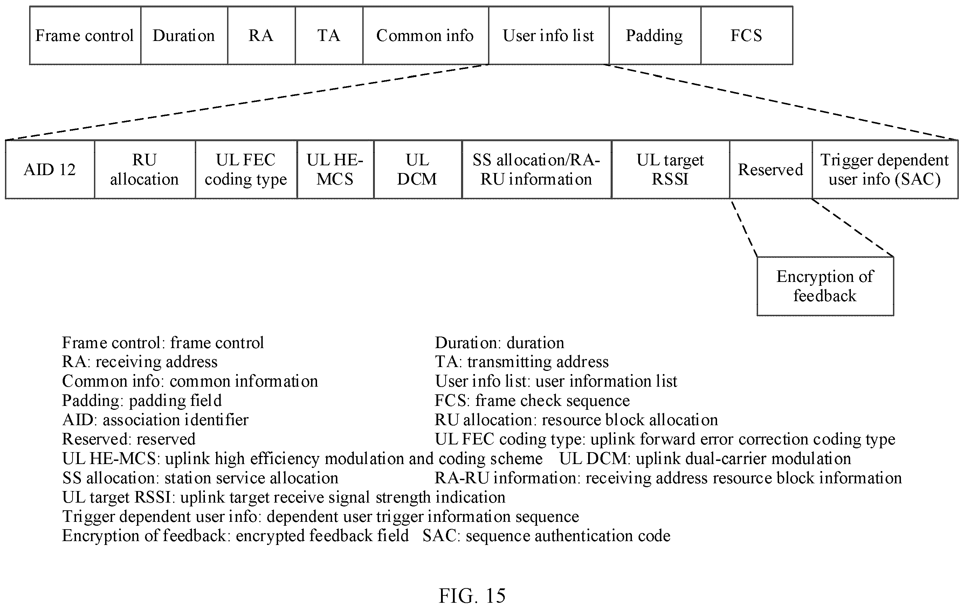

In this embodiment of this application, the feedback trigger frame structure is shown in FIG. 15. The feedback trigger frame includes the encryption of feedback field, and the encryption of feedback field indicates whether a feedback frame fed back by the second apparatus is an encrypted feedback frame. When the encryption of feedback field is set to 0, it indicates that the feedback frame fed back by the second apparatus is not an encrypted feedback frame; or when the encryption of feedback field is set to 1, it indicates that the feedback frame fed back by the second apparatus is an encrypted feedback frame. Optionally, the feedback trigger frame includes the secure sensing enable field.

As shown in FIG. 15, the encryption of feedback field may be placed in user info to be separately indicated to the STA. Optionally, the encryption of feedback field may also be uniformly indicated in common info.

In this embodiment of this application, when the first apparatus and the second apparatus perform measurement and sensing on a high frequency band, an encryption manner of the secure TRN field and an encryption manner of the secure LTF field are similar, and the first apparatus may also extract available CSI from the secure TRN field for sensing (sensing). In a process in which the first apparatus and the second apparatus negotiate, the secure sensing enable field in the request frame and the secure sensing enable field in the response frame are still set to 1, to determine, through negotiation, that the second apparatus may perform channel estimation based on a field different from the secure TRN field. For a process in which the first apparatus and the second apparatus perform measurement and sensing on the high frequency band, refer to a beam training process in an 802.11ay protocol.

Optionally, the secure sensing parameters exchange field in the request frame and the secure sensing parameters exchange field in the response frame may be set to 1 or 0 based on a requirement.

Optionally, "secure sensing feedback type" in the request frame and "secure sensing feedback type" in the response frame may also be set to 0 or set to 1 based on a requirement. When the secure sensing feedback type field is set to 0, the second apparatus feeds back wrong CSI obtained by performing channel estimation based on the preset TRN field; or when the secure sensing feedback type field is set to 1, the second apparatus feeds back the complex sample of the received secure TRN field.

In an interaction procedure between the first apparatus and the second apparatus, the first apparatus sends, to the second apparatus, a first frame that carries the secure TRN field. When the first apparatus and the second apparatus determine, through negotiation in the negotiation stage, to feed back the CSI feedback frame and not to exchange the security parameter of the secure TRN field, the second apparatus feeds back, to the first apparatus, CSI obtained by performing channel estimation based on the received TRN field and the preset TRN field; or when the first apparatus sends the security parameter of the TRN field to the second apparatus, the second apparatus feeds back, to the first apparatus, CSI obtained by performing channel estimation based on the received TRN field and the TRN field generated based on the security parameter of the TRN field. The first apparatus parses the received CSI based on the preset TRN field and the sent secure TRN field, or parses the received CSI based on the TRN field generated based on the security parameter of the TRN field and the sent secure TRN field, to obtain the CSI from the first apparatus to the second apparatus.

When the first apparatus and the second apparatus perform measurement and sensing on the high frequency band, the first frame may be a beam refinement protocol (beam refinement protocol, BRP) frame. In other words, the first apparatus may send, to the second apparatus, a BRP frame that carries the secure TRN field. It may be understood that the BRP frame may also be referred to as a beam refinement protocol frame, a beam refinement protocol frame, or the like.

Optionally, the first apparatus and the second apparatus are sampled in the negotiation stage. The first apparatus obtains the CSI from the first apparatus to the second apparatus based on the complex sample of the secure TRN field and the secure TRN field.

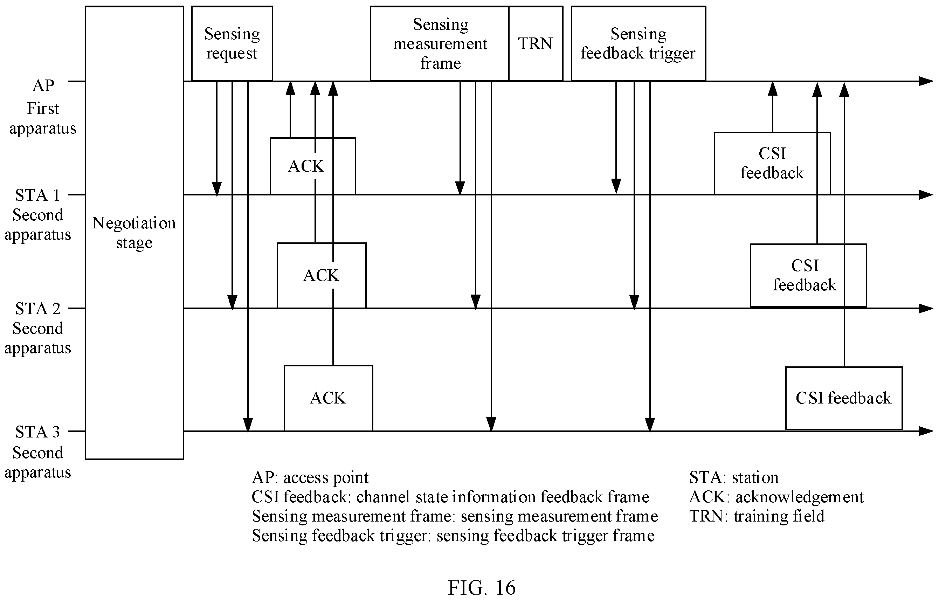

For example, the first apparatus is an AP, and the second apparatus includes a STA 1, a STA 2, and a STA 3. A schematic flowchart of interaction when the AP performs measurement and sensing on the high frequency band with the STA 1, the STA 2, and the STA 3 is shown in FIG. 16. In the negotiation stage with the STA 1, the STA 2, and the STA 3, the AP sets the secure sensing enable field to 1, to determine, through negotiation, that the STA 1, the STA 2, and the STA 3 may perform channel estimation based on a field different from the secure TRN field. Optionally, in the negotiation stage with the STA 1, the STA 2, and the STA 3, the AP may choose, based on a requirement, to set the secure sensing parameters exchange field to 1 or 0.

After the AP sends, to each of the STA 1, the STA 2, and the STA 3, a measurement frame (sensing measurement frame) that carry the secure TRN, the STA 1, the STA 2, and the STA 3 each feed back, to the AP based on an indication determined through negotiation with the AP in the negotiation stage, the CSI obtained by performing channel estimation based on the received secure TRN field and the preset TRN field, or feed back, to the AP, the CSI obtained by performing channel estimation based on the received secure TRN field and the TRN field generated based on the security parameter of the TRN field from the AP. Therefore, the AP receives a feedback frame (CSI feedback frame) from each of the STA 1, the STA2, and the STA3, and parses CSI in the feedback frame based on the preset TRN field and the sent secure TRN field, or parses CSI in the feedback frame based on the TRN field generated based on the security parameter of the TRN field and the sent secure TRN field, to obtain CSI from the AP to the STA 1, CSI from the AP to the STA 2, and CSI from the AP to the STA 3.

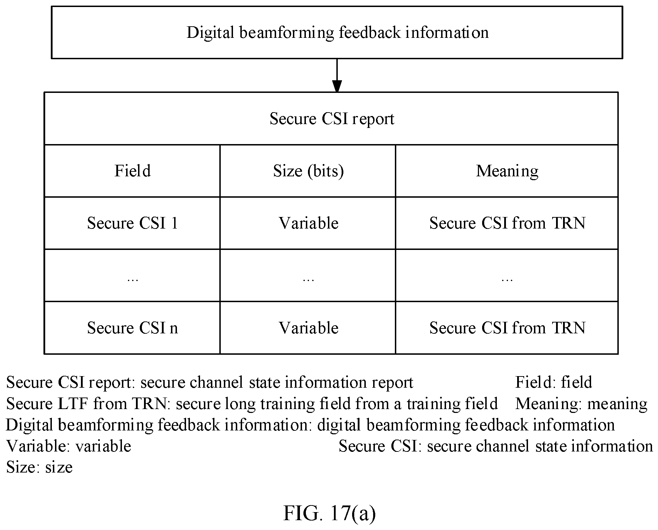

In this embodiment of this application, when the first apparatus and the second apparatus perform measurement and sensing on the high frequency band, the CSI feedback frame fed back by the second apparatus to the second apparatus is fed back by using a digital beamforming feedback element in 802.11ay. As shown in FIG. 17(a), the second apparatus places obtained secure SCI in digital beamforming feedback information in 802.11ay for feedback.

In this embodiment of this application, when the first apparatus and the second apparatus perform measurement and sensing on the high frequency band, and the second apparatus feeds back the complex sample of the secure TRN field to the second apparatus, the complex sample is fed back by using the secure TRN feedback frame.

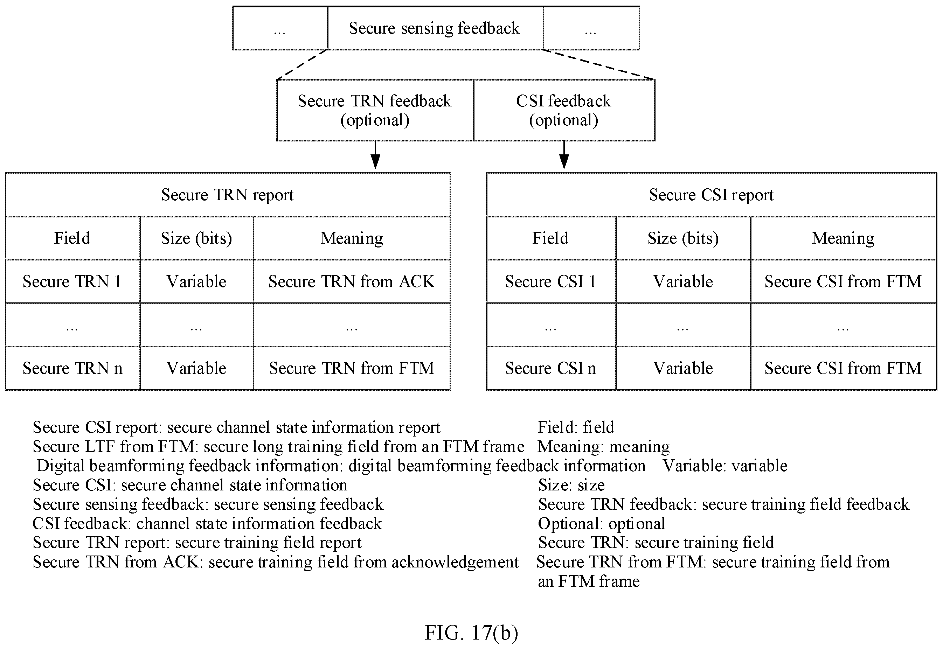

In an optional implementation, the CSI feedback frame and the secure TRN feedback frame on the high frequency band are feedback frames newly designed in 802.11bf, and a diagram of frame structures of the CSI feedback frame and the secure TRN feedback frame is shown in FIG. 17(b). It can be learned that, the secure sensing feedback field includes a secure TRN feedback subfield and a CSI feedback field. When the CSI feedback field is set to 1, it indicates to feed back the CSI; or when the secure TRN feedback field is set to 1, it indicates to feed back the complex sample of the secure TAN field. The secure TRN feedback field and the CSI feedback field each include feedback content (for example, the secure TRN or the secure CSI), a size (bits) occupied by the feedback content, and a meaning (meaning).

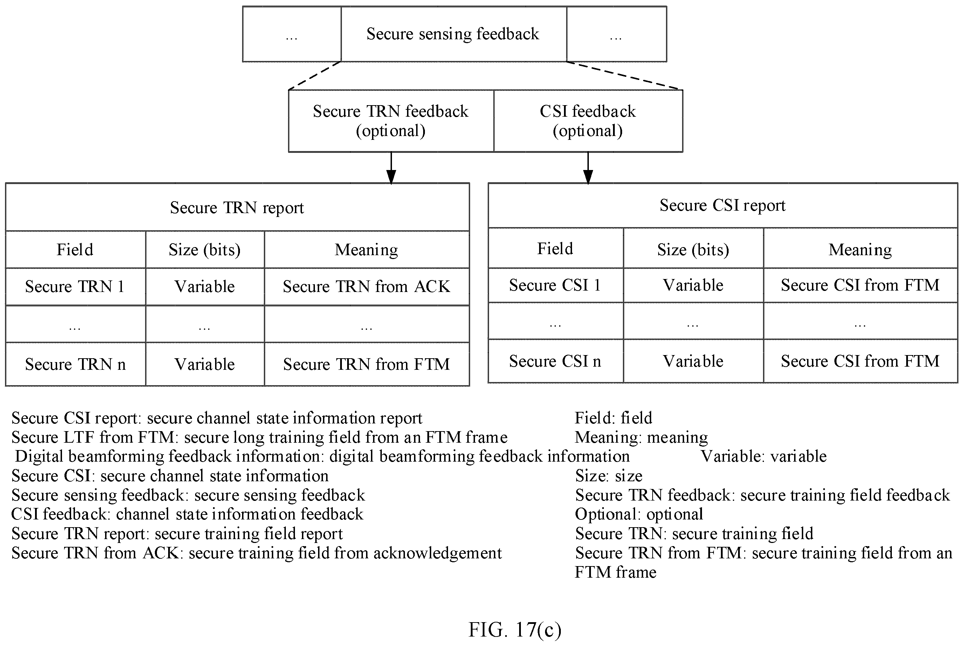

In another optional implementation, the second apparatus provides feedback by using a current FTM frame. As shown in FIG. 17(c), a secure sensing feedback field is added after the encryption of the CSI field of the FTM frame. Because the FTM frame is a protected frame, the second apparatus provides feedback by using the FTM frame, to protect security of feedback information. Structures of the secure TRN feedback field and the CSI feedback field are the same as structures in FIG. 17(b). Details are not described again.

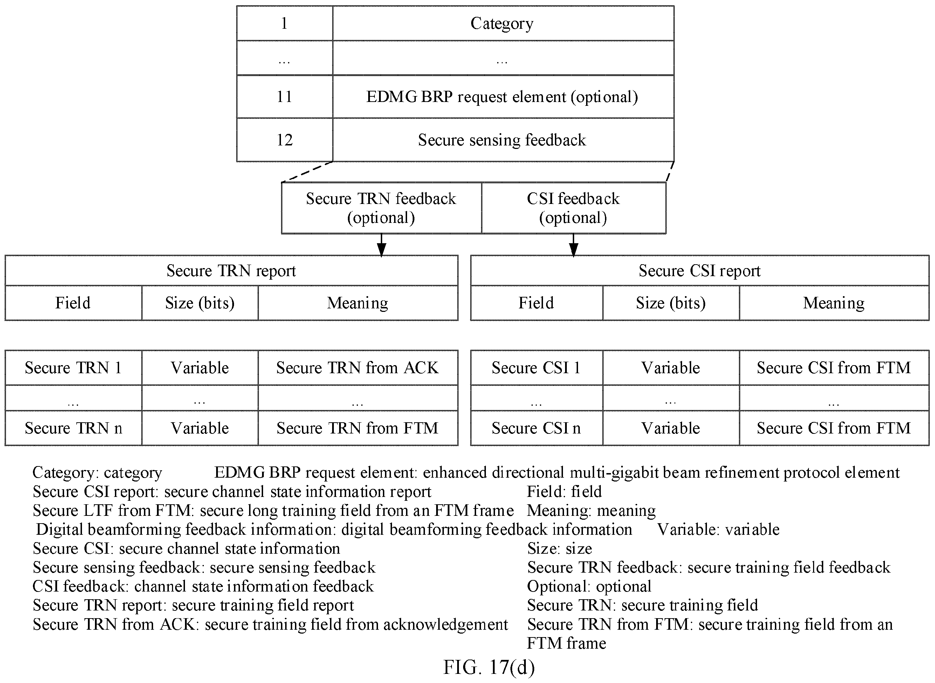

In still another optional implementation, as shown in FIG. 17(d), the second apparatus provides feedback by adding a field to the BRP frame. Structures of the secure TRN feedback field and the CSI feedback field are the same as structures in FIG. 17(b). Details are not described again.

This embodiment of this application may be further applied to a communication scenario in which a receive end performs channel estimation based on the L-LTF field in FIG. 3, and the receive end needs to feed back, to a transmit end, CSI obtained through channel estimation. If the transmit end sends a secure L-LTF compatible with the L-LTF field, the receive end performs channel estimation by using a preset L-LTF field (or a field different from the secure L-LTF field of the transmit end). Optionally, this embodiment of this application may be further applied to a communication scenario in which the receive end performs channel estimation based on a next-generation secure LTF field in a protocol, and the receive end needs to feed back, to the transmit end, CSI obtained through channel estimation. For example, when the transmit end sends an EHT secure LTF field based on a Wi-Fi 7/EHT (or a further next generation standard, for example, Wi-Fi 8) protocol to the receive end, and the receive end performs channel estimation by using a preset EHT-LTF field (or different from the EHT secure LTF field of the transmit end), the information feedback procedure in this embodiment of this application may be applied to a manner in which the receive end feeds back CSI. For example, the receive end feeds back, to the transmit end, the CSI obtained by performing channel estimation based on the received EHT secure LTF field and a field (the preset EHT-LTF field or another field different from the EHT secure LTF field of the transmit end) different from the EHT secure LTF field.

In this embodiment of this application, some fields in the request frame and a negotiation frame may be applied to an implicit feedback scenario. The following describes an implementation of some fields in the request frame and the negotiation frame by using an example in which an AP and a STA perform measurement and sensing on a low frequency band and with reference to a TB ranging mode, an NTB ranging mode, unilateral interaction, and multilateral interaction.

### I. Non TB ranging mode

Scenario 1.1: An AP is a party that needs to obtain measurement information, and a STA is a party that sends a measurement frame.

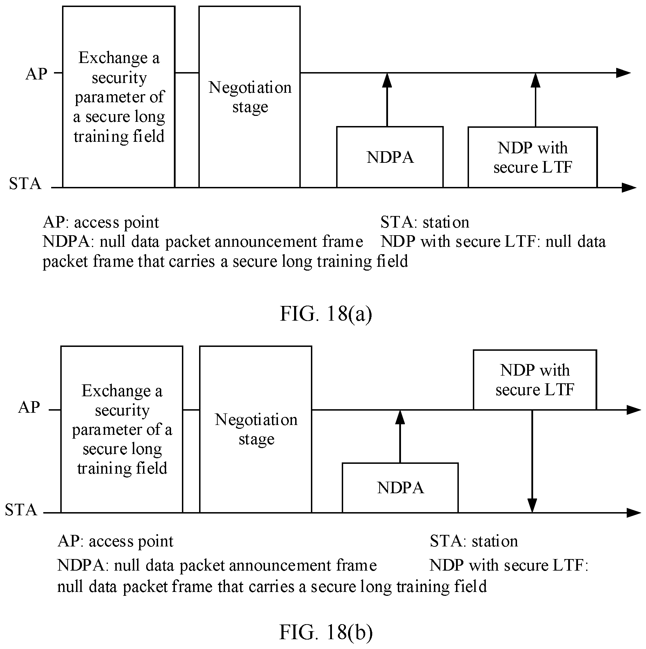

In this scenario, a flowchart of interaction between the AP and the STA is shown in FIG. 18(a). The AP and the STA set a secure sensing enable field in a request frame and a secure sensing enable field in a response frame to 1 in a negotiation stage, to determine, through negotiation, that an NDP frame that carries a secure LTF field may be sent or received. In addition, the AP sets a secure sensing parameters exchange field to 1 in the negotiation stage, to request to exchange a security parameter of the secure LTF field, and the STA sets a secure sensing parameters exchange field to 1 in the negotiation stage, to make a response indicating to agree to exchange the security parameter of the secure LTF field.

As shown in FIG. 18(a), the STA sends an NDPA frame to the AP, to announce, to the AP, that the NDP frame that carries the secure LTF field is to be sent. The STA sends, to the AP, the NDP frame that carries the secure LTF field. After receiving the NDP frame that carries the secure LTF field, the AP generates the secure LTF field based on the security parameter of the secure LTF field exchanged with the STA in the negotiation stage, and then performs channel estimation based on the secure LTF field and the received secure LTF field, to obtain CSI from the STA to the AP.

Scenario 1.2: A STA is a party that needs to obtain measurement information, and an AP is a party that sends a measurement frame.

In this scenario, a flowchart of interaction between the AP and the STA is shown in FIG. 18(b). Negotiation between the AP and the STA in the negotiation stage may be the same as the negotiation manner in FIG. 18(a). Details are not described again.

As shown in FIG. 18(b), the STA sends an NDPA frame to the AP, to announce, to the AP, that an NDP frame that carries a secure LTF field needs to be received. Therefore, the AP sends, to the STA, the NDP frame that carries the secure LTF field. After receiving the NDP frame that carries the secure LTF field, the STA generates the secure LTF field based on the security parameter of the secure LTF field exchanged with the AP in the negotiation stage, and then performs channel estimation based on the secure LTF field and the received secure LTF field, to obtain CSI from the AP to the STA.

### II. TB ranging mode

Scenario 2.1: An AP is a party that needs to obtain measurement information, and a STA is a party that sends a measurement frame.

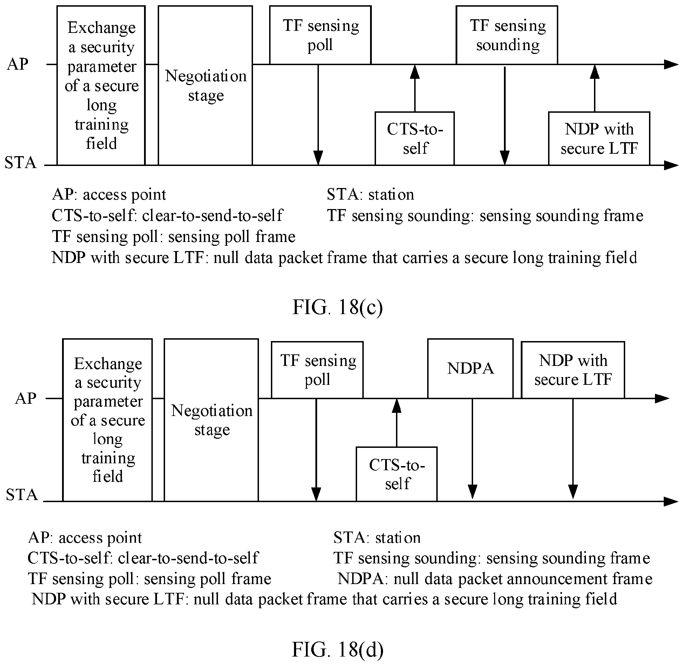

In this scenario, a flowchart of interaction between the AP and the STA is shown in FIG. 18(c). Negotiation between the AP and the STA in the negotiation stage may be the same as the negotiation manner in FIG. 18(a). Details are not described again.

As shown in FIG. 18(c), the AP sends a TF sensing poll to the STA, to send a poll to the STA. The STA returns CTS-to-self to the AP, to determine whether the STA can participate in a session. When the AP determines that the STA participates in the session, the AP sends TF sensing sounding to the STA, to notify that the STA needs to receive an NDP frame that carries a secure LTF field. Therefore, the STA sends, to the AP, the NDP frame that carries the secure LTF field. After receiving the NDP frame that carries the secure LTF field, the AP generates the secure LTF field based on the security parameter of the secure LTF field exchanged with the STA in the negotiation stage, and then performs channel estimation based on the secure LTF field and the received secure LTF field, to obtain CSI from the STA to the AP.

Scenario 2.2: An AP is a party that needs to obtain measurement information, and a STA is a party that sends a measurement frame.

In this scenario, a flowchart of interaction between the AP and the STA is shown in FIG. 18(d). Negotiation between the AP and the STA in the negotiation stage may be the same as the negotiation manner in FIG. 18(a). Details are not described again.

As shown in FIG. 18(d), the AP sends a TF sensing poll to the STA, to send a poll to the STA. The STA returns CTS-to-self to the AP, to determine whether the STA can participate in a session. When the AP determines that the STA participates in the session, the AP sends an NDPA frame to the STA, to announce, to the STA, that an NDP frame that carries a secure LTF field is to be sent. The AP sends the NDP frame to the STA. After receiving the NDP frame that carries the secure LTF field, the STA generates the secure LTF field based on the security parameter of the secure LTF field exchanged with the AP in the negotiation stage, and then performs channel estimation based on the secure LTF field and the received secure LTF field, to obtain CSI from the AP to the STA.

Scenario 2.3: An AP is a party that needs to obtain measurement information, and a STA 1 and a STA 2 is a party that sends a measurement frame.

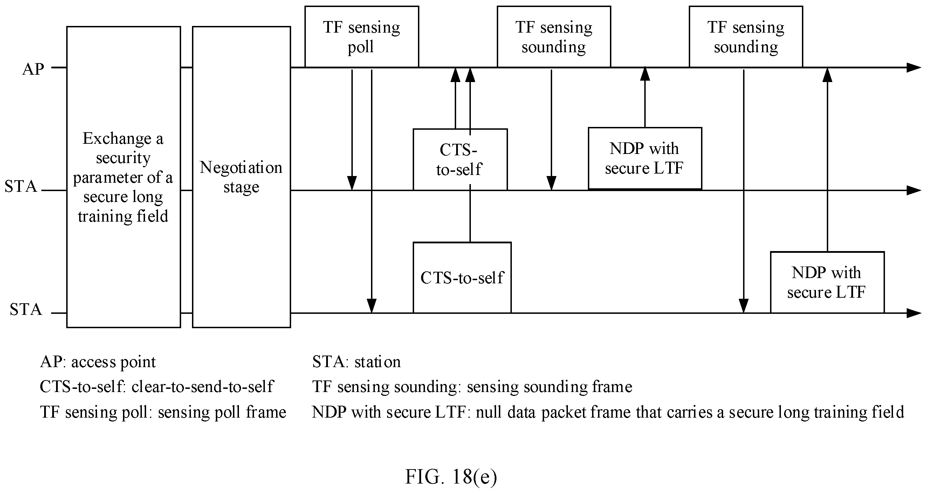

In this scenario, a flowchart of interaction between the AP and each of the STA 1 and the STA 2 is shown in FIG. 18(e). Negotiation between the AP and each of the STA 1 and the STA 2 in the negotiation stage may be the same as the negotiation manner in FIG. 18(a). Details are not described again.

As shown in FIG. 18(e), the AP sends a TF sensing poll to each of the STA 1 and the STA 2, to send a poll to the STA 1 and the STA 2. The STA 1 and the STA 2 return CTS-to-self to the AP, to determine whether the STA 1 and the STA 2 can participate in a session. When the AP determines that the STA 1 and the STA 2 participate in the session, the AP sends TF sensing sounding to each of the STA 1 and the STA 2, to notify that a STA needs to receive an NDP frame that carries a secure LTF field. Therefore, the STA 1 and the STA 2 each send, to the AP, the NDP frame that carries the secure LTF field. Further, the AP separately performs channel estimation based on the received secure LTF field and the secure LTF field generated based on the security parameter of the secure LTF field exchanged with the STA 1 and the STA 2 in the negotiation stage, to separately obtain CSI from the STA 1 to the AP and CSI from the STA 2 to the AP.

### VI. Communication apparatus

To implement functions in the methods provided in the foregoing embodiments of this application, a first apparatus or a second apparatus each may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

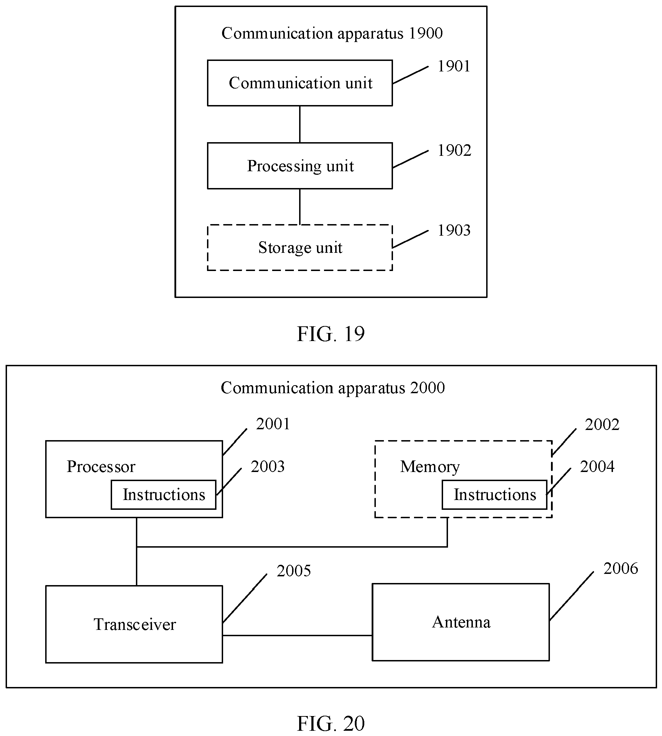

As shown in FIG. 19, an embodiment of this application provides a communication apparatus 1900. The communication apparatus 1900 may be a component (for example, an integrated circuit or a chip) of a first apparatus, or may be a component (for example, an integrated circuit or a chip) of a second apparatus. The communication apparatus 1900 may alternatively be another communication unit, configured to implement the method in the method embodiments of this application. The communication apparatus 1900 may include a communication unit 1901 and a processing unit 1902. Optionally, the apparatus may further include a storage unit 1903.

In a possible design, one or more units in FIG. 19 may be implemented by one or more processors, or implemented by one or more processors and a memory, or implemented by one or more processors and a transceiver, or implemented by one or more processors, a memory, and a transceiver. This is not limited in this embodiment of this application. The processor, the memory, and the transceiver may be separately disposed or integrated.

The communication apparatus 1900 has a function of implementing the first apparatus described in embodiments of this application. Optionally, the communication apparatus 1900 has a function of implementing the second apparatus described in embodiments of this application. For example, the communication apparatus 1900 includes a corresponding module, unit, or means (means) of a first apparatus that performs steps related to the first apparatus described in embodiments of this application. The corresponding module, unit, or means (means) may be implemented by software, or may be implemented by hardware, or may be implemented by hardware executing corresponding software, or may be implemented by combining software and hardware. For details, further refer to corresponding descriptions in the foregoing corresponding method embodiments.

In a possible design, the communication apparatus 1900 includes a processing unit 1902 and a communication unit 1901, and the processing unit 1902 is configured to control the communication unit 1901 to receive and send data/signaling.

The communication unit 1901 is configured to send, to a second apparatus, a first frame that carries a first field used to perform channel estimation.

The communication unit 1901 is further configured to receive a first feedback frame from the second apparatus.

The first feedback frame includes channel state information CSI, the CSI is CSI from the first apparatus to the second apparatus, the CSI is obtained by the second apparatus by performing channel estimation based on the received first field and a second field, and the second field is not the first field.

In an optional implementation, the first field is a secure long training LTF field, or the first field is a secure training TRN field.

In an optional implementation, before the communication unit 1901 sends, to the second apparatus, the first frame that carries the first field used to perform channel estimation, the communication unit 1901 is further configured to: send a request frame to the second apparatus, where the request frame is used to request to perform channel estimation based on a field different from the secure LTF field or the secure TRN field; and receive a response frame from the second apparatus, where the response frame is used to respond to the request frame.

In another optional implementation, the request frame is further used to request not to exchange a security parameter of the first field, and the second field is a preset LTF field or a preset TRN field; and the response frame is further used to respond to the request frame.

In still another optional implementation, the request frame further includes a security parameter of the second field, and the security parameter of the second field is used to generate the second field; and the response frame is further used to respond to the request frame.

In still another optional implementation, the request frame is further used to request the second apparatus that does not have a capability of generating the first field to perform channel estimation based on a field different from the secure LTF field or the secure TRN field; and the response frame is further used to respond to the request frame.

In an optional implementation, the communication unit 1901 is further configured to receive a second frame that carries a second field; and the processing unit 1902 is further configured to perform channel estimation based on the received second field and the second field, to obtain second CSI.

In an optional implementation, the security parameter of the second field is one of security parameters of the first field that are sent by the first apparatus historically.

In another optional implementation, the security parameter of the second field is a parameter that is not once-sent by the first apparatus to the second apparatus, and is different from the security parameter of the first field.

In an optional implementation, the processing unit 1902 may further parse the CSI based on the second field and the first field, to obtain first CSI.

This embodiment of this application and the foregoing shown method embodiments are based on a same concept, and technical effects brought by this embodiment of this application are also the same. For a specific principle, refer to the descriptions of the foregoing shown embodiments. Details are not described again.

In another possible design, the communication apparatus 1900 includes a processing unit 1902 and a communication unit 1901, and the processing unit 1902 is configured to control the communication unit 1901 to receive and send data/signaling.

The communication unit 1901 is configured to send, to a second apparatus, a first frame that carries a first field used to perform channel estimation.

The communication unit 1901 is further configured to: receive a first feedback frame from the second apparatus, and receive a second feedback frame from the second apparatus.

The first feedback frame includes channel state information CSI, the CSI is CSI from the first apparatus to the second apparatus, the CSI is obtained by the second apparatus by performing channel estimation based on the received first field and a second field, and the second field is not the first field. The second feedback frame includes encrypted third CSI, and third CSI is CSI from a third apparatus to the second apparatus.

In an optional implementation, the encrypted third CSI is obtained by the second apparatus by encrypting the third CSI based on the second field generated based on a security parameter of the second field.

In an optional implementation, before the communication unit 1901 sends, to the second apparatus, the first frame that carries the first field used to perform channel estimation, the communication unit 1901 may further send a request frame to the second apparatus, where the request frame is used to request the second apparatus to measure the third channel state information CSI from the third apparatus to the second apparatus, and encrypt the third CSI and feed back the encrypted third CSI to the first apparatus; and the communication unit 1901 may further receive a response frame from the second apparatus, where the response frame is used to respond to the request frame.

In an optional implementation, the communication unit 1901 may further receive a second frame that carries a second field. The processing unit 1902 performs channel estimation based on the received second field and the second field, to obtain second CSI. The communication unit 1901 receives a third feedback frame from the second apparatus, where the third feedback frame includes CSI obtained by the third apparatus by performing channel estimation on a channel between the second apparatus and the third apparatus based on the received second field and a preset long training LTF field or a preset training TRN field. The processing unit 1602 parses the CSI in the third feedback frame based on the sent second field and the preset LTF field or the preset TRN field, to obtain fourth CSI.

In an optional implementation, the communication unit 1901 may further receive a second frame that carries a second field. The processing unit 1902 performs channel estimation based on the received second field and the second field, to obtain second CSI. The communication unit 1901 receives a third feedback frame from the second apparatus, where the third feedback frame includes encrypted fourth CSI, the encrypted fourth CSI is obtained by the second apparatus by encrypting fourth CSI based on the security parameter of the second field, the fourth CSI is obtained by the second apparatus by parsing a fourth feedback frame fed back by the third apparatus, and the fourth feedback frame includes CSI information obtained by the third apparatus by performing channel estimation based on the received second field and a field generated based on a parameter different from the security parameter of the second field. The processing unit 1902 parses the third feedback frame based on the security parameter of the second field, to obtain the fourth CSI.

This embodiment of this application and the foregoing shown method embodiments are based on a same concept, and technical effects brought by this embodiment of this application are also the same. For a specific principle, refer to the descriptions of the foregoing shown embodiments. Details are not described again.

In still another possible design, the communication apparatus 1900 includes a processing unit 1902 and a communication unit 1901, and the processing unit 1902 is configured to control the communication unit 1901 to receive and send data/signaling.

The communication unit 1901 is configured to receive a first frame that carries a first field used to perform channel estimation.

The communication unit 1901 is further configured to send a first feedback frame to a first apparatus.

The first feedback frame includes channel state information CSI, the CSI is CSI from the first apparatus to the second apparatus, the CSI is obtained by the second apparatus by performing channel estimation based on the received first field and a second field, and the second field is not the first field.

In an optional implementation, the first field is a secure long training LTF field, or the first field is a secure training TRN field.

In an optional implementation, before the communication unit 1901 receives the first frame that carries the first field used to perform channel estimation, the communication unit 1901 may further receive a request frame from the first apparatus, where the request frame is used to request to perform channel estimation based on a field different from the secure LTF field or the secure TRN field; and the communication unit 1901 may further send a response frame to the first apparatus, where the response frame is used to respond to the request frame.

In an optional implementation, the request frame is further used to request not to exchange a security parameter of the first field, and the second field is a preset LTF field or a preset TRN field.

The response frame is further used to make a response indicating to agree not to exchange the security parameter of the first field.

In another optional implementation, the request frame further includes a security parameter of the second field, and the security parameter of the second field is used to generate the second field; and the response frame is further used to respond to the request frame.

In still another optional implementation, the request frame is further used to request the second apparatus that does not have a capability of generating the first field to perform channel estimation based on a field different from the secure LTF field or the secure TRN field; and the response frame is further used to respond to the request frame.

This embodiment of this application and the foregoing shown method embodiments are based on a same concept, and technical effects brought by this embodiment of this application are also the same. For a specific principle, refer to the descriptions of the foregoing shown embodiments. Details are not described again.

In still another possible design, the communication apparatus 1900 includes a processing unit 1902 and a communication unit 1901, and the processing unit 1902 is configured to control the communication unit 1901 to receive and send data/signaling.

The communication unit 1901 is configured to receive a first frame that carries a first field used to perform channel estimation.

The communication unit 1901 is further configured to: send a first feedback frame to a first apparatus, and send a second feedback frame to the first apparatus.

The first feedback frame includes channel state information CSI, the CSI is CSI from the first apparatus to the second apparatus, the CSI is obtained by the second apparatus by performing channel estimation based on the received first field and a second field, and the second field is not the first field.

The second feedback frame includes encrypted third CSI, and third CSI is CSI from a third apparatus to the second apparatus.

In an optional implementation, the encrypted third CSI is obtained by the second apparatus by encrypting the third CSI based on the second field generated based on a security parameter of the second field.

In an optional implementation, before the communication unit 1901 receives the first frame that carries the first field used to perform channel estimation, the communication unit 1901 may further receive a request frame from the first apparatus, where the request frame is used to request the second apparatus to measure the third channel state information CSI from the third apparatus to the second apparatus, and encrypt the third CSI and feed back the encrypted third CSI to the first apparatus; and the communication unit 1901 may further send a response frame to the first apparatus, where the response frame is used to respond to the request frame.

In an optional implementation, the communication unit 1901 may further send, to the first apparatus and the third apparatus, a second frame that carries a second field. The communication unit 1901 may further receive a third feedback frame from the third apparatus. The communication unit 1901 may further send the third feedback frame to the first apparatus, where the third feedback frame includes CSI obtained by the third apparatus by performing channel estimation on a channel between the second apparatus and the third apparatus based on the received second field and a preset long training LTF field or a preset training TRN field.

In an optional implementation, the communication unit 1901 sends, to the first apparatus and the third apparatus, a second frame that carries a second field. The communication unit 1901 receives a fourth feedback frame from the third apparatus, where the fourth feedback frame includes CSI information obtained by the third apparatus by performing channel estimation based on the received second field and a field generated based on a parameter different from the security parameter of the second field. The processing unit 1902 parses the fourth feedback frame based on the second field and the field generated based on the parameter different from the security parameter of the second field, to obtain fourth CSI. The processing unit 1902 encrypts the fourth CSI based on the security parameter of the second field, to obtain a third feedback frame. The communication unit 1901 sends the third feedback frame to the first apparatus.

This embodiment of this application and the foregoing shown method embodiments are based on a same concept, and technical effects brought by this embodiment of this application are also the same. For a specific principle, refer to the descriptions of the foregoing shown embodiments. Details are not described again.

An embodiment of this application further provides a communication apparatus 2000. FIG. 20 is a diagram of a structure of a communication apparatus 2000. The communication apparatus 2000 may be a first apparatus or a second apparatus, may be a chip, a chip system, a processor, or the like that supports the first apparatus to implement the foregoing methods, or may be a chip, a chip system, or a processor that supports the second apparatus to implement the foregoing methods. The apparatus may be configured to implement the method described in the method embodiments. For details, refer to the description in the method embodiments.

The communication apparatus 2000 may include one or more processors 2001. The processor 2001 may be a general-purpose processor, a dedicated processor, or the like, for example, may be a baseband processor, a digital signal processor, an application-specific integrated circuit, a field programmable gate array or another programmable logic device, a discrete gate or transistor logic device, a discrete hardware component, or a central processing unit (central processing unit, CPU). The baseband processor may be configured to process a communication protocol and communication data. The central processing unit may be configured to: control a communication apparatus (for example, a base station, a baseband chip, a terminal, a terminal chip, a distributed unit (distributed unit, DU), or a central unit (central unit, CU)), execute a software program, and process data of the software program.

Optionally, the communication apparatus 2000 may include one or more memories 2002. The memory 2002 may store instructions 2004, and the instructions may be run on the processor 2001, so that the communication apparatus 2000 performs the method described in the method embodiments. Optionally, the memory 2002 may further store data. The processor 2001 and the memory 2002 may be disposed separately or integrated together.

The memory 2002 may include but is not limited to a nonvolatile memory such as a hard disk (hard disk drive, HDD) or a solid-state drive (solid-state drive, SSD), a random access memory (random access memory, RAM), an erasable programmable read-only memory (erasable programmable ROM, EPROM), a read-only memory (read-only memory, ROM), a compact disc read-only memory (compact disc Read-Only memory, CD-ROM), and the like.

Optionally, the communication apparatus 2000 may further include a transceiver 2005 and an antenna 2006. The transceiver 2005 may be referred to as a transceiver unit, a transceiver machine, a transceiver circuit, or the like, and is configured to implement a transceiver function. The transceiver 2005 may include a receiver and a transmitter. The receiver may be referred to as a receiver machine, a receiving circuit, or the like, and is configured to implement a receiving function. The transmitter may be referred to as a transmitter machine, a transmitter circuit, or the like, and is configured to implement a sending function.

The communication apparatus 2000 is a first apparatus, and the transceiver 2005 is configured to perform S101 and S104 in the information feedback method 100. The transceiver 2005 is configured to perform S201 in the information feedback method 200.

The communication apparatus 2000 is a second apparatus. The transceiver 2005 is configured to perform S101, S103, and S104 in the information feedback method 100. The transceiver 2005 is configured to perform S202 and S203 in the information feedback method 200.

In another possible design, the processor 2001 may include a transceiver configured to implement a receiving function and a sending function. For example, the transceiver may be a transceiver circuit, an interface, or an interface circuit. The transceiver circuit, the interface, or the interface circuit configured to implement the receiving function and the sending function may be separated, or may be integrated together. The transceiver circuit, the interface, or the interface circuit may be configured to read and write code/data. Alternatively, the transceiver circuit, the interface, or the interface circuit may be configured to transmit or transfer a signal.

In still another possible design, optionally, the processor 2001 may store instructions 2003, and the instructions 2003 are run on the processor 2001, so that the communication apparatus 2000 may perform the method described in the method embodiments. The instructions 2003 may be cured in the processor 2001. In this case, the processor 2001 may be implemented by hardware.

In still another possible design, the communication apparatus 2000 may include a circuit, and the circuit may implement a sending, receiving, or communication function in the method embodiments. The processor and the transceiver described in this embodiment of this application may be implemented on an integrated circuit (integrated circuit, IC), an analog IC, a radio frequency integrated circuit RFIC, a mixed signal IC, an application-specific integrated circuit (application specific integrated circuit, ASIC), a printed circuit boards (printed circuit board, PCB), an electronic device, or the like. The processor and the transceiver may be manufactured by using various IC technologies, for example, a complementary metal oxide semiconductor (complementary metal oxide semiconductor, CMOS), an N-type metal oxide semiconductor (N-type metal oxide semiconductor, NMOS), a P-channel metal oxide semiconductor (positive channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

This embodiment of this application and the foregoing shown method embodiments of the information feedback method 100 and the information feedback method 200 are based on a same concept, and technical effects brought by this embodiment of this application are also the same. For a specific principle, refer to the descriptions of the foregoing shown embodiments of the information feedback method 100 and the information feedback method 200. Details are not described again.

This application further provides a computer-readable storage medium, configured to store computer software instructions, and when the instructions are executed by a communication apparatus, a function of any one of the method embodiments is implemented.

This application further provides a computer program product, configured to store computer software instructions, and when the instructions are executed by a communication apparatus, a function of any one of the method embodiments is implemented.

This application further provides a computer program, and when the computer program is run on a computer, a function of any one of the method embodiments is implemented.

All or some of the foregoing embodiments may be implemented by using software, hardware, firmware, or any combination thereof. When software is used to implement embodiments, all or some of embodiments may be implemented in a form of a computer program product. The computer program product includes one or more computer program instructions. When the computer instructions are loaded and executed on the computer, the interaction or functions according to embodiments of this application are all or partially generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid state drive (solid state drive, SSD)), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An information feedback method, wherein the method comprises:
sending, by a first apparatus to a second apparatus, a first frame that carries a first field used to perform channel estimation; and
receiving, by the first apparatus, a first feedback frame from the second apparatus, wherein
the first feedback frame comprises channel state information CSI, the CSI is CSI from the first apparatus to the second apparatus, the CSI is obtained by the second apparatus by performing channel estimation based on the received first field and a second field, and the second field is not the first field.

2. The method according to claim 1, wherein the first field is a secure long training LTF field, or the first field is a secure training TRN field.

3. The method according to claim 1 or 2, wherein before the sending, by a first apparatus to a second apparatus, a first frame that carries a first field used to perform channel estimation, the method further comprises:
sending, by the first apparatus, a request frame to the second apparatus, wherein the request frame is used to request to perform channel estimation based on a field different from the secure LTF field or the secure TRN field; and
receiving, by the first apparatus, a response frame from the second apparatus, wherein the response frame is used to respond to the request frame.

4. The method according to claim 3, wherein
the request frame is further used to request not to exchange a security parameter of the first field, and the second field is a preset LTF field or a preset TRN field; and
the response frame is further used to respond to the request frame.

5. The method according to claim 3, wherein
the request frame further comprises a security parameter of the second field, and the security parameter of the second field is used to generate the second field; and
the response frame is further used to respond to the request frame.

6. The method according to claim 4, wherein
the request frame is further used to request the second apparatus that does not have a capability of generating the first field to perform channel estimation based on a field different from the secure LTF field or the secure TRN field; and
the response frame is further used to respond to the request frame.

7. The method according to claim 5, wherein the method further comprises:
receiving, by the first apparatus, a second frame that carries a second field; and
performing, by the first apparatus, channel estimation based on the received second field and the second field, to obtain second CSI.

8. The method according to any one of claims 1 to 7, wherein the method further comprises:
parsing, by the first apparatus, the CSI based on the second field and the first field, to obtain first CSI.

9. An information feedback method, wherein the method comprises:
sending, by a first apparatus to a second apparatus, a first frame that carries a first field used to perform channel estimation; and
receiving, by the first apparatus, a first feedback frame from the second apparatus, and receiving a second feedback frame from the second apparatus, wherein
the first feedback frame comprises channel state information CSI, the CSI is CSI from the first apparatus to the second apparatus, the CSI is obtained by the second apparatus by performing channel estimation based on the received first field and a second field, and the second field is not the first field; and
the second feedback frame comprises encrypted third CSI, and third CSI is CSI from a third apparatus to the second apparatus.

10. The method according to claim 9, wherein
the encrypted third CSI is obtained by the second apparatus by encrypting the third CSI based on the second field generated based on a security parameter of the second field.

11. The method according to claim 9 or 10, wherein before the sending, by a first apparatus to a second apparatus, a first frame that carries a first field used to perform channel estimation, the method further comprises:
sending, by the first apparatus, a request frame to the second apparatus, wherein the request frame is used to request the second apparatus to measure the third channel state information CSI from the third apparatus to the second apparatus, and encrypt the third CSI and feed back the encrypted third CSI to the first apparatus; and
receiving, by the first apparatus, a response frame from the second apparatus, wherein the response frame is used to respond to the request frame.

12. The method according to any one of claims 9 to 11, wherein the method further comprises:
receiving, by the first apparatus, a second frame that carries a second field;
performing, by the first apparatus, channel estimation based on the received second field and the second field, to obtain second CSI;
receiving, by the first apparatus, a third feedback frame from the second apparatus, wherein the third feedback frame comprises CSI obtained by the third apparatus by performing channel estimation on a channel between the second apparatus and the third apparatus based on the received second field and a preset long training LTF field or a preset training TRN field; and
parsing, by the first apparatus, the CSI in the third feedback frame based on the second field and the preset LTF field or the preset TRN field, to obtain fourth CSI.

13. The method according to any one of claims 9 to 11, wherein the method further comprises:
receiving, by the first apparatus, a second frame that carries a second field;
performing, by the first apparatus, channel estimation based on the received second field and the second field, to obtain second CSI;
receiving, by the first apparatus, a third feedback frame from the second apparatus, wherein the third feedback frame comprises encrypted fourth CSI, the encrypted fourth CSI is obtained by the second apparatus by encrypting fourth CSI based on the security parameter of the second field, the fourth CSI is obtained by the second apparatus by parsing a fourth feedback frame fed back by the third apparatus, and the fourth feedback frame comprises CSI information obtained by the third apparatus by performing channel estimation based on the received second field and a field generated based on a parameter different from the security parameter of the second field; and
parsing, by the first apparatus, the third feedback frame based on the security parameter of the second field, to obtain the fourth CSI.

14. An information feedback method, wherein the method comprises:
receiving, by a second apparatus, a first frame that carries a first field used to perform channel estimation; and
sending, by the second apparatus, a first feedback frame to a first apparatus, wherein
the first feedback frame comprises channel state information CSI, the CSI is CSI from the first apparatus to the second apparatus, the CSI is obtained by the second apparatus by performing channel estimation based on the received first field and a second field, and the second field is not the first field.

15. The method according to claim 14, wherein the first field is a secure long training LTF field, or the first field is a secure training TRN field.

16. The method according to claim 14 or 15, wherein before the receiving, by a second apparatus, a first frame that carries a first field used to perform channel estimation, the method further comprises:
receiving, by the second apparatus, a request frame from the first apparatus, wherein the request frame is used to request to perform channel estimation based on a field different from the secure LTF field or the secure TRN field; and
sending, by the second apparatus, a response frame to the first apparatus, wherein the response frame is used to respond to the request frame.

17. The method according to claim 16, wherein
the request frame is further used to request not to exchange a security parameter of the first field, and the second field is a preset LTF field or a preset TRN field; and
the response frame is further used to respond to the request frame.

18. The method according to claim 16, wherein
the request frame further comprises a security parameter of the second field, and the security parameter of the second field is used to generate the second field; and
the response frame is further used to respond to the request frame.

19. The method according to claim 15, wherein
the request frame is further used to request the second apparatus that does not have a capability of generating the first field to perform channel estimation based on a field different from the secure LTF field or the secure TRN field; and
the response frame is further used to respond to the request frame.

20. An information feedback method, wherein the method comprises:
receiving, by a second apparatus, a first frame that carries a first field used to perform channel estimation; and
sending, by the second apparatus, a first feedback frame to a first apparatus, and sending a second feedback frame to the first apparatus, wherein
the first feedback frame comprises channel state information CSI, the CSI is CSI from the first apparatus to the second apparatus, the CSI is obtained by the second apparatus by performing channel estimation based on the received first field and a second field, and the second field is not the first field; and
the second feedback frame comprises encrypted third CSI, and third CSI is CSI from a third apparatus to the second apparatus.

21. The method according to claim 20, wherein
the encrypted third CSI is obtained by the second apparatus by encrypting the third CSI based on the second field generated based on a security parameter of the second field.

22. The method according to claim 20 or 21, wherein before the receiving, by a second apparatus, a first frame that carries a first field used to perform channel estimation, the method further comprises:
receiving, by the second apparatus, a request frame from the first apparatus, wherein the request frame is used to request the second apparatus to measure the third channel state information CSI between the third apparatus and the second apparatus, and encrypt the third CSI and feed back the encrypted third CSI to the first apparatus; and
sending, by the second apparatus, a response frame to the first apparatus, wherein the response frame is used to respond to the request frame.

23. The method according to any one of claims 20 to 22, wherein the method further comprises:
sending, by the second apparatus to the first apparatus and the third apparatus, a second frame that carries a second field;
receiving, by the second apparatus, a third feedback frame from the third apparatus; and
sending, by the second apparatus, the third feedback frame to the first apparatus, wherein
the third feedback frame comprises CSI obtained by the third apparatus by performing channel estimation on a channel between the second apparatus and the third apparatus based on the received second field and a preset long training LTF field or a preset training TRN field.

24. The method according to any one of claims 20 to 22, wherein the method further comprises:
sending, by the second apparatus to the first apparatus and the third apparatus, a second frame that carries a second field;
receiving, by the second apparatus, a fourth feedback frame from the third apparatus, wherein the fourth feedback frame comprises CSI information obtained by the third apparatus by performing channel estimation based on the received second field and a field generated based on a parameter different from the security parameter of the second field;
parsing, by the second apparatus, the fourth feedback frame based on the second field and the field generated based on the parameter different from the security parameter of the second field, to obtain fourth CSI;
encrypting, by the second apparatus, the fourth CSI based on the security parameter of the second field, to obtain a third feedback frame; and
sending, by the second apparatus, the third feedback frame to the first apparatus.

25. A communication apparatus, wherein the communication apparatus comprises:
a communication unit, configured to send, to a second apparatus, a first frame that carries a first field used to perform channel estimation, wherein
the communication unit is further configured to receive a first feedback frame from the second apparatus, wherein
the first feedback frame comprises channel state information CSI, the CSI is CSI from the apparatus to the second apparatus, the CSI is obtained by the second apparatus by performing channel estimation based on the received first field and a second field, and the second field is not the first field.

26. The apparatus according to claim 25, wherein the first field is a secure long training LTF field, or the first field is a secure training TRN field.

27. The apparatus according to claim 25 or 26, wherein before the communication unit sends, to the second apparatus, the first frame that carries the first field used to perform channel estimation, the communication unit is further configured to:
send a request frame to the second apparatus, wherein the request frame is used to request to perform channel estimation based on a field different from the secure LTF field or the secure TRN field; and
receive a response frame from the second apparatus, wherein the response frame is used to respond to the request frame.

28. The apparatus according to claim 27, wherein
the request frame is further used to request not to exchange a security parameter of the first field, and the second field is a preset LTF field or a preset TRN field; and
the response frame is further used to respond to the request frame.

29. The apparatus according to claim 27, wherein
the request frame further comprises a security parameter of the second field, and the security parameter of the second field is used to generate the second field; and
the response frame is further used to respond to the request frame.

30. The apparatus according to claim 28, wherein
the request frame is further used to request the second apparatus that does not have a capability of generating the first field to perform channel estimation based on a field different from the secure LTF field or the secure TRN field; and
the response frame is further used to respond to the request frame.

31. The apparatus according to claim 29, wherein the apparatus further comprises a processing unit, and the processing unit is configured to:
receive a second frame that carries a second field; and
perform channel estimation based on the received second field and the second field, to obtain second CSI.

32. The apparatus according to any one of claims 25 to 31, wherein the processing unit is further configured to:
parse the CSI based on the second field and the first field, to obtain first CSI.

33. A communication apparatus, wherein the communication apparatus comprises:
a communication unit, configured to send, to a second apparatus, a first frame that carries a first field used to perform channel estimation, wherein
the communication unit is further configured to: receive a first feedback frame from the second apparatus, and receive a second feedback frame from the second apparatus, wherein
the first feedback frame comprises channel state information CSI, the CSI is CSI from the apparatus to the second apparatus, the CSI is obtained by the second apparatus by performing channel estimation based on the received first field and a second field, and the second field is not the first field; and
the second feedback frame comprises encrypted third CSI, and third CSI is CSI from a third apparatus to the second apparatus.

34. The apparatus according to claim 33, wherein
the encrypted third CSI is obtained by the second apparatus by encrypting the third CSI based on the second field generated based on a security parameter of the second field.

35. The apparatus according to claim 33 or 34, wherein before the communication unit sends, to the second apparatus, the first frame that carries the first field used to perform channel estimation, the communication unit is further configured to:
send a request frame to the second apparatus, wherein the request frame is used to request the second apparatus to measure the third channel state information CSI from the third apparatus to the second apparatus, and encrypt the third CSI and feed back the encrypted third CSI to the first apparatus; and
receive a response frame from the second apparatus, wherein the response frame is used to respond to the request frame.

36. The apparatus according to any one of claims 33 to 35, wherein the apparatus further comprises a processing unit, and the processing unit is configured to:
receive a second frame that carries a second field;
perform channel estimation based on the received second field and the second field, to obtain second CSI;
receive a third feedback frame from the second apparatus, wherein the third feedback frame comprises CSI obtained by the third apparatus by performing channel estimation on a channel between the second apparatus and the third apparatus based on the received second field and a preset long training LTF field or a preset training TRN field; and
parse the CSI in the third feedback frame based on the second field and the preset LTF field or the preset TRN field, to obtain fourth CSI.

37. The apparatus according to any one of claims 33 to 35, wherein the processing unit is further configured to:
receive a second frame that carries a second field;
perform channel estimation based on the received second field and the second field, to obtain second CSI;
receive a third feedback frame from the second apparatus, wherein the third feedback frame comprises encrypted fourth CSI, the encrypted fourth CSI is obtained by the second apparatus by encrypting fourth CSI based on the security parameter of the second field, the fourth CSI is obtained by the second apparatus by parsing a fourth feedback frame fed back by the third apparatus, and the fourth feedback frame comprises CSI information obtained by the third apparatus by performing channel estimation based on the received second field and a field generated based on a parameter different from the security parameter of the second field; and
parse the third feedback frame based on the security parameter of the second field, to obtain the fourth CSI.

38. A communication apparatus, wherein the communication apparatus comprises:
a communication unit, configured to receive a first frame that carries a first field used to perform channel estimation, wherein
the communication unit is further configured to send a first feedback frame to a first apparatus, wherein
the first feedback frame comprises channel state information CSI, the CSI is CSI from the first apparatus to the apparatus, the CSI is obtained by the apparatus by performing channel estimation based on the received first field and a second field, and the second field is not the first field.

39. The apparatus according to claim 38, wherein the first field is a secure long training LTF field, or the first field is a secure training TRN field.

40. The apparatus according to claim 38 or 39, wherein before the communication unit receives the first frame that carries the first field used to perform channel estimation, the communication unit is further configured to:
receive a request frame from the first apparatus, wherein the request frame is used to request to perform channel estimation based on a field different from the secure LTF field or the secure TRN field; and
send a response frame to the first apparatus, wherein the response frame is used to respond to the request frame.

41. The apparatus according to claim 40, wherein
the request frame is further used to request not to exchange a security parameter of the first field, and the second field is a preset LTF field or a preset TRN field; and
the response frame is further used to respond to the request frame.

42. The apparatus according to claim 40, wherein
the request frame further comprises a security parameter of the second field, and the security parameter of the second field is used to generate the second field; and
the response frame is further used to respond to the request frame.

43. The apparatus according to claim 39, wherein
the request frame is further used to request the second apparatus that does not have a capability of generating the first field to perform channel estimation based on a field different from the secure LTF field or the secure TRN field; and
the response frame is further used to respond to the request frame.

44. A communication apparatus, wherein the communication apparatus comprises:
a communication unit, configured to receive a first frame that carries a first field used to perform channel estimation, wherein
the communication unit is further configured to: send a first feedback frame to a first apparatus, and send a second feedback frame to the first apparatus, wherein
the first feedback frame comprises channel state information CSI, the CSI is CSI from the first apparatus to the apparatus, the CSI is obtained by the apparatus by performing channel estimation based on the received first field and a second field, and the second field is not the first field; and
the second feedback frame comprises encrypted third CSI, and third CSI is CSI from a third apparatus to the apparatus.

45. The apparatus according to claim 44, wherein
the encrypted third CSI is obtained by the apparatus by encrypting the third CSI based on the second field generated based on a security parameter of the second field.

46. The apparatus according to claim 44 or 45, wherein before the communication unit receives the first frame that carries the first field used to perform channel estimation, the communication unit is further configured to:
receive a request frame from the first apparatus, wherein the request frame is used to request the apparatus to measure third channel state information CSI between the third apparatus and the apparatus, and encrypt the third CSI and feed back the encrypted third CSI to the first apparatus; and
send a response frame to the first apparatus, wherein the response frame is used to respond to the request frame.

47. The apparatus according to any one of claims 44 to 46, wherein the communication unit is further configured to:
send, to the first apparatus and the third apparatus, a second frame that carries a second field;
receive a third feedback frame from the third apparatus; and
send the third feedback frame to the first apparatus, wherein
the third feedback frame comprises CSI obtained by the third apparatus by performing channel estimation on a channel between the apparatus and the third apparatus based on the received second field and a preset long training LTF field or a preset training TRN field.

48. The apparatus according to any one of claims 44 to 46, wherein the apparatus further comprises a processing unit, and the processing unit is configured to:
send, to the first apparatus and the third apparatus, a second frame that carries a second field;
receive a fourth feedback frame from the third apparatus, wherein the fourth feedback frame comprises CSI information obtained by the third apparatus by performing channel estimation based on the received second field and a field generated based on a parameter different from the security parameter of the second field;
parse the fourth feedback frame based on the second field and the field generated based on the parameter different from the security parameter of the second field, to obtain fourth CSI;
encrypt the fourth CSI based on the security parameter of the second field, to obtain a third feedback frame; and
send the third feedback frame to the first apparatus.

49. A communication apparatus, comprising a processor and a transceiver, wherein the transceiver is configured to communicate with another communication apparatus; and the processor is configured to run a program, so that the communication apparatus implements the method according to any one of claims 1 to 8, or the communication apparatus implements the method according to any one of claims 9 to 13, or the communication apparatus implements the method according to any one of claims 14 to 19, or the communication apparatus implements the method according to any one of claims 20 to 24.

50. A computer-readable storage medium, wherein the computer-readable storage medium stores instructions, and when the instructions are run on a computer, the method according to any one of claims 1 to 8 is performed, or the method according to any one of claims 9 to 13 is performed, or the method according to any one of claims 14 to 19 is performed, or the method according to any one of claims 20 to 24 is performed.

51. A computer program product comprising instructions, when the computer program product is run on a computer, the method according to any one of claims 1 to 8 is performed, or the method according to any one of claims 9 to 13 is performed, or the method according to any one of claims 14 to 19 is performed, or the method according to any one of claims 20 to 24 is performed.
